(19) Europäisches Patentamt
European Patent Office
Office européen des brevets

(11) EP 4 753 271 A1

(12) **EUROPEAN PATENT APPLICATION**
published in accordance with Art. 153(4) EPC

(43) Date of publication:
**03.06.2026 Bulletin 2026/23**

(21) Application number: **24881191.1**

(22) Date of filing: **12.08.2024**

(51) International Patent Classification (IPC):
***H04N 21/472*** *(2011.01)* ***H04N 21/81*** *(2011.01)*
***H04N 21/44*** *(2011.01)*

(52) Cooperative Patent Classification (CPC):
**H04N 21/44; H04N 21/472; H04N 21/81**

(86) International application number:
**PCT/CN2024/111568**

(87) International publication number:
**WO 2025/086822 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 CN 202311418278**
**29.12.2023 CN 202311867611**

(71) Applicant: **Honor Device Co., Ltd.**
**Shenzhen, Guangdong 518040 (CN)**

(72) Inventors:
- **LUO, Lan**
  **Shenzhen, Guangdong 518040 (CN)**
- **YI, Jie**
  **Shenzhen, Guangdong 518040 (CN)**
- **WANG, Di**
  **Shenzhen, Guangdong 518040 (CN)**

(74) Representative: **Isarpatent**
**Patent- und Rechtsanwälte Part G mbB**
**Friedrichstrasse 31**
**80801 München (DE)**

(54) **MEDIA RESOURCE EDITING METHOD, ELECTRONIC DEVICE, AND STORAGE MEDIUM**

(57) This application relates to the field of terminal technologies, and in particular, to a media resource editing method, an electronic device, and a storage medium. This method may be applied to the electronic device such as a mobile phone or a tablet computer. In this method, after a voice assistant is woken up, in response to a first dialog input, the electronic device displays a dialog box, and displays a first answer in the dialog box. Then, the electronic device displays a second answer in the dialog box in response to a second dialog input. Next, the electronic device displays a third answer in the dialog box in response to a third dialog input. In this method, when a quantity of media materials is large, for example, the quantity of media materials is greater than a first quantity threshold, the electronic device may replace a media material, for example, replace a media material in the second answer, in response to a dialog indicating to add a media material. In this way, the electronic device can flexibly adjust the media material.

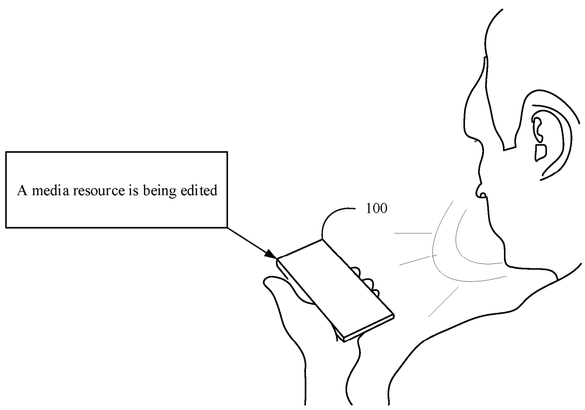

FIG. 1

EP 4 753 271 A1

## Description

This application claims priority to Chinese Patent Application No. 202311418278.6, filed with the China National Intellectual Property Administration on October 27, 2023 and entitled "LARGE MODEL-BASED VIDEO PRODUCTION METHOD AND ELECTRONIC DEVICE", and claims priority to Chinese Patent Application No. 202311867611.1, filed with the China National Intellectual Property Administration on December 29, 2023 and entitled "MEDIA RESOURCE EDITING METHOD, ELECTRONIC DEVICE, AND STORAGE MEDIUM", both of which are incorporated herein by reference in their entireties.

## TECHNICAL FIELD

This application relates to the field of terminal technologies, and in particular, to a media resource editing method, an electronic device, and a storage medium.

## BACKGROUND

Most electronic devices such as a mobile phone and a tablet computer are configured with a camera, to meet a requirement of recording and sharing life by a user anytime and anywhere. The electronic device may generate a media resource based on a photo, a video, or the like photographed by the user, and support the user to edit the media resource on the electronic device, to further improve photographing and creation experience of the user.

Currently, the electronic device may generate the media resource based on a media material. In a process in which the electronic device edits the media resource, the electronic device adjusts the media material in a fixed manner, and cannot flexibly adjust the media material.

## SUMMARY

Embodiments of this application provide a media resource editing method, an electronic device, and a storage medium, to flexibly adjust a media material in a media resource editing process.

To achieve the foregoing objective, the following technical solutions are used in embodiments of this application.

According to a first aspect, an embodiment of this application provides a media resource editing method. The method may be applied to an electronic device such as a mobile phone or a tablet computer, and the electronic device includes a voice assistant. The method includes: The electronic device displays a dialog box in response to a first dialog input when the voice assistant is woken up. The first dialog input indicates to generate a media resource, the dialog box includes a first answer, the first answer includes a first quantity of media materials, and the first quantity is less than a first quantity threshold. Next, the electronic device displays a second answer in the dialog box in response to a second dialog input. The second answer includes a second quantity of media materials. The second quantity is greater than or equal to the first quantity threshold, and the second dialog input indicates to add the media materials. Then, the electronic device displays a third answer in the dialog box in response to a third dialog input. The third answer includes a second quantity of media materials, and the third dialog input indicates to add the media materials. The second quantity of media materials in the third answer are different from at least one of the second quantity of media materials in the second answer.

That the electronic device includes the voice assistant may be understood as that the electronic device is installed with a voice assistant application, or the electronic device has a voice assistant function.

In this method, when a quantity of media materials is large, for example, the quantity of media materials is greater than the first quantity threshold, the electronic device may replace a media material, for example, replace a media material in the second answer, in response to a dialog indicating to add a media material. Therefore, the electronic device may flexibly adjust the media materials, for example, the quantity of media materials.

In a possible design of the first aspect, after the third answer is displayed in the dialog box, the method further includes: The electronic device displays a fourth answer in the dialog box in response to a fourth dialog input. The fourth answer includes a third quantity of media materials, the third quantity is less than or equal to a second quantity threshold, the second quantity threshold is less than the first quantity threshold, and the fourth dialog input indicates to reduce the media materials. Then, the electronic device displays a fifth answer in the dialog box in response to the fourth dialog input. The fifth answer includes a fourth quantity of media material, the fourth quantity is less than the third quantity, and the fourth dialog input indicates to reduce a media material. A difference between the third quantity and the fourth quantity is less than a difference between the second quantity and the third quantity.

It may be understood that quality of the subsequently generated media resource deteriorates if the quantity of media materials is too small. Therefore, after the quantity of media materials is small, for example, is less than the second quantity threshold, the electronic device reduces a quantity of to-be-reduced media materials. In this way, the quality of the subsequently generated media resource can be improved.

In another possible design of the first aspect, after the third answer is displayed in the dialog box, the method further includes: After a quantity of media materials is reduced to a fifth quantity, in response to a fifth dialog input, the electronic device prompts, in the dialog box, that the media materials cannot be further reduced. The fifth quantity is less than or equal to a third quantity threshold.

In this design, if the quantity of media materials is small, the quality of the subsequently generated media resources is affected. Therefore, after the quantity of media materials is reduced to the fifth quantity, the electronic device may prompt, in the dialog box, that the quantity of media materials cannot be reduced any more. In this way, the electronic device may improve the quality of the subsequently generated media resource, and may improve use experience of the user.

In another possible design of the first aspect, when the second dialog input indicates to add a specified quantity of media materials, a difference between the second quantity and the first quantity is the specified quantity; or when the second dialog input does not indicate to add a specified quantity of media materials, a difference between the second quantity and the first quantity is positively correlated with the first quantity.

In this design, if a dialog input does not indicate to add a specified quantity of media materials, that is, the dialog input is a voice instruction with fuzzy semantics, the electronic device may determine, based on a current quantity of media materials, such as the first quantity, existing when the second dialog input is received, a quantity of media materials added based on the dialog input. That is, the difference between the second quantity and the first quantity is positively correlated with the first quantity. Therefore, when the dialog input is a voice instruction with fuzzy semantics, the electronic device may flexibly adjust the media materials, to improve user experience.

In another possible design of the first aspect, the second dialog input includes quantity degree indication information, and a higher degree indicated by the quantity degree indication information indicates a larger difference between the second quantity and the first quantity.

In this design, the electronic device may determine, based on the quantity degree indication information included in the second dialog input, the quantity of media materials added based on the second dialog input. That is, the difference between the second quantity and the first quantity is positively correlated with the degree indicated by the quantity degree indication information included in the second dialog input. Therefore, the electronic device may also flexibly adjust the media materials when the dialog input includes the quantity degree indication information.

In another possible design of the first aspect, when the fourth dialog input does not indicate to reduce the specified quantity of media materials, the difference between the second quantity and the third quantity is positively correlated with a quantity of media materials existing when the fourth dialog input is received.

In this design, if a dialog input does not indicate to reduce a specified quantity of media materials, that is, the dialog input is a voice instruction with fuzzy semantics, the electronic device may determine, based on a current quantity of media materials, such as the second quantity, existing when the fourth dialog input is received, a quantity of media materials reduced based on the dialog input. That is, the difference between the second quantity and the third quantity is positively correlated with the quantity of media materials existing when the fourth dialog input is received. Therefore, when the dialog input is a voice instruction with fuzzy semantics, the electronic device may flexibly adjust the media materials, to improve user experience.

In another possible design of the first aspect, the dialog box further includes a first control, and after the third answer is displayed in the dialog box, the method further includes: The electronic device displays a first interface in response to a trigger operation performed on the first control. The first interface includes a media material in a selected state and a media material in an unselected state. The media material in the selected state is a media material included in the third answer, and the media material in the unselected state is a media material that is included in the third answer and that is not included in the second answer.

In this design, the electronic device displays the first interface, so that the user can intuitively observe, in the first interface, a media material replaced by the electronic device in response to the third dialog input.

In another possible design of the first aspect, after the third answer is displayed in the dialog box, the method further includes: The electronic device displays a sixth answer in the dialog box in response to a sixth dialog input. The sixth answer includes a first media resource, the first media resource includes a media material included in the third answer, and the sixth dialog input indicates to generate a media resource based on the media material included in the third answer.

In this design, after the sixth answer is displayed, the electronic device may further generate a media resource in response to a dialog input.

In another possible design of the first aspect, after the sixth answer is displayed in the dialog box, the method further includes: The electronic device displays a seventh answer in the dialog box in response to a seventh dialog input. The seventh answer includes a media editing control. When the seventh dialog input indicates specified editing content, a menu option corresponding to the specified editing content in the media editing control is in an unfolded state in the electronic device; or when the seventh dialog input does not indicate specified editing content, a menu option in the media editing control is in a folded state in the electronic device. The specified editing content includes one or more of Change template, Change background music, and Change duration, Change template corresponds to a first menu option, Change background music corresponds to a second menu option, and Change duration corresponds to a third menu option.

In this design, the electronic device may edit the media resource by displaying the media editing control. In this way, the electronic device can flexibly edit the media resource.

In another possible design of the first aspect, the method further includes: displaying a guide bubble in the dialog box in response to the seventh dialog input. The guide bubble is used to prompt a user to send a voice instruction.

In this design, the electronic device may prompt, by using a guide bubble, the user to send a voice instruction, and prompt the user to edit a media resource.

In another possible design of the first aspect, after the third answer is displayed in the dialog box, the method further includes: The electronic device displays an eighth answer in the dialog box in response to an eighth dialog input. The eighth answer includes a second media resource, and the second media resource includes a media material the same as the first media resource. When the eighth dialog input indicates specified duration, a duration difference between the second media resource and the first media resource is the specified duration; or when the eighth object input does not indicate specified duration, a duration difference between the second media resource and the first media resource falls within a first range.

In this design, when duration of a media resource is adjusted based on a dialog input, the electronic device may adjust the duration of the media resource to different degrees based on whether the dialog input has exact semantics or fuzzy semantics. That is, when the eighth dialog input indicates the specified duration, the duration difference between the second media resource and the first media resource is the specified duration; or when the eighth object input does not indicate the specified duration, the duration difference between the second media resource and the first media resource falls within the first range. In this way, the electronic device may flexibly adjust the duration of the media resource, to improve user experience.

According to a second aspect, an electronic device is provided. The electronic device includes a memory and one or more processors. The memory is coupled to the processor. The memory stores computer program code, and the computer program code includes computer instructions. When the computer instructions are executed by the processor, the electronic device is enabled to perform the method provided in any one of the first aspect and the possible designs of the first aspect.

According to a third aspect, a computer-readable storage medium is provided, including computer instructions. When the computer instructions run on an electronic device, the electronic device is enabled to perform the method provided in any one of the first aspect and the possible designs of the first aspect.

According to a fourth aspect, a computer program product including instructions is provided. When the computer program product runs on an electronic device, the electronic device can execute the method provided in any one of the first aspect and the possible designs of the first aspect.

For technical effect brought by any design manner of the second aspect to the fourth aspect, refer to technical effect brought by different design manners of the first aspect. Details are not described herein again.

## BRIEF DESCRIPTION OF DRAWINGS

FIG. 1 is a schematic diagram of a use scenario according to an embodiment of this application;

FIG. 2 is a schematic diagram of a hardware structure of an electronic device according to an embodiment of this application;

FIG. 3 is a schematic diagram of a software architecture of an electronic device according to an embodiment of this application;

FIG. 4 is a schematic flowchart of a media resource editing method according to an embodiment of this application;

FIG. 5A to FIG. 5F are a schematic diagram of a group of interfaces according to an embodiment of this application;

FIG. 6A to FIG. 6G are a schematic diagram of another group of interfaces according to an embodiment of this application;

FIG. 7A and FIG. 7B are a schematic diagram of another group of interfaces according to an embodiment of this application;

FIG. 8A to FIG. 8E are a schematic diagram of another group of interfaces according to an embodiment of this application;

FIG. 9A to FIG. 9F are a schematic diagram of another group of interfaces according to an embodiment of this application;

FIG. 10A to FIG. 10C are a schematic diagram of another group of interfaces according to an embodiment of this application;

FIG. 11A to FIG. 11J are a schematic diagram of another group of interfaces according to an embodiment of this application;

FIG. 12A to FIG. 12D are a schematic diagram of another group of interfaces according to an embodiment of this application;

FIG. 13A to FIG. 13E are a schematic diagram of another group of interfaces according to an embodiment of this application;

FIG. 14A to FIG. 14E are a schematic diagram of another group of interfaces according to an embodiment of this application; and

FIG. 15 is a schematic diagram of a hardware structure of another electronic device according to an embodiment of this application.

## DESCRIPTION OF EMBODIMENTS

The following describes the technical solutions in embodiments of this application with reference to the accompanying drawings in embodiments of this application. In descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural. In addition, in the descriptions of embodiments of this application, "a plurality of" means two or more than two unless otherwise specified. The expression "at least one of the following items (pieces)" or a similar expression thereof indicates any combination of these items, including a single item (piece) or any combination of a plurality of items (pieces). For example, at least one of a, b, or c may represent: a, b, c, a-b, a-c, b-c, or a-b-c, where a, b, and c may be single or plural. In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example", "for example", or the like is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

In the technical solutions disclosed in this application, processing such as collection, storage, use, processing, transmission, provision, and disclosure of personal information of a user is in compliance with provisions of related laws and regulations, and does not violate public order or good customs.

With development of terminal technologies, a user uses an electronic device more frequently. Most electronic devices such as a mobile phone and a tablet computer are configured with a camera, and the electronic device may photograph a photo, a video, or the like based on the camera, to meet a requirement of recording and sharing life by the user anytime and anywhere. The electronic device may generate a media resource based on a photo, a video, or the like photographed by the user, and the electronic device may edit the media resource, to further improve photographing and creation experience of the user. For example, the electronic device may change background music used by the media resource, adjust duration of the media resource, change a template used by the media resource, and adjust a quantity of media materials that form the media resource.

Currently, the user can edit the media resource on the electronic device only by performing cumbersome operations. Consequently, the user cannot edit the media resource conveniently or fast.

In view of this, an embodiment of this application provides a media resource editing method. In this method, an electronic device may edit a media resource based on a voice instruction of a user. In this way, convenience of editing the media resource by the electronic device can be improved, so that the user can edit the media resource conveniently and quickly, and user experience can be improved.

It should be noted that the media resource may include a video or an image. In this embodiment of this application, the media resource (for example, the video or the image) edited by the electronic device is not limited. In a subsequent embodiment, an example in which a type of the edited media resource is the video is used for description. A media material may be understood as a photo or a video that forms the media resource.

For example, if a video D is obtained by editing a photo A, a photo B, and a video C, the photo A, the photo B, and the video C are all media materials, and the video D is a media resource. For another example, if a video F is obtained by editing a photo E, the photo E is a media material, and the video F is a media resource.

For example, as shown in FIG. 1, the technical solution provided in this embodiment of this application may be applied to a process in which the user edits the media resource by using an electronic device 100, and specifically applied to a process in which the user generates the media resource by using a voice assistant function of the electronic device, and edits the media resource. The voice assistant function of the electronic device may be implemented by using a technology such as voice recognition. For the voice assistant function of the electronic device, refer to the following descriptions. Details are not described herein again.

The electronic device 100 may also be referred to as a terminal (terminal), a terminal device, user equipment (user equipment, UE), a mobile station (mobile station, MS), a mobile terminal (mobile terminal, MT), or the like. The electronic device 100 may be an electronic device with a display, for example, a mobile phone, a tablet computer, a wearable device, a smart screen, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA); or may be a vehicle-mounted device with a display, for example, a vehicle-mounted computer or a vehicle-mounted computer; or may be an internet of things device with a display, for example, some smartwatches or smartbands. This embodiment of this application sets no limitation on a product form of the electronic device.

The following describes a hardware structure and a software architecture of the electronic device provided in embodiments of this application.

FIG. 2 is a schematic diagram of a hardware structure of an electronic device 100. The electronic device 100 may include a processor 110, an external memory interface 120, an internal memory 121, a universal serial bus (universal serial bus, USB) interface 130, an antenna 1, an antenna 2, a mobile communication module 150, a wireless communication module 160, a display 194, an audio module 170, a subscriber identification module (subscriber identification module, SIM) card interface 195, and the like. A sensor module 180 may include a pressure sensor 180A, a touch sensor 180K, and the like. The audio module 170 may include a speaker 170A, a receiver 170B, a microphone 170C, a headset jack 170D, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

The MIPI interface may be configured to connect the processor 110 and a peripheral component such as the display 194 or a camera 193. The MIPI interface includes a camera serial interface (camera serial interface, CSI), a display serial interface (display serial interface, DSI), and the like. In some embodiments, the processor 110 and the camera 193 communicate with each other through the CSI interface, to implement a photographing function of the electronic device 100. The processor 110 communicates with the display 194 through the DSI interface, to implement a display function of the electronic device 100.

It may be understood that an interface connection relationship between modules shown in this embodiment of this application is merely schematically described, and does not constitute a structural limitation on the electronic device 100. In some other embodiments of this application, the electronic device 100 may also use different interface connection manners in the foregoing embodiment or a combination of a plurality of interface connection manners.

The USB interface 130 is an interface that conforms to a USB standard, and may be specifically a Mini USB interface, a Micro USB interface, a USB Type C interface, or the like. The USB interface 130 may be configured to be connected to a charger to charge the electronic device 100, or may be configured to transmit data between the electronic device 100 and a peripheral device, or may be configured to be connected to a headset, to play audio by using the headset. The interface may be further configured to be connected to another electronic device, for example, an AR device.

The electronic device 100 may implement a display function through the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs, and the GPU executes program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N displays 194. N is a positive integer greater than 1.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A.

In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation strength is greater than or equal to a first pressure threshold is performed on the Messaging application icon, an instruction for creating a new SMS message is executed.

The touch sensor 180K is also referred to as a touch panel. The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor, to determine a touch event type. A visual output related to the touch operation may be provided on the display 194. In some other embodiments, the touch sensor 180K may also be disposed on a surface of the electronic device 100 at a location different from that of the display 194.

The external memory interface 120 may be configured to be connected to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to execute various function applications and data processing of the electronic device 100. The internal memory 121 may include a program storage area and a data storage area. The program storage area may store an operating system, an application required by at least one function (for example, a voice playing function or an image playing function), and the like. The data storage area may store data (for example, audio data or an address book) created in a process of using the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, reduce noise, identify a sound source, implement a directional recording function, and the like.

The headset jack 170D is configured to be connected to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

For example, the electronic device 100 may obtain a wake-up word by using the microphone 170C, and the electronic device 100 starts a voice assistant function in response to obtaining the wake-up word.

The voice assistant function of the electronic device may be understood as follows: The electronic device 100 collects a user voice by using the microphone, parses and recognizes the user voice, and executes an instruction corresponding to the user voice, so that the user controls the terminal device 100 by using the voice.

In different devices, a voice control function may have different names, for example, "Voice control", "Smart voice", "Voice assistant", "See and Speak", "Voice instruction", "Arbitrary instruction", and "Smart AI". Specific implementations of voice control functions with different names may be different.

In some embodiments, the antenna 1 and the mobile communication module 150 in the electronic device 100 are coupled, and the antenna 2 and the wireless communication module 160 are coupled, so that the electronic device 100 can communicate with another device by using a wireless communication technology or a network.

For example, the electronic device 100 may obtain, by using the antenna 1 and the mobile communication module 150, or by using the antenna 2 and the wireless communication module 160, a media resource generated by the another device, and edit the media resource on the electronic device 100.

The following describes a software architecture of the electronic device 100. A layered architecture, an event-driven architecture, a microkernel architecture, a microservice architecture, or a cloud architecture may be used for a software system of the electronic device 100. In this embodiment of this application, an Android system with a layered architecture is used as an example to describe a software structure of the electronic device 100.

FIG. 3 is a schematic diagram of a software structure of an electronic device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer.

The application layer may include a series of application packages.

As shown in FIG. 3, the application packages may include applications such as Camera, Gallery, Calendar, Phone, Maps, Navigation, Bluetooth, Music, Video, and Messaging. Gallery is configured to provide functions such as viewing photos and videos, and searching for photos and videos.

The application layer further includes a voice assistant application, and the voice assistant application is configured to provide a voice assistant function of the electronic device 100.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables the application to display notification information in the status bar, may be configured to convey a notification-type message, and may automatically disappear after a short pause without a need to interact with the user. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, a prompt tone is produced, an electronic device vibrates, or an indicator blinks.

The Android runtime includes a kernel library and a virtual machine. The Android runtime is responsible for scheduling and managing an Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an interface display method provided in embodiments of this application by using an example in which an electronic device is a mobile phone, and the mobile phone has the hardware structure shown in FIG. 2 and the software architecture shown in FIG. 3.

For example, as shown in FIG. 4, a media resource editing method provided in an embodiment of this application may include steps S400-S401.

S400: A mobile phone obtains a media resource.

In some embodiments, the mobile phone may screen photos and/or videos, to obtain a media material. Then, the mobile phone edits the media material, to obtain a media resource.

In a possible implementation, the mobile phone may screen the photos and/or the videos based on a target condition, to obtain the media material.

The target condition may include one or more of a photographing time condition, a photographing location condition, and a photographing content condition. The photographing time condition includes that a photographing time of a photo and/or a photographing time of a video are/is close to a target time. The photographing location condition includes that a photographing location of a photo and/or a photographing location of a video are/is close to a target location. The photographing content condition includes that photographing content of a photo and/or photographing content of a video include/includes target content, and the target content includes a target person, a target animal, a target action, a target action of a target person, and the like. The photographing content of the photo may be understood as a person, an animal, an action of a person, an action of an animal, and the like that are included in the photo. Similarly, the photographing content of the video may be understood as a person, an animal, an action of a person, an action of an animal, and the like that are included in the video.

Specifically, the mobile phone may perform image recognition on the photo, to obtain the photographing content of the photo, and the mobile phone may perform image recognition on the video, to obtain the photographing content of the video. For a process in which the mobile phone performs image recognition on the photo/video, refer to a related technology. Details are not described herein again in this application. In addition, the photo and/or the video may be locally stored in the mobile phone, or may be stored in another device (for example, a cloud), and may be specifically set based on an actual use requirement.

It may be understood that the target time, the target location, the target content, and the like may be specified by a user or generated by the mobile phone.

In an example, the mobile phone may analyze the photographing location of the photo and/or the video locally stored in the mobile phone, and use, as a target location, a photographing location whose quantity is large, for example, more than 10.

It should be understood that the mobile phone may further generate the target location, the target location, and the target content in another manner. Specifically, a manner in which the mobile phone generates the target location, the target content, and the target time may be designed based on an actual use requirement. This is not limited in this embodiment of this application.

In another example, the mobile phone may obtain, based on a voice instruction of the user and by using a voice assistant function, a target location, target content, a target time, and the like that are specified by the user by using the voice instruction.

In some other embodiments, the mobile phone may also obtain the media resource generated on the another device (for example, the cloud). Alternatively, the mobile phone may obtain the media material from the another device, locally generate the media resource on the mobile phone, and the like. Specifically, a design may be made based on an actual use requirement. This is not limited in this embodiment of this application.

Optionally, in a process in which the mobile phone may screen the photo and/or the video based on the target condition, to obtain the media material, the mobile phone may screen media materials whose quantity falls within a specified quantity range. The media materials whose quantity falls within the specified quantity range may be media materials whose quantity is less than or equal to 30.

In a possible implementation, the mobile phone may edit the media material by adding a filter to the media material, adding background music to the media material, adding a word to the media material, and adding a special effect to the media material. After the mobile phone edits the media material, the mobile phone obtains the media resource. Similarly, a process of editing the media material may be performed by the another device (for example, the cloud). Specifically, a design may be made based on an actual use requirement. This is not limited in this embodiment of this application.

In the following embodiment of this application, the technical solution provided in this embodiment of this application is described in detail by using an example in which the mobile phone locally obtains the media material from the mobile phone based on the voice instruction of the user, and generates the media resource.

Because the mobile phone locally obtains the media material from the mobile phone based on the voice instruction of the user, the voice assistant function of the mobile phone needs to be used. The following first briefly describes the voice assistant function of the mobile phone.

In response to obtaining a wake-up word, the voice assistant function of the mobile phone is woken up, and the mobile phone displays a voice assistant card. After the voice assistant function is woken up, the user may indicate, by using a voice instruction, the mobile phone to perform some functions. In response to obtaining the voice instruction, the mobile phone recognizes and parses the voice instruction, to obtain a recognition result and a parsing result of the voice instruction. Next, the mobile phone displays the recognition result on the voice assistant card, and executes, based on the parsing result, a function indicated by the voice instruction.

For example, as shown in FIG. 5A to FIG. 5F, the mobile phone displays a desktop, and the user enters the wake-up word, for example, "Hello, yoyo" into the mobile phone by using a voice. In response to obtaining the wake-up word, the voice assistant function of the mobile phone is woken up, and the mobile phone displays a voice assistant card 500. Next, the user enters a voice instruction, for example, "How is the weather today" to the mobile phone by using a voice. The mobile phone recognizes the voice instruction, to obtain a recognition result of the voice instruction, for example, "How is the weather today". In addition, the mobile phone parses the recognition result, to obtain a parsing result of the voice instruction, for example, "Query the weather today". Then, the mobile phone executes the parsing result, for example, displays a copy 503 of the weather today on the voice assistant card 520. It should be understood that the mobile phone may further display, on the voice assistant card 510, a recognition result 502 of recognizing the voice instruction. In addition, the mobile phone may further display a prompt 501 on the voice assistant card 510, for example, "Querying the weather today for you". In addition, the voice assistant card may have different display sizes. Specifically, the voice assistant card may be set based on an actual use requirement of the voice assistant card. This is not limited in this embodiment of this application. The voice assistant card 500 may further include a keyboard control, an AI option control, and the like. The keyboard control is used to trigger a text input on the voice assistant card, and the AI option control is used to trigger switching to a recommendation menu on the voice assistant card.

In some embodiments, the voice assistant card may be referred to as a dialog box, and the voice instruction may be referred to as a dialog input. On the voice card, an interface element displayed by the mobile phone in response to the dialog input may be referred to as an answer. It should be understood that, in some implementations, a text input on the voice assistant card by using the keyboard control may also be referred to as a dialog input.

It may be understood that the voice instruction may include a voice instruction with fuzzy semantics or a voice instruction with exact semantics. The voice instruction with exact semantics may be understood as a unique and determined parsing result that can be determined by the mobile phone based on the recognition result. The voice instruction with fuzzy semantics may be understood as a parsing result that cannot be obtained by the mobile phone based on the recognition result; or a plurality of parsing results obtained based on the recognition result.

For example, still as shown in FIG. 5A to FIG. 5F, after the voice assistant function of the mobile phone is woken up, the user enters a voice instruction, for example, "how is the weather" to the mobile phone. The mobile phone recognizes and parses the voice instruction, to learn that the voice instruction is a voice instruction with fuzzy semantics. The mobile phone displays a prompt 504 on the voice assistant card 530, for example, "Which day’s weather would you like to know about?". The prompt 504 is used to prompt the user to enter a voice instruction with exact semantics. Next, the user enters a voice instruction, for example, "How is the weather tomorrow" to the mobile phone. The mobile phone recognizes and parses the voice instruction, to learn that the voice instruction is a voice instruction with exact semantics, and displays a copy 505 of the weather tomorrow on the voice assistant card 540.

It should be noted that in a scenario shown in FIG. 5A to FIG. 5F, a speaker of the mobile phone may further send a corresponding sound when the mobile phone displays the prompt 504, the copy 505 of the weather tomorrow, the prompt 501, and the copy 503 of the weather today. Specifically, a design may be made based on an actual use requirement.

It should be understood that, that the mobile phone implements the voice assistant function in the following embodiment of this application is similar to a process corresponding to FIG. 5A to FIG. 5F. For implementing the voice assistant function by the mobile phone in the following, refer to the descriptions corresponding to FIG. 5A to FIG. 5F. In addition, in the following descriptions, an execution process after the mobile phone responds to the voice instruction is mainly described, and a process in which the user enters the voice instruction into the mobile phone is not described again.

The following describes a process in which the mobile phone locally obtains the media material from the mobile phone based on the voice instruction of the user, and generates the media resource.

It should be understood that the user may indicate one or more of the target location, the target location, and the target content by using the voice instruction. The mobile phone may collect the voice instruction, and obtain, based on the voice instruction, one or more of the target location, the target location, and the target content that may be indicated by the user by using the voice instruction.

For example, after the voice assistant function of the mobile phone is woken up, the mobile phone obtains one or more of the target location, the target time, and the target content from the voice instruction in response to obtaining the voice instruction of the user. Because the voice instruction may include a voice instruction with fuzzy semantics and a voice instruction with exact semantics, processes in which the mobile phone processes the voice instruction with fuzzy semantics and the voice instruction with exact semantics are slightly, and the voice instruction with fuzzy semantics and the voice instruction with exact semantics are separately described based on difference scenarios.

In some scenarios, after the voice assistant function of the mobile phone is woken up, the mobile phone obtains a voice instruction with exact semantics, and the mobile phone obtains the media material based on the voice instruction.

For example, as shown in FIG. 6A to FIG. 6G, in response to obtaining a voice instruction "Generate a video of Jesse", the mobile phone learns, based on the voice instruction through parsing, that target content is "Jesse", and the mobile phone obtains a media material based on the target content, and displays media materials 601 in a grid layout on a voice assistant card 600. It should be understood that the user may perform operations such as adjusting a sequence of the media materials in the grid layout, and viewing a large form of the media materials. In addition, the user may further slide the media materials in the grid layout, to switch to display more media materials. In some other examples, the user may further check and uncheck the media materials 601 in the grid layout.

It should be noted that the grid layout may be a 3*3 grid layout, or may be a grid layout in a form of 4*4, 2*2, or the like. FIG. 6A to FIG. 6G show a grid layout in a form of 3*3. A setting may be performed based on an actual use requirement in actual use. A form of the grid layout is not limited in this application.

In some implementations, when the mobile phone displays the media materials in the grid layout, the mobile phone may further display a first option on the voice assistant card, and the first option is used to generate a media resource based on a media material.

For example, still as shown in FIG. 6A to FIG. 6G, the voice assistant card 600 may include a first option 602. The mobile phone displays a voice assistant card 610 in response to a trigger operation performed on the first option 602. The voice assistant card 610 includes a media resource 611, and the media resource 611 is generated based on a media material in the media materials 601 in the grid layout.

It should be understood that the trigger operation performed on the first option may include: obtaining a voice instruction of "Generate a video", or performing a tap operation on the first option 602. In addition, the media resource 611 may be in a playing state, or may be in a to-be-played state.

In some implementations, the voice assistant card 610 further includes some other controls for the media resource 611, such as a "Like" control, a "Dislike" control, a "Save" control, a "Share" control, and a "Delete" control.

In some other implementations, when the mobile phone displays the media materials in the grid layout, the mobile phone may further display a second option on the voice assistant card, and the second option is used to adjust a media material.

For example, still as shown in FIG. 6A to FIG. 6G, the mobile phone displays a media material details interface 620 in response to a trigger operation performed on the second option 603. The media material details interface 620 is used to provide more media materials than the media materials in the grid layout for viewing by the user in an interface. In addition, the media materials may be further dragged and sorted in the media material details interface 620.

In addition, the media material details interface 620 may be further used to provide a media material addition function. The media material details interface 620 may include an Add button control 621. The mobile phone displays a search interface 630 of an album application in response to a trigger operation performed on the Add button control 621. The user may perform operations such as a view operation, a check operation, or an uncheck operation on the media material in the search interface 630. The search interface 630 may include a material check box 631. The material check box 631 includes a media material that has been in a checked state. In addition, the user may be provided to perform an uncheck operation on the media material in the material check box 631, for example, tap a delete control corresponding to the media material. It should be understood that, if the user triggers a check operation on a media material, the media material may be displayed in the material check box 631. In addition, if the user triggers an uncheck operation on a media material, the media material is not displayed in the material check box 631.

In addition, the search interface 630 may further include a trigger button 633. The trigger button 633 is used to provide the user to trigger viewing of more other photos and/or videos in the album application. For example, the mobile phone displays an interface 640 of the album application in response to a tap operation performed on the trigger button 633. For the interface 640 of the album application, refer to descriptions of a related technology. This is not limited in this embodiment of this application.

In addition, the search interface 630 may further include an Add control 632. The Add control is used to save an add operation, namely, the check operation, performed by the user on the media material in the current search interface 630. In response to a trigger operation performed on the Add control 632, the mobile phone returns to display the media material details interface 660. The media material details interface 660 displays more media materials than in the interface 620. In addition, the media material details interface 660 further includes a prompt 661, and the prompt 661 is used to prompt that the media materials are sorted.

It should be understood that, in consideration that when the mobile phone faces a large quantity of media materials, it takes a long period of time to subsequently generate the media resource based on the media material. Therefore, the mobile phone may configure a quantity upper limit for the media material. If the quantity of media materials exceeds the foregoing quantity threshold, the mobile phone displays a related prompt, to prompt the user that the quantity of media materials exceeds the quantity threshold. In addition, no media material is added. In this way, time for subsequently generating the media resource based on the media material can be reduced, and user experience can be improved. The quantity of media materials may be understood as a quantity of photos and/or videos included in the media material.

The quantity upper limit may be 50, 60, 100, or the like. The following provides descriptions by using an example in which the quantity upper limit is 50. In some embodiments, the quantity upper limit may be referred to as a first quantity threshold.

For example, still as shown in FIG. 6A to FIG. 6G, when the quantity of media materials exceeds the quantity upper limit, in response to an operation that the user unchecks the media material, the mobile phone displays a prompt bubble 651 in an interface 650, to prompt the user that the quantity of media materials exceeds the quantity upper limit, and the mobile phone does not add the media materials.

In some scenarios, after the voice assistant function of the mobile phone is woken up, the mobile phone obtains a voice instruction with fuzzy semantics. The mobile phone displays a prompt for the voice instruction, to determine the voice instruction with fuzzy semantics.

For example, as shown in FIG. 7A and FIG. 7B, in response to obtaining a voice instruction "Generate a video of a classmate", the mobile phone recognizes and parses the voice instruction. Because the mobile phone does not obtain accurate target content by recognizing and parsing the voice instruction, the mobile phone determines that the voice instruction is a fuzzy voice instruction. The mobile phone displays a voice assistant card 700 in response to obtaining the foregoing voice instruction. The voice assistant card 700 includes a prompt 701 for the voice instruction. In addition, the voice assistant card 700 further includes a selection box 702. The selection box 702 is used to provide a plurality of to-be-selected options for the user to select, and each to-be-selected option corresponds to the target content. The user may select the target content by performing a trigger operation on the to-be-selected operation.

Next, the mobile phone uses the to-be-selected option as the target content in response to the trigger operation performed on the to-be-selected option. Then, the mobile phone finds the media material based on the target content, and displays the media materials in the grid layout on the voice assistant card.

For example, still as shown in FIG. 7A and FIG. 7B, the mobile phone uses Lucy as the target content in response to a trigger operation performed on a to-be-selected option "Lucy". Then, the mobile phone displays media materials 711 in a grid layout on a voice assistant card 710. For detailed descriptions of the media materials 711 in the grid layout, refer to the foregoing descriptions corresponding to FIG. 6A to FIG. 6G. Details are not described herein again.

In some embodiments, the mobile phone may further adjust the media material based on a voice instruction after the mobile phone obtains the media material based on the photo and/or the video. It should be understood that the foregoing adjusting the media material may be understood as: adjusting a quantity of media materials, for example, adding a photo and/or a video (briefly referred to as adding a media material below) to the media materials, replacing a photo and/or a video (briefly referred to as replacing a media material below) in the media materials, reducing a photo and/or a video (briefly referred to as reducing a media material below) in the media materials, or the like.

In a possible implementation, the mobile phone may perform different adjustment on the media material based on a voice instruction with fuzzy semantics, a voice instruction with exact semantics, or the like.

It should be understood that, when the media material is adjusted, the voice instruction with exact semantics may be understood as a voice instruction that indicates a determined quantity, and the voice instruction with fuzzy semantics may be understood as a voice instruction that does not indicate a determined quantity. That is, the mobile phone may determine the voice instruction with exact semantics or the voice instruction with fuzzy semantics based on a word that is in the voice instruction and that indicates a quantity.

For example, "Add a large quantity of videos of Jesse" is a voice instruction with fuzzy semantics.

For another example, "Add some materials of Johnny" is a voice instruction with fuzzy semantics.

For another example, "Delete five photos of Lucy at a location AA" is a voice instruction with exact semantics.

For another example, "Delete all materials of Jesse" is a voice instruction with exact semantics.

Because the voice instruction with fuzzy semantics does not indicate a determined quantity, the mobile phone may specify a target quantity for these voice instructions with fuzzy semantics. That is, the mobile phone may give a corresponding target quantity for these voice instructions with fuzzy semantics.

For a voice instruction that indicates a determined quantity, if the voice instruction includes quantity degree indication information, a target quantity may be obtained based on the quantity degree indication information and a current quantity of media materials.

The quantity degree indication information may be understood as information indicating a quantity degree. For example, a quantity degree indicated by "many" is higher than a quantity indicated by "some", and a quantity degree indicated by "a large quantity" is higher than a quantity indicated by "a small quantity".

That is, when a current quantity of media materials is determined, the target quantity is larger when a degree indicated by the quantity degree indication information is higher.

For example, as shown in Table 1, the mobile phone may obtain the target quantity based on the current quantity of media materials.

**Table 1**

| Semantics quantity condition 1 | Semantics quantity condition 2 |
|---|---|
| $X \leq N*30\%$ | $X \leq N*50\%$ |

X represents the target quantity, X is an integer, and N represents the current quantity of media materials. The semantics quantity condition 1 includes a voice instruction with fuzzy semantics that indicate a small quantity (a few), and a voice instruction with fuzzy semantics that does not indicate a quantity. The semantics quantity condition 2 includes a voice instruction with fuzzy semantics that indicates a large quantity (a lot).

The voice instruction with fuzzy semantics that indicates a small quantity may be understood as a voice instruction with fuzzy semantics that includes a quantifier such as "a small quantity of', "a minority of', "some", "a small portion of', or "a few".

The voice instruction with fuzzy semantics that indicates a large quantity may be understood as a voice instruction with fuzzy semantics that includes a quantifier such as "a large quantity of', "a majority of', "many", "a large portion of", or "a large quantity of".

The voice instruction with fuzzy semantics that does not indicate a quantity may be understood as a voice instruction with fuzzy semantics that does not include a quantifier.

For example, "Add a large quantity of videos of Jesse" is a voice instruction with fuzzy semantics that indicates a large quantity.

For another example, "Add a material of Johnny" is a voice instruction with fuzzy semantics that does not indicate a quantity.

For another example, "Add some pictures at a location AA" is a voice instruction with fuzzy semantics that indicates a small quantity.

In some embodiments, for adding a media material, the mobile phone may adjust the media material based on a media material adding rule.

The media material adding rule includes:

When the current quantity of media materials does not exceed the quantity upper limit, if the voice instruction is a voice instruction with exact semantics, the mobile phone adds a quantity of media materials indicated by the voice instruction. In addition, when the current quantity of media materials exceeds the quantity upper limit, if the voice instruction is a voice instruction with exact semantics, the mobile phone replaces a quantity of media materials indicated by the voice instruction. That is, the mobile phone performs an addition operation or a replacement operation based on whether the current quantity of media materials reaches the quantity upper limit.

For example, a voice instruction is "Add five materials of Lucy at a location AA". In response to the voice instruction, when the current quantity of media materials does not exceed 50, the mobile phone searches the album for five photos and/or videos whose target location is the location AA and whose target content is Lucy, and adds the five photos and/or videos to the media materials.

For another example, a voice instruction is "Add five materials of Lucy at a location AA". In response to the voice instruction, when the current quantity of media materials exceeds 50, the mobile phone searches the album for five photos and/or videos whose target location is the location AA and whose target content is Lucy, and uses the five photos and/or videos to replace five photos and/or videos in the media materials. The mobile phone may replace the photo and/or the video in the media material in a balanced replacement manner or an aesthetic score replacement manner. It should be understood that the mobile phone may further replace the photo and/or the video in the media material in more other replacement manners. Specifically, a setting may be performed based on an actual use requirement. This is not limited in this embodiment of this application.

In addition, the media material adding rule may further include:

When the current quantity of media materials does not exceed the quantity upper limit, if the voice instruction is a voice instruction with fuzzy semantics, the mobile phone adds a target quantity of media materials corresponding to the voice instruction. In addition, when the current quantity of media materials exceeds the quantity upper limit, if the voice instruction is a voice instruction with fuzzy semantics, the mobile phone replaces a target quantity of media materials corresponding to the voice instruction. For the target quantity corresponding to the voice instruction, refer to the foregoing descriptions.

For example, a voice instruction is "Add some photos of Johnny". In response to the voice instruction, when the current quantity of media materials does not exceed 50, the mobile phone searches the album for a target quantity of photos of Johnny, and adds the target quantity of photos of Johnny to the media materials.

For another example, a voice instruction is "Add some photos of Johnny". In response to the voice instruction, when the current quantity of media materials exceeds 50, the mobile phone searches the album for a target quantity of photos of Johnny, and uses the target quantity of photos of Johnny to replace the target quantity of photos and/or videos in the media materials.

In addition, in the media material rule, the mobile phone may further control a quantity of added media materials not to exceed the quantity upper limit. That is, for adding a media material, the mobile phone does not increase the quantity of media materials to the quantity upper limit, and a maximum value of the quantity of media materials is the quantity upper limit.

For example, the voice instruction is "Add some photos of Johnny". In response to the voice instruction, when the quantity of media materials is 45, the mobile phone searches the album for five photos of Johnny, and adds the five photos of Johnny to the media materials.

For another example, the voice instruction is "Add 10 photos of Johnny". In response to the voice instruction, when the quantity of media materials is 46, the mobile phone searches the album for four photos of Johnny, and adds the four photos of Johnny to the media materials.

The following describes, with reference to the foregoing scenario shown in FIG. 7A and FIG. 7B, a process in which the mobile phone adjusts the media material based on the media material adding rule.

For example, as shown in FIG. 8A to FIG. 8E, the mobile phone displays a voice assistant card 800, and the mobile phone obtains 30 photos and/or videos of Lucy as media materials. In response to obtaining the voice instruction "Add some photos of Johnny at a location AA", the mobile phone searches the album for a target quantity of photos whose target content is Johnny and target location is the location AA, and adds these photos to the media materials. The mobile phone displays media materials 801 in a grid layout after the mobile phone adds these photos to the media materials. It should be understood that in the foregoing process, because the current quantity of media materials is 30, and the voice instruction is a voice instruction with fuzzy semantics, it may be learned from the descriptions corresponding to Table 1 that the target quantity is 9. The media materials 801 in the grid layout correspond to a current quantity of media materials after the photos are added, namely, 39. In addition, the mobile phone may further display a related prompt 802 when the mobile phone displays the media materials 801 in the grid layout.

For example, still as shown in FIG. 8A to FIG. 8E, after the mobile phone displays the voice assistant card 800, the user controls the mobile phone by using a voice instruction. The voice instruction is "Add a large quantity of photos of Lucy at a location BB", namely, a voice instruction with fuzzy semantics, and the current quantity of media materials is 39. It may be learned from the foregoing descriptions corresponding to Table 1 that the target quantity is 20. If the quantity of media materials exceeds the quantity upper limit, namely, 50 after 20 media materials are added to the media materials, the mobile phone controls the quantity of media materials, for example, sets the target quantity to 11. In response to obtaining the voice instruction, the mobile phone searches the album for 11 photos whose target content is Lucy and whose target location is the location BB, and adds these photos to the media materials. After the mobile phone adds these photos to the media materials, the mobile phone displays a voice assistant card 810. Media materials 811 in the grid layout are displayed on the voice assistant card 810. The media materials 811 in the grid layout correspond to a current quantity of media materials after the photos are added, namely, 50.

For example, still as shown in FIG. 8A to FIG. 8E, after the mobile phone displays the voice assistant card 810, the user controls the mobile phone by using a voice instruction. The voice instruction is "Add other five photos of Johnny at a location AA", namely, a voice instruction with exact semantics. Because the current quantity of media materials reaches the quantity upper limit, the mobile phone replaces five photos and/or videos in the media materials with the five photos of Johnny at the location AA. After replacement is completed, the mobile phone displays the media materials 821 in the grid layout on the voice assistant card 820 and a prompt 822 for the replacement operation. The voice assistant card 820 further includes a second option 823. In response to a trigger operation performed on the second option 823, the mobile phone displays a media material details interface 830. The media material details interface 830 includes a media material added in the foregoing replacement process and a media material reduced in the foregoing replacement process.

In some implementations, the media material details interface 830 further includes an Add button control 831. The mobile phone displays a search interface 840 of the album application in response to a trigger operation performed on the Add button control 831. It should be understood that search content corresponding to the search interface 840 of the album application is related to a voice instruction last obtained by the mobile phone. For example, the search content is search content whose target content is "Johnny" and whose target location is "location BB".

In some embodiments, for reducing a media material, the mobile phone may adjust the media material based on a media material reduction rule.

The media material reduction rule includes:

When the current quantity of media materials is greater than a recommended quantity, if the voice instruction is a voice instruction with exact semantics, the mobile phone reduces a quantity of media materials indicated by the voice instruction, and a quantity of reduced media materials is greater than or equal to a quantity lower limit; or when the current quantity of media materials is greater than a recommended quantity, if the voice instruction is a voice instruction with fuzzy semantics, the mobile phone reduces a target quantity of media materials corresponding to the voice instruction, and a quantity of reduced media materials is greater than or equal to a quantity lower limit. It should be understood that the media resource that needs to be generated by the mobile phone based on the media material subsequently. To make the mobile phone capable of generating the media resource based on the media material, the quantity of media materials needs to be greater than or equal to the quantity lower limit. For example, the quantity lower limit may be 1, 2, or 3. In addition, the quantity lower limit needs to be less than the recommended quantity in terms of a value, and the recommended quantity needs to be less than the quantity upper limit in terms of a quantity. The following provides descriptions by using an example in which the quantity lower limit is 1. In some examples, the quantity lower limit may also be referred to as a fifth quantity.

Better effect can be achieved when the media resource is generated subsequently based on the recommended quantity of media resources. The recommended quantity may be 6, 7, or 10. The following provides descriptions by using an example in which the recommended quantity is 6. In some embodiments, the recommended quantity may also be referred to as a second quantity threshold.

For example, the voice instruction is "Reduce some photos of Johnny", and the current quantity of media materials is 30. The mobile phone reduces nine photos of Johnny in the media materials in response to obtaining the voice instruction.

For another example, the voice instruction is "Reduce 10 photos of Johnny", and the current quantity of media materials is 30. The mobile phone reduces 10 photos of Johnny in the media materials in response to obtaining the voice instruction.

For another example, the voice instruction is "Reduce nine photos of Johnny", and the current quantity of media materials is 8. In response to obtaining the voice instruction, the mobile phone maintains a quantity of reduced media materials to be greater than or equal to 1, and the mobile phone reduces seven photos of Johnny in the media materials.

For another example, the voice instruction is "Reduce some photos of Jesse", and the current quantity of media materials is 9. The mobile phone reduces four photos of Jesse in the media materials in response to obtaining the voice instruction.

In addition, the media material reduction rule further includes:

When the current quantity of media materials is less than or equal to a recommended quantity, if the voice instruction is a voice instruction with exact semantics, the mobile phone reduces a quantity of media materials indicated by the voice instruction, and a quantity of reduced media materials is greater than or equal to 1; or when the current quantity of media materials is less than or equal to a recommended quantity, if the voice instruction is a voice instruction with fuzzy semantics, the mobile phone reduces a quantity A of media materials, and a quantity of reduced media materials is greater than or equal to 1. In some examples, the quantity A may be 1, 2, or 4. That is, the mobile phone may perform different adjustment on the quantity of media materials based on a value relationship between the current quantity of media materials and the recommended quantity.

It should be understood that, when the quantity of media materials is the recommended quantity, quality of a subsequently generated media resource is high. Therefore, when the current quantity of media materials is less than or equal to the recommended quantity, the mobile phone reduces the quantity A of media materials in response to the voice instruction with fuzzy semantics, to ensure quality of the media resource.

For example, the voice instruction is "Reduce some photos of Johnny", and the current quantity of media materials is 6. The mobile phone reduces one photo of Johnny in the media materials in response to obtaining the voice instruction.

For another example, the voice instruction is "Reduce three photos of Johnny", and the current quantity of media materials is 6. The mobile phone reduces three photos of Johnny in the media materials in response to obtaining the voice instruction.

For another example, the voice instruction is "Reduce 10 photos of Johnny", and the current quantity of media materials is 5. In response to obtaining the voice instruction, the mobile phone maintains a quantity of reduced media materials to be greater than or equal to 1, and the mobile phone reduces four photos of Johnny in the media materials.

For another example, the voice instruction is "Reduce some photos of Jesse", and the current quantity of media materials is 6. The mobile phone reduces one photo of Jesse in the media materials in response to obtaining the voice instruction.

The following describes, with reference to the foregoing scenario shown in FIG. 7A and FIG. 7B, a process in which the mobile phone adjusts the media material based on the media material reduction rule.

For example, as shown in FIG. 9A to FIG. 9F, the user controls the mobile phone by using a voice instruction. The voice instruction is "Delete some photos", namely, a voice instruction with fuzzy semantics. The current quantity of media materials is 30. It may be learned from descriptions corresponding to Table 1 that the target quantity is 9. In response to the voice instruction, the mobile phone deletes nine photos in the media materials, and then the mobile phone displays a voice assistant card 900 including media materials 901 in a grid layout. The media materials 901 in the grid layout correspond to a current quantity of media materials after the photos are reduced, namely, 21.

For example, still as shown in FIG. 9A to FIG. 9F, after the mobile phone displays the voice assistant card 900, the user controls the mobile phone by using a voice instruction. The voice instruction is "Delete some other photos", namely, a voice instruction with fuzzy semantics. The current quantity of media materials is 21. It may be learned from descriptions corresponding to Table 1 that the target quantity is 6. In response to the voice instruction, the mobile phone deletes six photos in the media materials, and then the mobile phone displays a voice assistant card 910 including media materials 911 in a grid layout. The media materials 911 in the grid layout correspond to a current quantity of media materials, namely, 15.

For example, still as shown in FIG. 9A to FIG. 9F, after the mobile phone displays the voice assistant card 910, the user controls the mobile phone by using a voice instruction. The voice instruction is "Delete 10 materials", is a voice instruction with exact semantics, and indicates 10 materials. In response to the voice instruction, the mobile phone deletes 10 materials in the media materials, and then the mobile phone displays a voice assistant card 920 including media materials 921 in a grid layout. The media materials 921 in the grid layout correspond to a current quantity of media materials, namely, 5.

For example, still as shown in FIG. 9A to FIG. 9F, after the mobile phone displays the voice assistant card 920, the user controls the mobile phone by using a voice instruction. The voice instruction is "Delete a material at a location AA", namely, a voice instruction with exact semantics, and indicates the location AA. In response to the voice instruction, the mobile phone deletes a material at the location AA in the media materials, and then the mobile phone displays a voice assistant card 930 including media materials 931 in a grid layout. The media materials 931 in the grid layout correspond to a current quantity of media materials, namely, 3.

For example, still as shown in FIG. 9A to FIG. 9F, after the mobile phone displays the voice assistant card 930, the user controls the mobile phone by using a voice instruction. The voice instruction is "Delete all materials", namely, a voice instruction with exact semantics. Because the user indicates, by using a voice instruction, to delete all the materials, the mobile phone needs to maintain a quantity of reduced media materials to be greater than or equal to 1. Therefore, the mobile phone reduces two materials. The mobile phone displays a voice assistant card 940 in response to the voice instruction. The voice assistant card 940 includes a prompt 942, and the prompt 942 prompts that the media materials cannot be further reduced. For example, the prompt 942 may be a text description of "At least one material is required to generate a video. Try to reserve one material to generate a video". In addition, the voice assistant card 940 may further include media materials 941 in a grid layout, and the media materials 941 in the grid layout correspond to the current quantity of media materials, namely, 1.

For example, still as shown in FIG. 9A to FIG. 9F, after the mobile phone displays the voice assistant card 940, the user controls the mobile phone by using a voice instruction. The voice instruction is "Delete one material", namely, a voice instruction with exact semantics. Because the current quantity of media materials is equal to the quantity lower limit, the mobile phone does not reduce the media materials. The mobile phone displays a voice assistant card 950 in response to the voice instruction. The voice assistant card 950 includes a prompt 952, and the prompt 952 prompts that the media materials cannot be further reduced.

In some embodiments, for replacing a media material, the mobile phone may adjust the media material based on a media material replacement rule.

The media material replacement rule includes:

If the voice instruction is a voice instruction with exact semantics, the mobile phone replaces a quantity of media materials indicated by the voice instruction. If the voice instruction is a voice instruction with fuzzy semantics, the mobile phone replaces a target quantity of media materials corresponding to the voice instruction.

For example, the voice instruction is "Replace five photos of Johnny with photos of Lucy". The mobile phone replaces the five photos of Johnny in the media materials with the photos of Lucy in response to obtaining the voice instruction.

For another example, the voice instruction is "Replace some photos of Johnny with photos of Lucy", and the current quantity of media materials is 30. The mobile phone replaces nine photos of Johnny with photos of Lucy in response to obtaining the voice instruction.

The following describes, with reference to the foregoing scenario shown in FIG. 7A and FIG. 7B, a process in which the mobile phone adjusts the media material based on the media material replacement rule.

For example, as shown in FIG. 10A to FIG. 10C, the user controls the mobile phone by using a voice instruction. The voice instruction is "Change a large quantity of photos", namely, a voice instruction with fuzzy semantics. The current quantity of media materials is 30. It may be learned from descriptions corresponding to Table 1 that the target quantity is 15. The mobile phone replaces 15 photos in the media materials in response to the voice instruction. The mobile phone displays a voice assistant card 1000 including media materials 1001 in a grid layout. The media materials 1001 in the grid layout correspond to a current quantity of media materials after the photos are replaced, namely, 30.

For example, still as shown in FIG. 10A to FIG. 10C, after the mobile phone displays the voice assistant card 1000, the user controls the mobile phone by using a voice instruction. The voice instruction is "Delete a photo of Lucy and add a photo of Johnny", namely, a voice instruction with fuzzy semantics. The current quantity of media materials is 30. It may be learned from descriptions corresponding to Table 1 that the target quantity is 9. The mobile phone replaces nine photos in the media materials, for example, replaces nine photos of Lucy with photos of Johnny in response to the voice instruction. Then the mobile phone displays a voice assistant card 1010 including media materials 1011 in a grid layout. The media materials 1011 in the grid layout correspond to a current quantity of media materials after the photos are replaced, namely, 30.

For example, still as shown in FIG. 10A to FIG. 10C, after the mobile phone displays the voice assistant card 1010, the user controls the mobile phone by using a voice instruction. The voice instruction is "Change five photos of Johnny", namely, a voice instruction with exact semantics. The mobile phone replaces five photos in the media materials, for example, replaces five photos of Johnny with photos without Johnny in response to the voice instruction. Then the mobile phone displays a voice assistant card 1020 including media materials 1021 in a grid layout. The media materials 1021 in the grid layout correspond to a current quantity of media materials after the photos are replaced, namely, 30.

After the mobile phone generates the media resource, that is, after the mobile phone performs step S400, the mobile phone performs step S401.

S401: The mobile phone edits the media resource.

The foregoing editing the media resource may include: changing background music of the media resource, changing an editing template used by the media resource, adjusting duration of the media resource, changing a caption of the media resource, and the like.

In addition, the editing the media resource may further include: adjusting the media material of the media resource. A process in which the mobile phone adjusts the media material of the media resource is similar to step S400. For details, refer to related descriptions of step S400. Details are not described herein again.

It should be understood that, in some other embodiments, the foregoing editing a media resource may further include: adjusting a size of the media resource, adjusting resolution of the media resource, and the like. Specifically, a design may be made based on an actual use requirement.

In some embodiments, a mobile phone may edit the media resource based on editing by the user.

The editing by the user may be an edit operation performed by the user on an edit interface of the mobile phone. The editing by the user may also be a voice instruction of the user. That is, the mobile phone may edit the media resource in response to the voice instruction. For example, the mobile phone may change the background music of the media resource in response to the voice instruction. For another example, the mobile phone may replace, in response to the voice instruction, the edit template used by the media resource. For another example, the mobile phone may adjust the duration of the media resource in response to the voice instruction. For another example, the mobile phone may replace the caption of the media resource in response to the voice instruction.

For a process in which the mobile phone edits the media resource based on the edit operation performed by the user in the edit interface, refer to a related technology. Details are not described herein again.

The following describes a process in which the mobile phone edits the media resource based on the voice instruction of the user.

In response to obtaining the voice instruction, the mobile phone determines editing content indicated by the voice instruction. The editing content may include one or more of a template, duration, background music, or a caption.

For example, with reference to the foregoing scenario shown in FIG. 6A to FIG. 6G, a process in which the mobile phone edits the media resource based on the voice instruction of the user is described. As shown in FIG. 11A to FIG. 11J, after the mobile phone generates the media resource, the mobile phone displays a voice assistant card 1100. The voice assistant card 1100 includes a media resource 1101. In addition, the voice assistant card 1100 may further include an editing prompt control 1102. The editing prompt control 1102 corresponds to editing content. The editing prompt control is used to provide an edit operation on the editing content, and may be used to prompt editing content that may be executed by the user on a current card. For example, the editing prompt control 1102 includes a control 1102a corresponding to a caption, a control 1102b corresponding to a template, a control 1102c corresponding to background music, and a control 1102d corresponding to duration.

It should be noted that numbers with underlines in FIG. 11A to FIG. 11J and other accompanying drawings such as 1102a and 1102b in FIG. 11A to FIG. 11J are reference numerals in the accompanying drawings, and should not be understood as interface elements displayed by the mobile phone.

For example, still as shown in FIG. 11A to FIG. 11J, in response to a trigger operation performed on the control 1102a corresponding to the caption, the mobile phone displays the voice assistant card 1110. The voice assistant card 1110 includes a caption editing box 1113. The caption editing box 1113 is used to provide an edit operation on the caption of the media resource. The voice assistant card 1110 further includes an editing prompt control 1112. The editing prompt control includes a control 1112b corresponding to a template, a control 1112c corresponding to background music, and a control 1112d corresponding to duration. The editing prompt control does not include a control corresponding to a caption.

It should be understood that a trigger operation performed on the control 1102a corresponding to a caption may be a tap operation performed on the control 1102a corresponding to a caption, or may be a voice instruction for the control corresponding to a caption, for example, "Smart caption".

For another example, still as shown in FIG. 11A to FIG. 11J, after the mobile phone displays the voice assistant card 1100, the mobile phone displays the voice assistant card 1120 in response to a trigger operation performed on the control 1102b corresponding to a template. The voice assistant card 1120 includes an edit menu control 1123. A "Change template" menu of the edit menu control 1123 is in an unfolded state. The "Change template" menu includes a "Cute" template option, a "Movie feeling" template option, a "Texture" template option, and a "Simple" template option.

Then, in response to a selection operation performed on the "Texture" template option, the mobile phone changes a template used by the media resource with the "Texture" template, and the mobile phone displays a voice assistant card 1130. The voice assistant card 1130 includes an edit menu control 1133. The "Change template" menu of the edit menu control 1133 is in an unfolded state, and the "Texture" template option is in a selected state. In addition, the edit menu control 1133 may further include a "Change music" menu in a folded state, a "Change duration" menu in a folded state, an unfolding control corresponding to the "Change music" menu, and an unfolding control corresponding to the "Change music" menu.

The selection operation performed on the "texture" template option may be a tap operation performed on the "texture" template option, or may be a voice instruction, for example, a "Select the "Texture" template".

Next, the mobile phone displays a voice assistant card 1140 in response to an unfolding operation performed on the "Change music" menu. The voice assistant card 1140 includes an edit menu control 1143, and a "Change music" menu of the edit menu control 1143 is in an unfolded state. The "Change music" menu includes a "Light" music option, a "Romantic" music option, a "Rhythmic" music option, and a "Popular" music option.

The unfolding operation of the unfolding operation performed on the "Change music" menu may be a tap operation performed on the unfolding control corresponding to the "Change music" menu, or may be a voice instruction, for example, "Unfold the "Change music" menu".

Then, the mobile phone displays a voice assistant card 1150 in response to a selection operation performed on the "Romantic" music option. The voice assistant card 1150 includes an edit menu control 1153, and a "Romantic" music option in the edit menu control 1153 is in a selected state.

The selection operation performed on the "Romantic" music option may be a tap operation performed on the "Romantic" music option, or may be a voice instruction, for example, "Select the "Romantic" music option".

Then, the mobile phone displays a voice assistant card 1160 in response to an unfolding operation performed on the "Change duration" menu. The voice assistant card 1160 includes an edit menu control 1163, and a "Change duration" menu of the edit menu control 1163 is in an unfolded state. The "Change duration" menu includes a "55s" duration option, a "60s" duration option, a "70s" duration option, and a "Custom" duration option.

The unfolding operation performed on the "Change duration" menu may be a tap operation performed on the unfolding control corresponding to the "Change duration" menu, or may be a voice instruction, for example, "Unfold the "Change duration" menu".

Next, the mobile phone displays a voice assistant card 1170 in response to a selection operation performed on the "Custom" duration option. The voice assistant card 1170 includes a duration customization pop-up window 1174. The duration customization pop-up window 1174 is used to provide the user to change the duration of the media resource in a customized manner. For example, the user may change the duration of the media resource in a customized manner by dragging an option bar in the duration customization pop-up window 1174.

Optionally, the foregoing changing the duration of the media resource in a customized manner falls within a duration range, and the duration range is related to a media material included in the media resource, or the duration range may be preset.

For example, a start point and an end point of the duration range may be calculated based on the following expression.

$$T1=a*X+b*Y \quad \text{Expression 1}$$

$$T2=c*X+d*Y \quad \text{Expression 2}$$

T1 is the start point of the duration range, T2 is the end point of the duration range, a is a first coefficient, b is a second coefficient, c is a third coefficient, d is a fourth coefficient, X is a quantity of photos included in the media materials, and Y is total duration of a video included in the media materials.

For example, a may be 0.5, b may be 1, c may be 3, and d may be 1.5.

For another example, the start point of the duration range may be calculated according to Expression 1, and the end point of the preset duration range is, for example, 90s.

The selection operation performed on the "Custom" duration option may be a tap operation performed on the "Custom" duration option, or may be a voice instruction, for example, "Select the "Custom" duration option".

Next, in response to the selection operation performed on the "Custom" duration option, the mobile phone adjusts the duration of the media resource to 65s, and the mobile phone displays a voice assistant card 1180. The voice assistant card 1180 includes an edit menu control 1183, and a "Custom" duration option in the edit menu control 1183 is in a selected state. In addition, the edit menu control 1183 further includes an "OK" option control.

Next, in response to a trigger operation performed on the "OK" option control, the mobile phone displays a voice assistant card 1190, and the voice assistant card 1190 includes some prompts. In addition, the voice assistant card further includes a media resource 1193. A template used by the media resource 1193 is a "texture" template, background music is "Romantic" background music, and duration is 65s.

In another possible design, as shown in FIG. 12A to FIG. 12D, after the mobile phone generates the video, the mobile phone displays a voice assistant card 1200 in response to obtaining a voice instruction, for example, "Change music". The voice assistant card 1200 includes an edit menu control 1203. A "Change Music" menu of the edit menu control 1203 is in an unfolded state. That is, an unfolded state of a menu in an edit menu control is related to a voice instruction. In the edit menu control, a menu corresponding to editing content indicated by the voice instruction is unfolded.

In some other possible designs, as shown in the voice assistant card 1100 in FIG. 11A to FIG. 11J, the voice assistant card 1100 includes the editing prompt control 1102. After the mobile phone displays the voice assistant card 1100, the mobile phone displays a voice assistant card 1210 in response to obtaining a voice instruction, for example, "Change music". The voice assistant card does not include the editing prompt control for "Change music".

In some other possible designs, after the mobile phone displays the voice assistant card 1100 shown in FIG. 11A to FIG. 11J, the mobile phone displays a voice assistant card 1220 in response to obtaining a voice instruction, for example, "Change music". The voice assistant card includes a prompt 1221, and the prompt 1221 is used to prompt a trigger operation on current editing content. It should be understood that the mobile phone may preconfigure a plurality of prompts for the editing content, and after the user edits the media resource, the prompts are displayed alternately.

In some other possible designs, after the mobile phone displays the voice assistant card 1100 shown in FIG. 11A to FIG. 11J, the mobile phone displays a voice assistant card 1230 in response to obtaining voice instruction, for example, "Change duration". The voice assistant card 1230 includes an edit menu control 1233, and a "Change duration" menu of the edit menu control 1233 is in an unfolded state. In addition, the "Change duration" menu includes an option bar, and the option bar is used to provide the user to adjust the duration of the media resource in a customized manner.

In some embodiments, for some voice instructions indicating editing content, the mobile phone edits the media resource based on the editing content if the mobile phone can find editing content indicated by a voice instruction; or the mobile phone displays the edit menu control if the mobile phone cannot find editing content indicated by a voice instruction.

For example, as shown in FIG. 13A to FIG. 13E, the voice instruction is "Change to the "Movie feeling" template", and the mobile phone can find the "Movie feeling" template. In response to obtaining the voice instruction, the mobile phone changes to the "Movie feeling" template for the media resource, and the mobile phone displays a voice assistant card 1300. The voice assistant card includes a media resource 1301 that uses the "Movie feeling" template.

For another example, still as shown in FIG. 13A to FIG. 13E, the voice instruction is "Change to the "Dopamine" template", and the mobile phone can learn, through recognition from the voice instruction, that the voice instruction indicates to change a template, but the mobile phone cannot find the "Dopamine" template. The mobile phone displays a voice assistant card 1310 in response to obtaining a voice instruction. The voice assistant card 1310 includes an edit menu control 1313. A "Change template" menu of the edit menu control 1313 is in an unfolded state.

For example, still as shown in FIG. 13A to FIG. 13E, the voice instruction is "Replace to light music", and the mobile phone can find the light music. In response to obtaining the voice instruction, the mobile phone changes the background music of the media resource to the light music, and the mobile phone displays a voice assistant card 1320. The voice assistant card includes a media resource 1321 whose background music is light music.

For another example, still as shown in FIG. 13A to FIG. 13E, the voice instruction is "Change to elegant music", and the mobile phone can learn, through recognition from the voice instruction, that the voice instruction indicates to change music, but the mobile phone cannot find the elegant music. The mobile phone displays a voice assistant card 1330 in response to obtaining a voice instruction. The voice assistant card 1330 includes an edit menu control 1333. A "Change music" menu of the edit menu control 1333 is in an unfolded state.

For example, still as shown in FIG. 13A to FIG. 13E, the voice instruction is "Add champagne to the video", and the mobile phone cannot obtain editing content from the semantic instruction through recognition. The mobile phone displays a voice assistant card 1340 in response to obtaining a voice instruction. The voice assistant card 1340 includes an edit menu control 1343. All menus included in the edit menu control 1343 are in a folded state.

In some embodiments, a duration range of the media resource is related to the media material included in the media resource, and the mobile phone obtained the duration indicated by the voice instruction. If the duration indicated by the voice instruction falls within the duration range, the mobile phone adjusts the duration of the media resource based on the duration indicated by the voice instruction; or if the duration indicated by the voice instruction does not fall within the duration range, the mobile phone prompts that the duration indicated by the prompt voice exceeds the duration range; or if the voice instruction indicates no duration and is a voice instruction with fuzzy semantics, the mobile phone randomly selects duration from a first range to adjust the duration of the media resource, and adjusted duration of the media resource falls within the duration range. The first range may be (5, 10), (6, 14), (8, 15), or the like.

Exemplarily, in the scenario shown in FIG. 6A to FIG. 6G, the media resource includes 30 media materials, and the duration range of the media resource is [15, 90]. When the mobile phone generates the media resource, the duration of the media resource is 30s. As shown in FIG. 14A to FIG. 14E, the voice instruction is "Shorten duration", and the voice instruction is a voice instruction with a fuzzy voice, and does not indicate an adjusted quantity value of the duration. In response to obtaining the voice instruction, the mobile phone shortens the duration of the media resource by 5s, and displays a voice assistant card 1400. The voice assistant card 1400 includes a media material 1401 and duration 25s of the media material 1401.

For another example, still as shown in FIG. 14A to FIG. 14E, after the mobile phone displays the voice assistant card 1400, the voice instruction is "Shortened by 2 seconds". In response to obtaining the voice instruction, the mobile phone shortens the duration of the media resource by 2s, and displays a voice assistant card 1410. The voice assistant card 1410 includes a media material 1411 and duration 23s of the media material 1411.

For example, still as shown in FIG. 14A to FIG. 14E, after the mobile phone displays the voice assistant card 1410, the voice instruction is "Adjusted to 20 seconds". In response to obtaining the voice instruction, the mobile phone adjusts the duration of the media resource to 20s, and displays a voice assistant card 1420. The voice assistant card 1420 includes a media material 1421 and duration 20s of the media material 1421.

For another example, still as shown in FIG. 14A to FIG. 14E, after the mobile phone displays the voice assistant card 1420, the voice instruction is "Adjusted to 1 hour". In response to obtaining the voice instruction, because 1 hour exceeds the duration range, the mobile phone adjusts the duration of the media resource to 90s, and displays a voice assistant card 1430. The voice assistant card 1430 includes a media material 1431 and duration of the media material 1431 is 1 minute and 30 seconds, namely, 90s.

For example, still as shown in FIG. 14A to FIG. 14E, after the mobile phone displays the voice assistant card 1430, the voice instruction is "Shortened to 2 seconds". In response to obtaining the voice instruction, because 2 seconds exceeds the foregoing duration range, the mobile phone adjusts the duration of the media resource to 15s, and displays a voice assistant card 1440. The voice assistant card 1440 includes a media material 1441 and duration of the media material 1441 is 15s.

It should be noted that personal information used in the technical solution of this application is only limited to obtaining information of individual consent, including but not limited to notifying and reminding the user of a related user agreement (notification) before the user uses the function, and signing the agreement (authorization) that includes authorization related user information.

With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In embodiments, the electronic device may be divided into functional modules based on the foregoing method examples. For example, each functional module corresponding to each function may be obtained through division, or two or more functions may be integrated into one processing module. The integrated module may be implemented in a form of hardware. It should be noted that, in embodiments, division into the modules is an example, is merely logical function division, and may be other division in an actual implementation.

An embodiment of this application further provides an electronic device. As shown in FIG. 15. The electronic device may include one or more processors 1601, a memory 1602, and a communication interface 1603.

The memory 1602, the communication interface 1603, and the processor 1601 are coupled. For example, the memory 1602, the communication interface 1603, and the processor 1601 may be coupled through a bus 1604.

The communication interface 1603 is configured to perform data transmission with another device. The memory 1602 stores computer program code. The computer program code includes computer instructions. When the computer instructions are executed by the processor 1601, the electronic device is enabled to perform the related method steps in the method embodiments of this application.

The processor 1601 may be a processor or a controller, for example, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processor may implement or execute various example logical blocks, modules, and circuits described with reference to content of the present disclosure. The processor may be a combination for implementing a computing function, for example, a combination of one or more microprocessors, or a combination of a DSP and a microprocessor.

The bus 1604 may be a peripheral component interconnect (peripheral component interconnect, PCI) bus, an extended industry standard architecture (extended industry standard architecture, EISA) bus, or the like. The bus 1604 may be classified into an address bus, a data bus, a control bus, and the like. For ease of representation, only one bold line is used for indication in FIG. 15, but it does not indicate that there is only one bus or only one type of bus.

An embodiment of this application further provides a computer-readable storage medium. The computer-readable storage medium stores computer program code. When the processor executes the computer program code, an electronic device performs related method steps in the method embodiments.

An embodiment of this application further provides a computer program product. When the computer program product is run on a computer, the computer is enabled to perform related method steps in the foregoing method embodiments.

The electronic device, the computer-readable storage medium, or the computer program product provided in this application is configured to perform the corresponding method provided above. Therefore, for beneficial effect that can be achieved, refer to the beneficial effect in the corresponding method provided above. Details are not described herein.

Based on the descriptions of the implementations, a person skilled in the art may clearly understand that for the purpose of convenient and brief descriptions, division into the functional modules is merely used as an example for description. In an actual application, the functions can be allocated to different functional modules for an implementation based on a requirement. In other words, an inner structure of an apparatus is divided into different functional modules, to implement all or some of the foregoing described functions.

In the several embodiments provided in this application, it should be understood that the disclosed apparatus and method may be implemented in another manner. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in different places. Some or all of the units may be selected based on an actual requirement, to achieve objectives of the solutions of the embodiments in this application.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the contributing part, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes various media that can store program code, such as a USB flash drive, a removable hard disk drive, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A media resource editing method, applied to an electronic device, wherein the electronic device comprises a voice assistant, and the method comprises:

   displaying a dialog box in response to a first dialog input when the voice assistant is woken up, wherein the first dialog input indicates to generate a media resource, the dialog box comprises a first answer, the first answer comprises a first quantity of media materials, and the first quantity is less than a first quantity threshold;
   displaying a second answer in the dialog box in response to a second dialog input, wherein the second answer comprises a second quantity of media materials, the second quantity is greater than or equal to the first quantity threshold, and the second dialog input indicates to add the media materials; and
   displaying a third answer in the dialog box in response to a third dialog input, wherein the third answer comprises the second quantity of media materials, and the third dialog input indicates to add the media materials, wherein the second quantity of media materials in the third answer are different from at least one of the second quantity of media materials in the second answer.

2. The method according to claim 1, wherein after the displaying a third answer in the dialog box, the method further comprises:

   displaying a fourth answer in the dialog box in response to a fourth dialog input, wherein the fourth answer comprises a third quantity of media materials, the third quantity is less than or equal to a second quantity threshold, the second quantity threshold is less than the first quantity threshold, and the fourth dialog input indicates to reduce the media materials; and
   displaying a fifth answer in the dialog box in response to the fourth dialog input, wherein the fifth answer comprises a fourth quantity of media materials, the fourth quantity is less than the third quantity, and the fourth dialog input indicates to reduce the media materials, wherein
   a difference between the third quantity and the fourth quantity is less than a difference between the second quantity and the third quantity.

3. The method according to claim 2, wherein after the displaying a fifth answer in the dialog box, the method further comprises:

   after a quantity of media materials is reduced to a fifth quantity, in response to a fifth dialog input, prompting, in the dialog box, that the media materials cannot be further reduced, wherein the fifth quantity is less than or equal to a third quantity threshold.

4. The method according to any one of claims 1-3, wherein

   when the second dialog input indicates to add a specified quantity of media materials, a difference between the second quantity and the first quantity is the specified quantity; or
   when the second dialog input does not indicate to add a specified quantity of media materials, a difference between the second quantity and the first quantity is positively correlated with the first quantity.

5. The method according to claim 4, wherein the second dialog input comprises quantity degree indication information, and a higher degree indicated by the quantity degree indication information indicates a larger difference between the second quantity and the first quantity.

6. The method according to any one of claims 1-5, wherein
   when the fourth dialog input does not indicate to reduce the specified quantity of media materials, the difference between the second quantity and the third quantity is positively correlated with a quantity of media materials existing when the fourth dialog input is received.

7. The method according to claim 1, wherein the dialog box further comprises a first control, and after the displaying a third answer in the dialog box, the method further comprises:
displaying a first interface in response to a trigger operation performed on the first control, wherein the first interface comprises a media material in a selected state and a media material in an unselected state, the media material in the selected state is a media material comprised in the third answer, and the media material in the unselected state is a media material that is comprised in the third answer and that is not comprised in the second answer.

8. The method according to claim 1, wherein after the displaying a third answer in the dialog box, the method further comprises:
displaying a sixth answer in the dialog box in response to a sixth dialog input, wherein the sixth answer comprises a first media resource, the first media resource comprises a media material comprised in the third answer, and the sixth dialog input indicates to generate a media resource based on the media material comprised in the third answer.

9. The method according to claim 8, wherein after the displaying a sixth answer in the dialog box, the method further comprises:

displaying a seventh answer in the dialog box in response to a seventh dialog input, wherein the seventh answer comprises a media editing control, wherein
when the seventh dialog input indicates specified editing content, a menu option corresponding to the specified editing content in the media editing control is in an unfolded state; or
when the seventh dialog input does not indicate specified editing content, a menu option in the media editing control is in a folded state; and
the specified editing content comprises one or more of Change template, Change background music, and Change duration, Change template corresponds to the first menu option, Change background music corresponds to the second menu option, and Change duration corresponds to the third menu option.

10. The method according to claim 9, wherein the method further comprises:
displaying a guide bubble in the dialog box in response to the seventh dialog input, wherein the guide bubble is used to prompt a user to send a voice instruction.

11. The method according to claim 8, wherein after the displaying a third answer in the dialog box, the method further comprises:

displaying an eighth answer in the dialog box in response to an eighth dialog input, wherein the eighth answer comprises a second media resource, and the second media resource comprises a media material the same as the first media resource, wherein
when the eighth dialog input indicates specified duration, a duration difference between the second media resource and the first media resource is the specified duration; or
when the eighth object input does not indicate specified duration, a duration difference between the second media resource and the first media resource falls within a first range.

12. An electronic device, wherein the electronic device comprises a processor and a memory, the processor is coupled to the memory, the memory is configured to store computer program code, the computer program code comprises computer instructions, and when the processor executes the computer instructions, the electronic device is enabled to perform the method according to any one of claims 1-11.

13. A computer-readable storage medium, wherein the computer-readable storage medium comprises computer instructions, and when the computer instructions run on an electronic device, the electronic device is enabled to perform the method according to any one of claims 1-11.

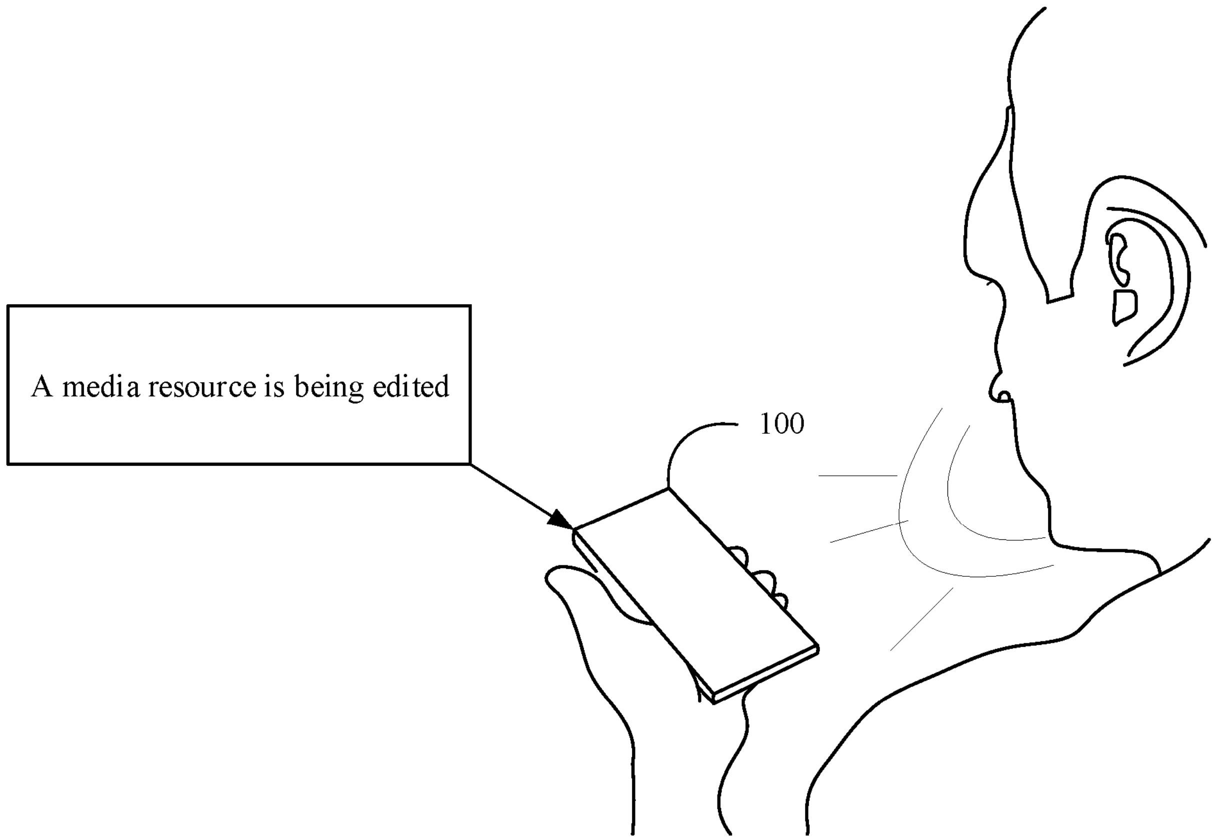


FIG. 1

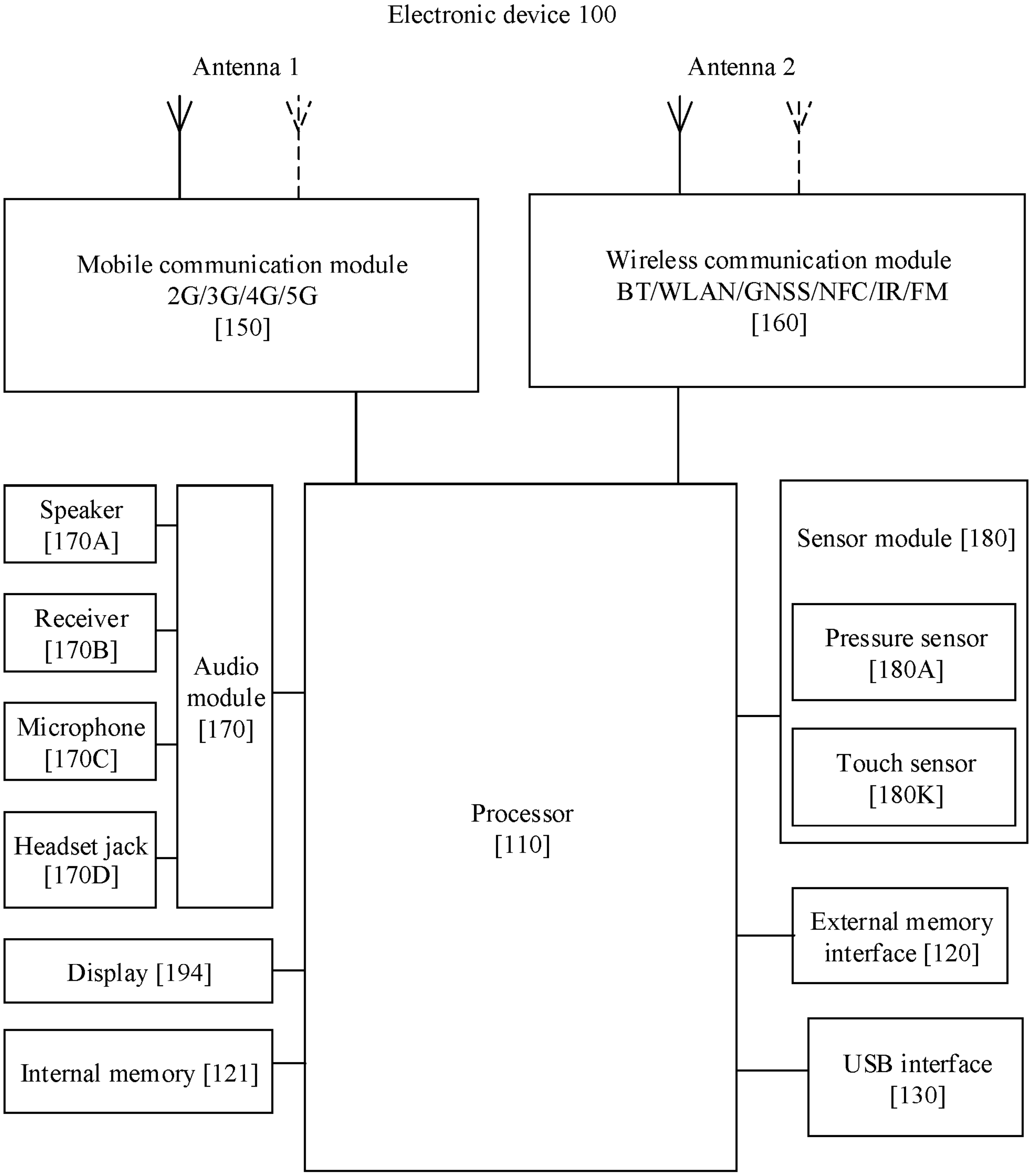
Electronic device 100
Antenna 1
Antenna 2
Mobile communication module
2G/3G/4G/5G
[150]
Wireless communication module
BT/WLAN/GNSS/NFC/IR/FM
[160]
Speaker
[170A]
Receiver
[170B]
Microphone
[170C]
Headset jack
[170D]
Audio module
[170]
Display [194]
Internal memory [121]
Processor
[110]
Sensor module [180]
Pressure sensor
[180A]
Touch sensor
[180K]
External memory interface [120]
USB interface
[130]

FIG. 2

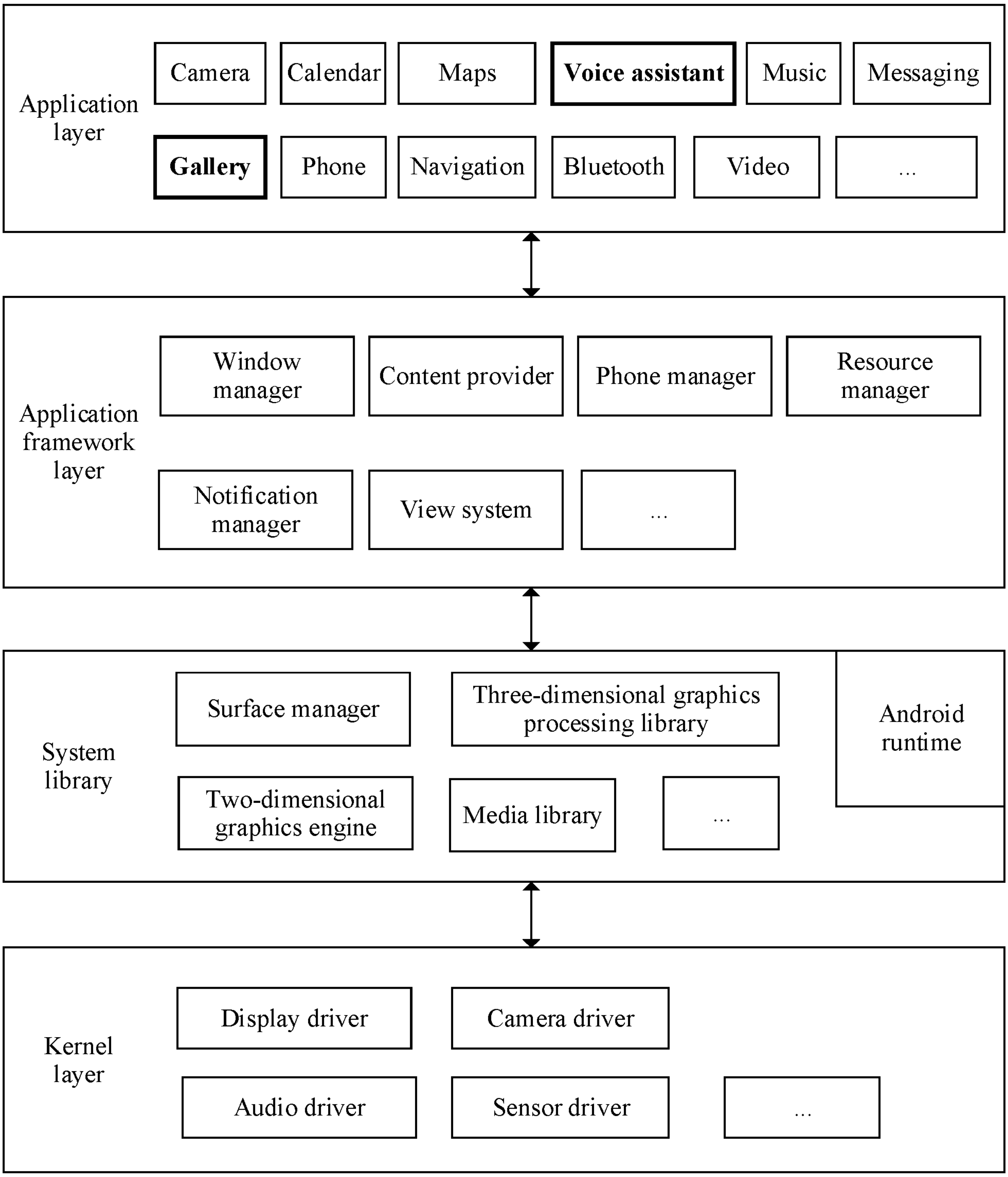
Application layer
Camera
Calendar
Maps
Voice assistant
Music
Messaging
Gallery
Phone
Navigation
Bluetooth
Video
...
Application framework layer
Window manager
Content provider
Phone manager
Resource manager
Notification manager
View system
...
System library
Surface manager
Three-dimensional graphics processing library
Android runtime
Two-dimensional graphics engine
Media library
...
Kernel layer
Display driver
Camera driver
Audio driver
Sensor driver
...

FIG. 3

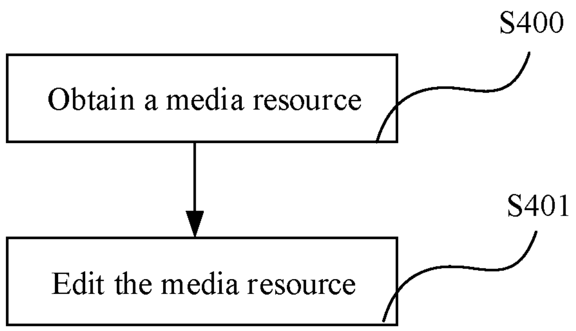


FIG. 4

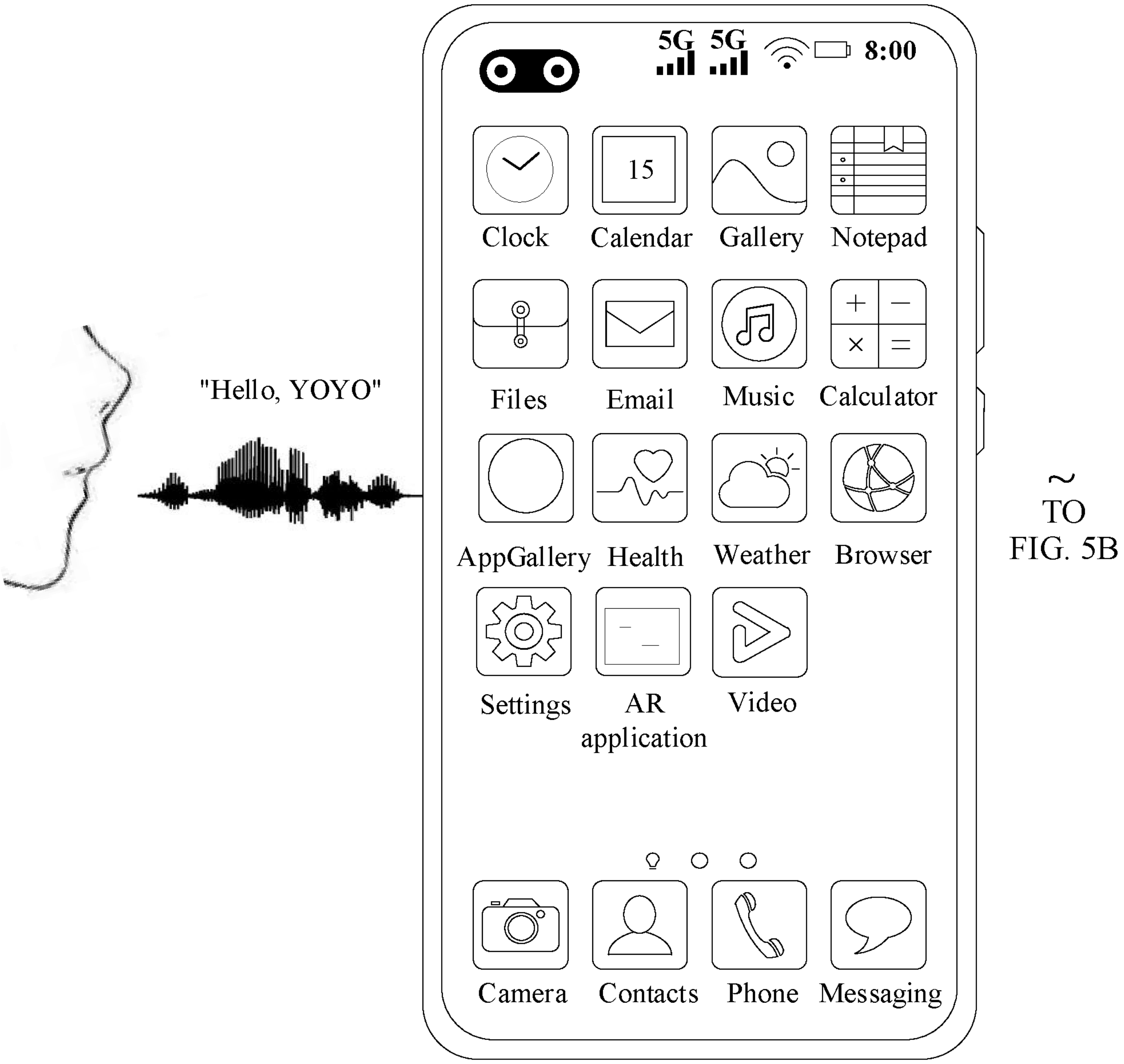
"Hello, YOYO"
5G 5G
8:00
15
Clock
Calendar
Gallery
Notepad
Files
Email
Music
Calculator
AppGallery
Health
Weather
Browser
Settings
AR application
Video
Camera
Contacts
Phone
Messaging
~ TO FIG. 5B

FIG. 5A

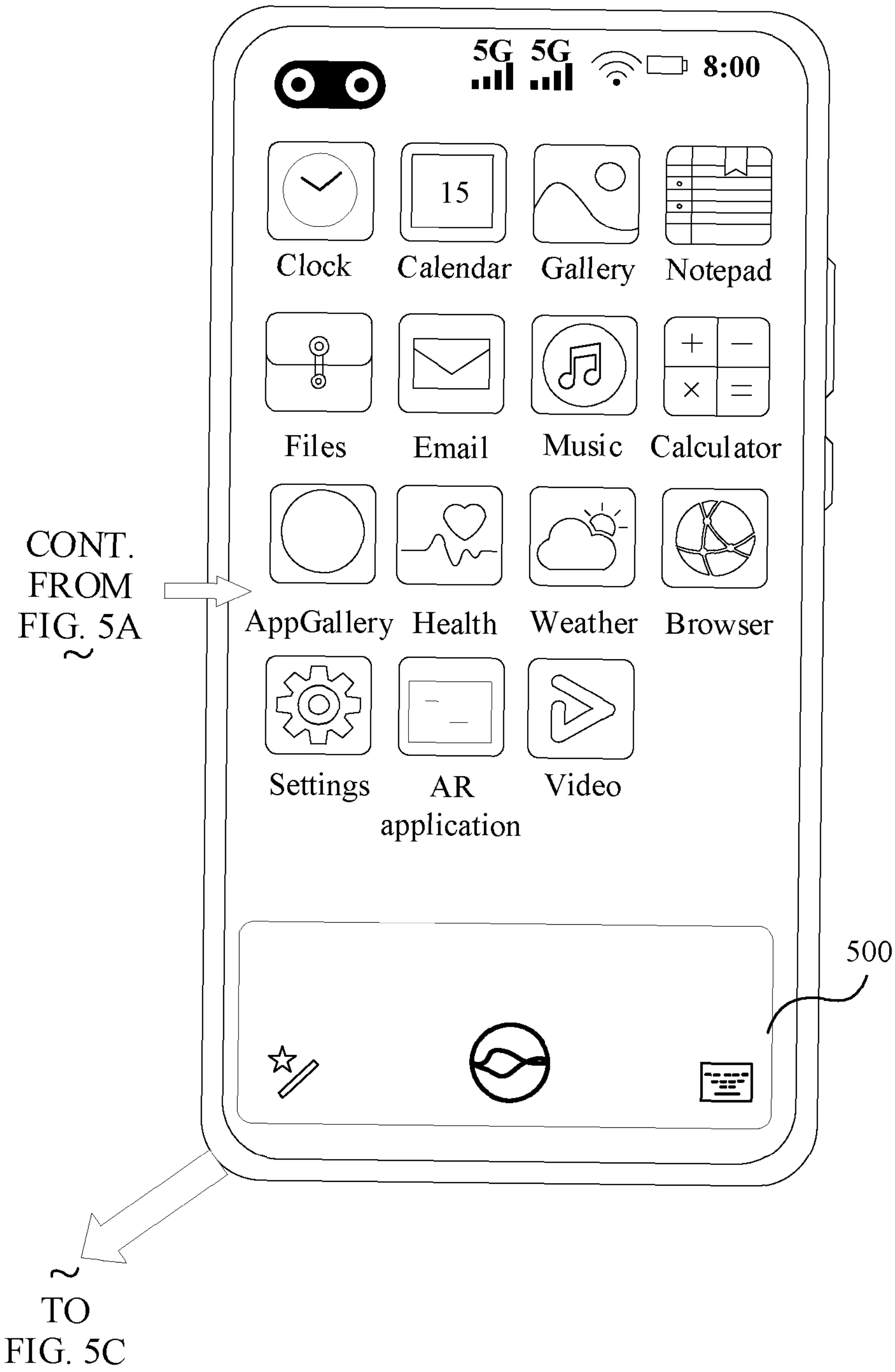
5G 5G
8:00
15
Clock
Calendar
Gallery
Notepad
Files
Email
Music
Calculator
CONT. FROM FIG. 5A
AppGallery
Health
Weather
Browser
Settings
AR application
Video
500
TO FIG. 5C

FIG. 5B

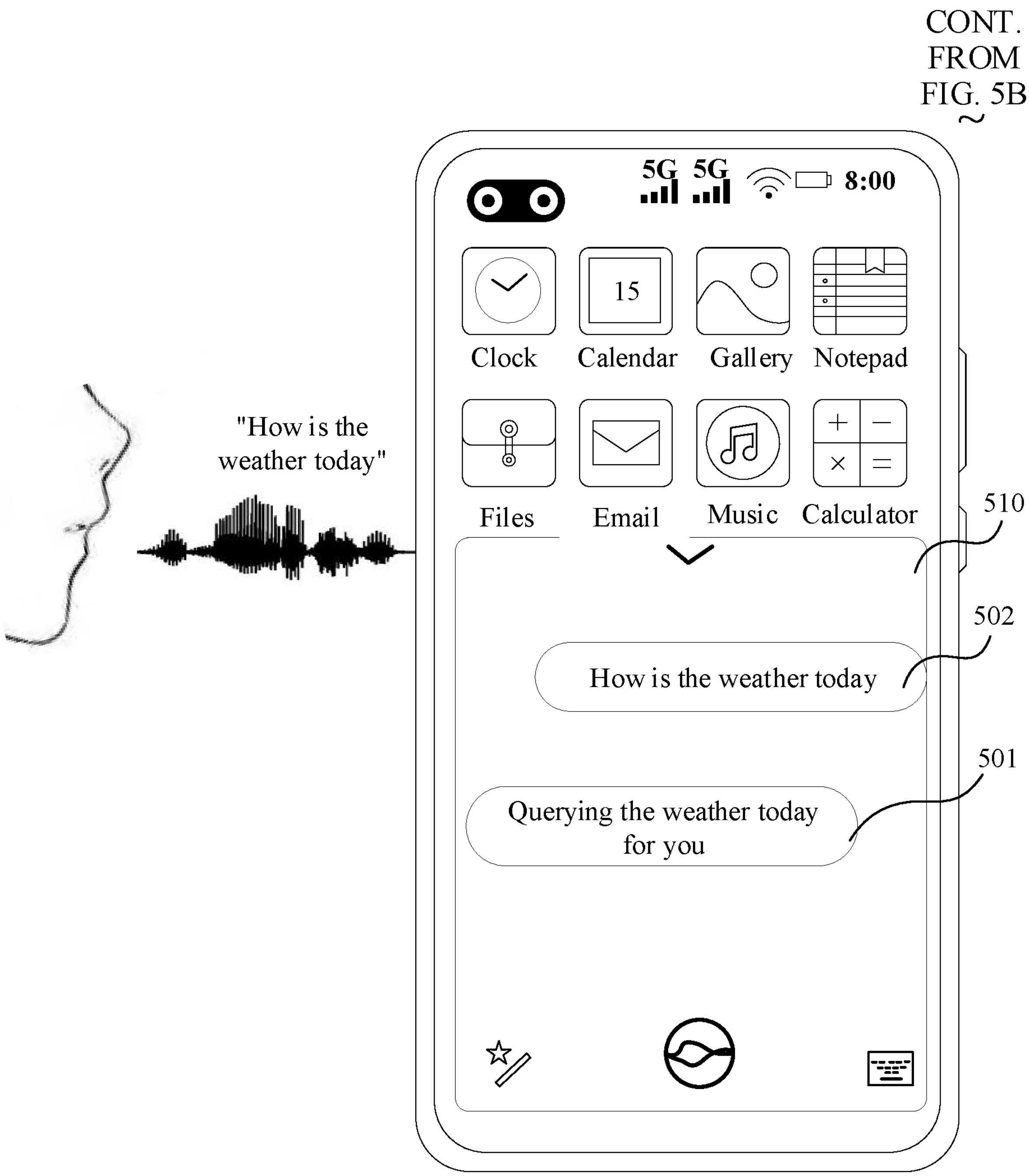
CONT.
FROM
FIG. 5B
"How is the weather today"
5G
5G
8:00
15
Clock
Calendar
Gallery
Notepad
Files
Email
Music
Calculator
510
502
How is the weather today
501
Querying the weather today for you

FIG. 5C

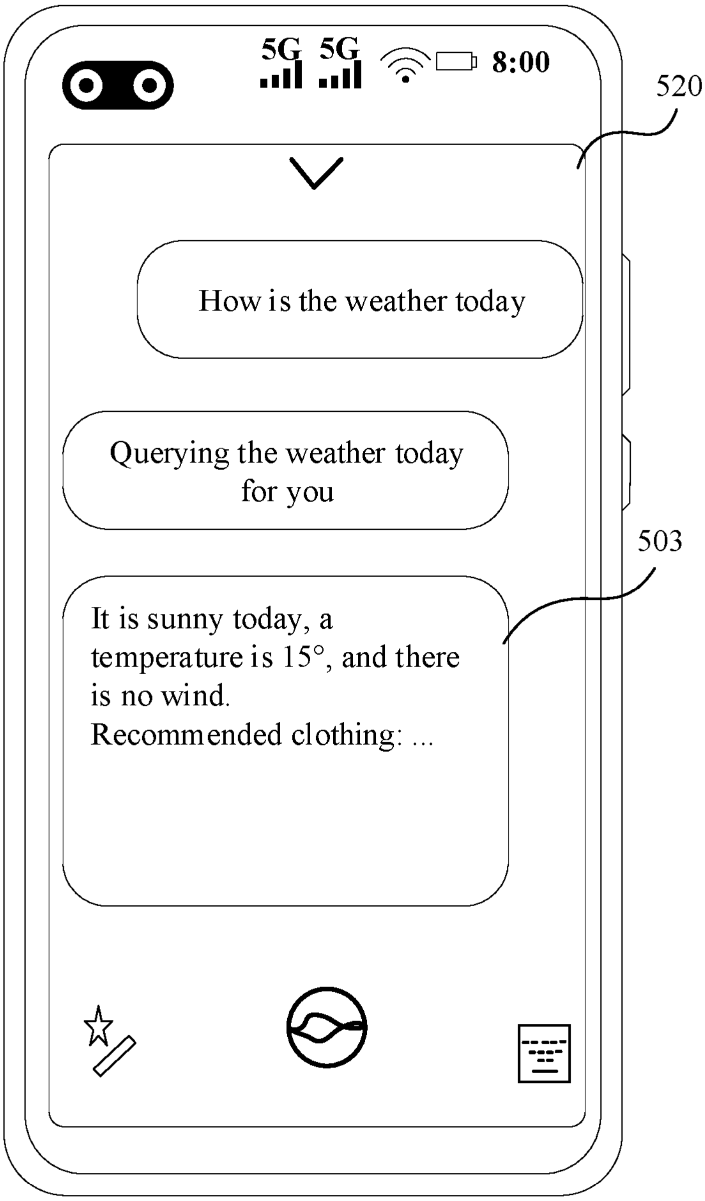
5G
5G
8:00
520
How is the weather today
Querying the weather today for you
503
It is sunny today, a temperature is 15°, and there is no wind.
Recommended clothing: ...

FIG. 5D

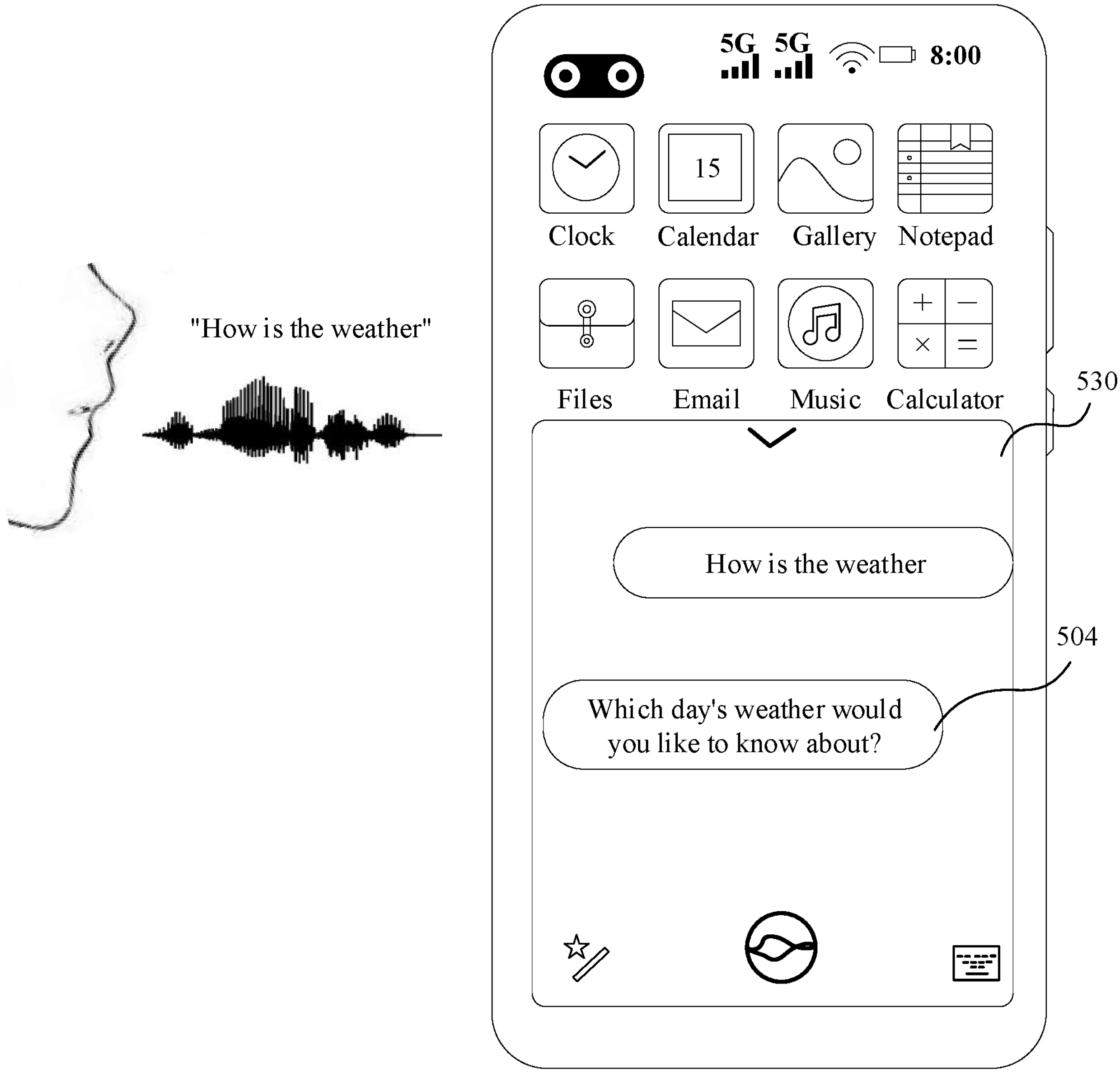
"How is the weather"
5G
5G
8:00
15
Clock
Calendar
Gallery
Notepad
Files
Email
Music
Calculator
530
How is the weather
504
Which day's weather would you like to know about?

FIG. 5E

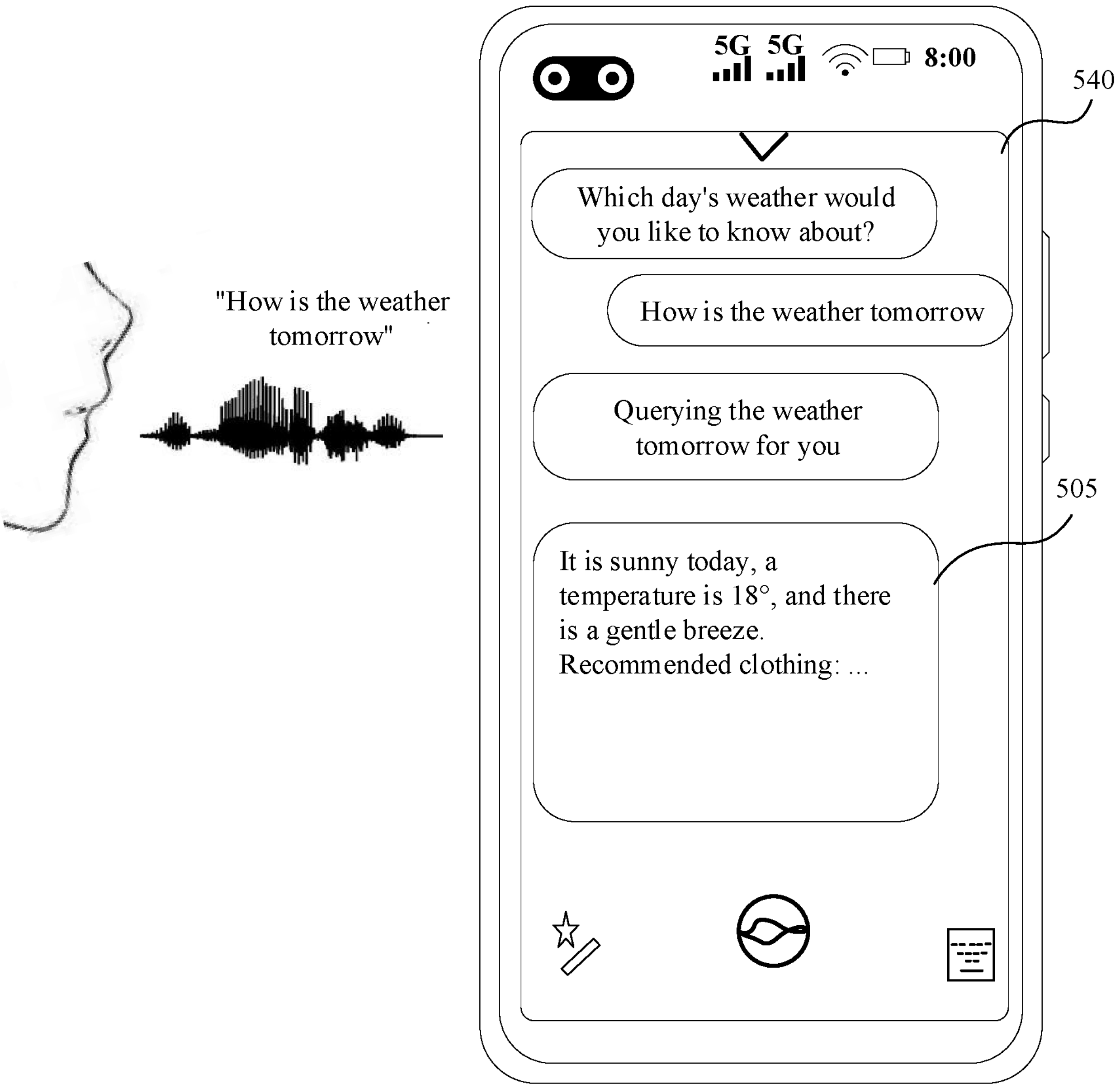
"How is the weather
tomorrow"
5G 5G
8:00
540
Which day's weather would
you like to know about?
How is the weather tomorrow
Querying the weather
tomorrow for you
505
It is sunny today, a
temperature is 18°, and there
is a gentle breeze.
Recommended clothing: ...

FIG. 5F

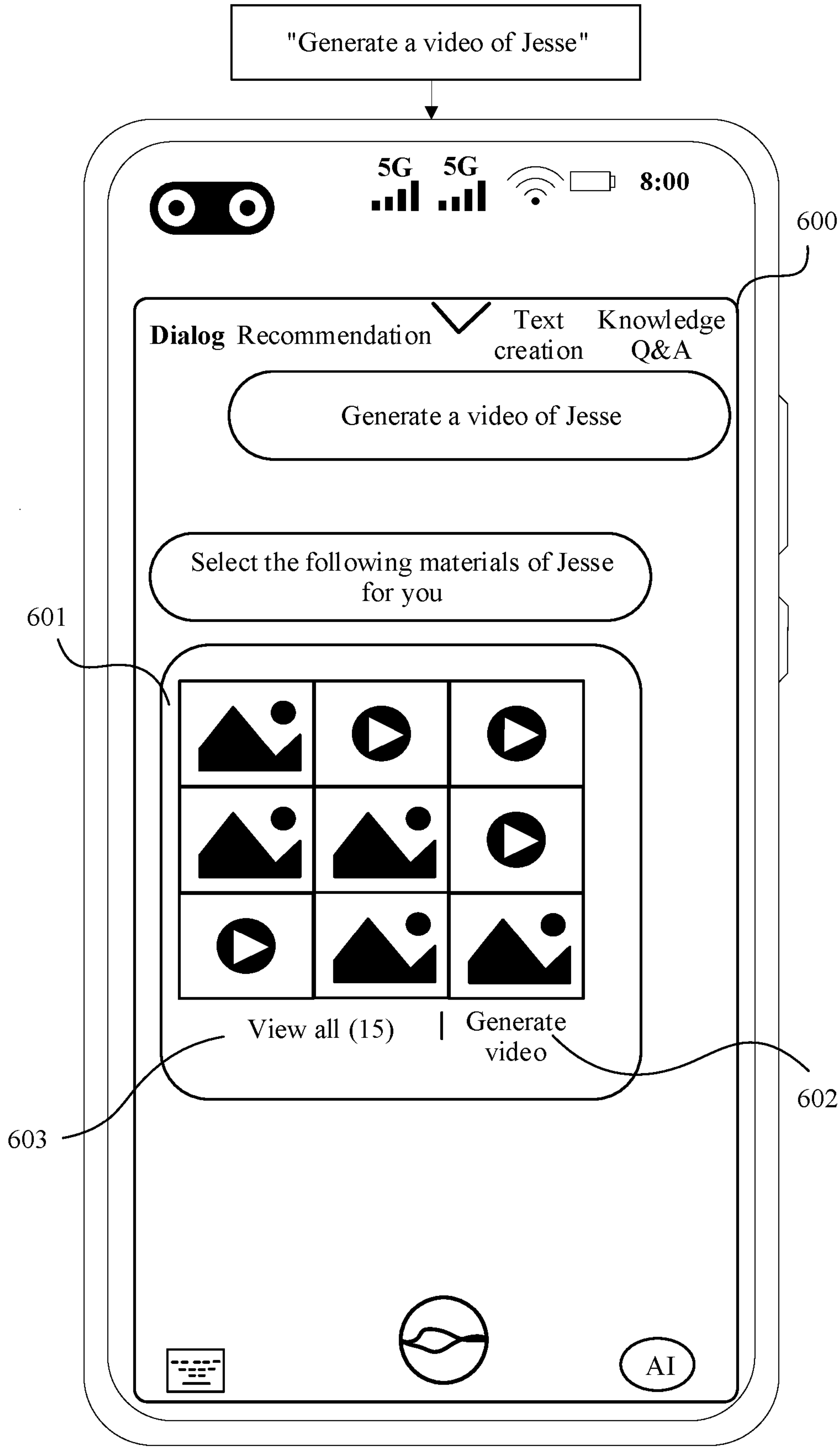

"Generate a video of Jesse"
5G
5G
8:00
600
Dialog
Recommendation
Text creation
Knowledge Q&A
Generate a video of Jesse
Select the following materials of Jesse for you
601
View all (15)
Generate video
602
603
AI


FIG. 6A

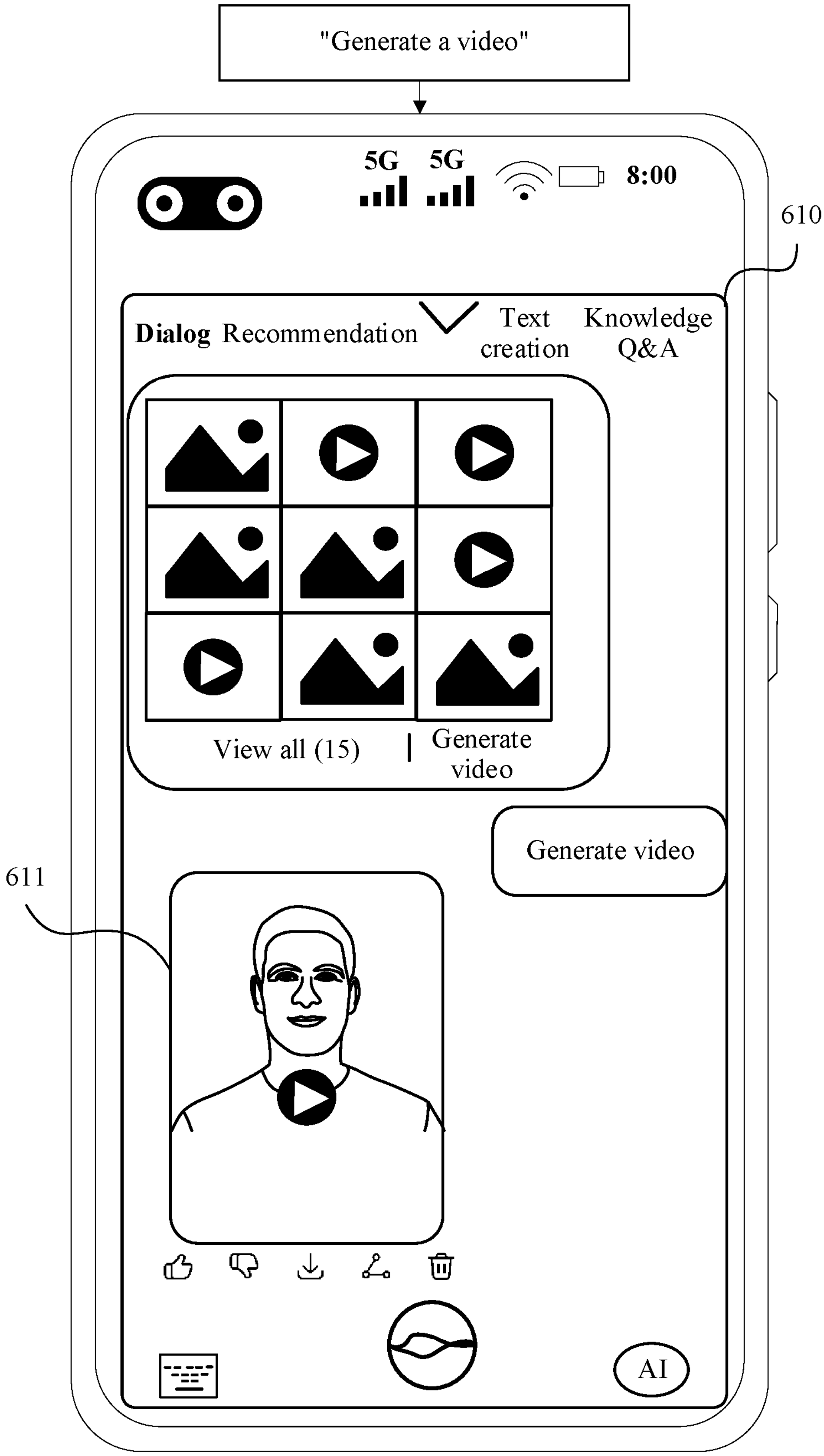
"Generate a video"
5G
5G
8:00
610
Dialog
Recommendation
Text creation
Knowledge Q&A
View all (15)
Generate video
Generate video
611
AI

FIG. 6B

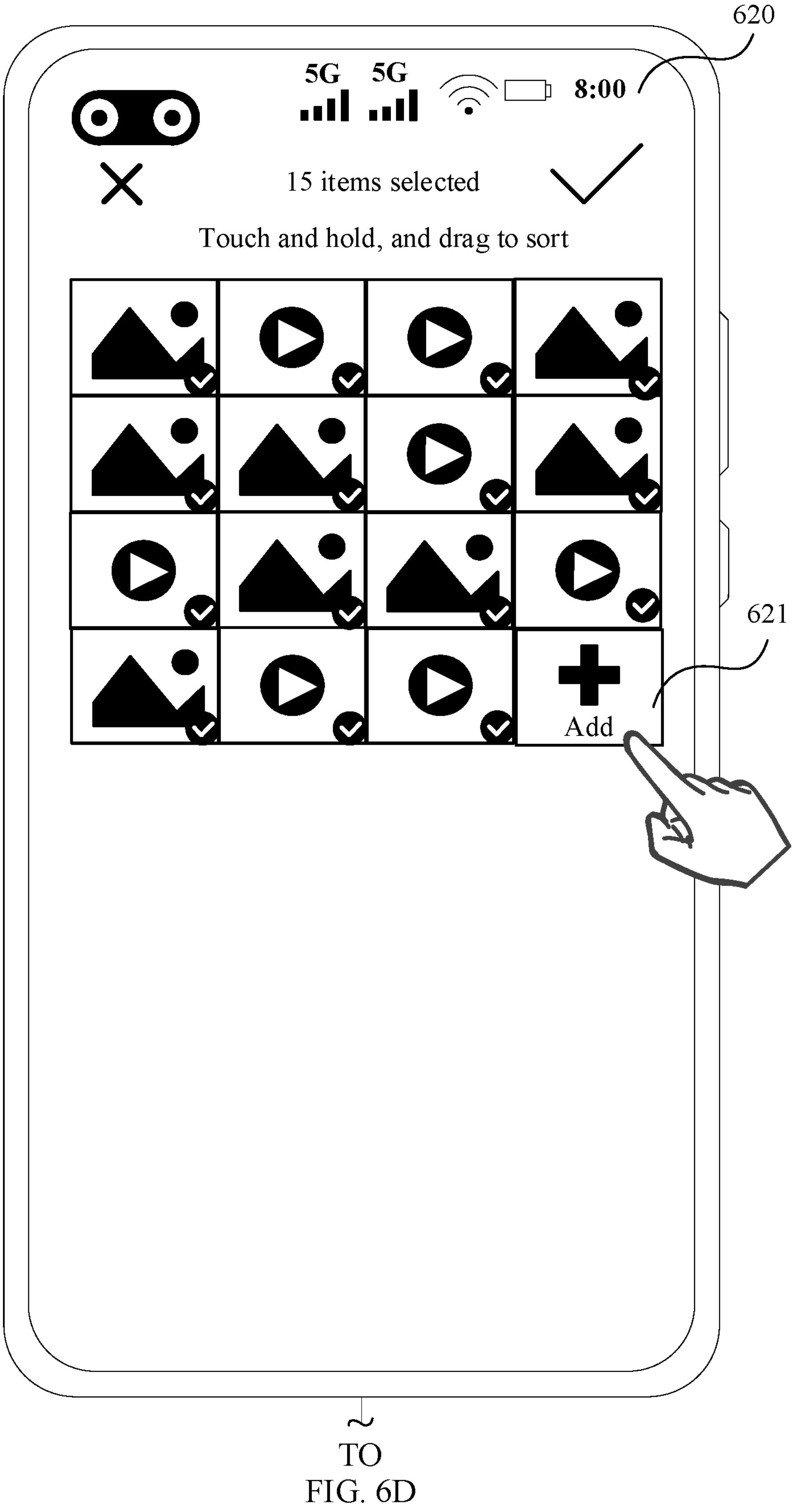
620
5G
5G
8:00
15 items selected
Touch and hold, and drag to sort
621
Add
TO
FIG. 6D

FIG. 6C

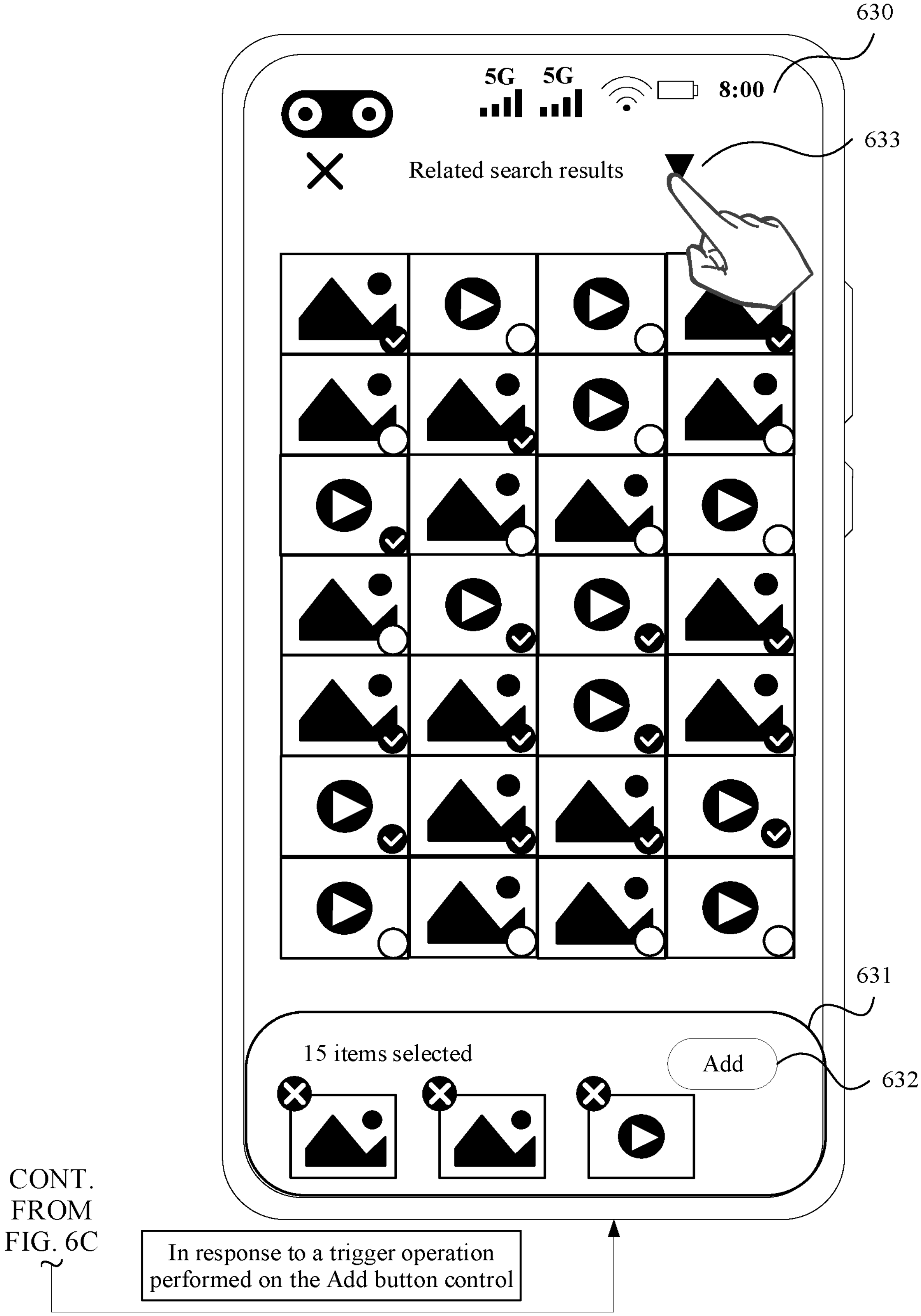
630
5G
5G
8:00
633
Related search results
631
15 items selected
Add
632
CONT. FROM FIG. 6C
In response to a trigger operation performed on the Add button control

FIG. 6D

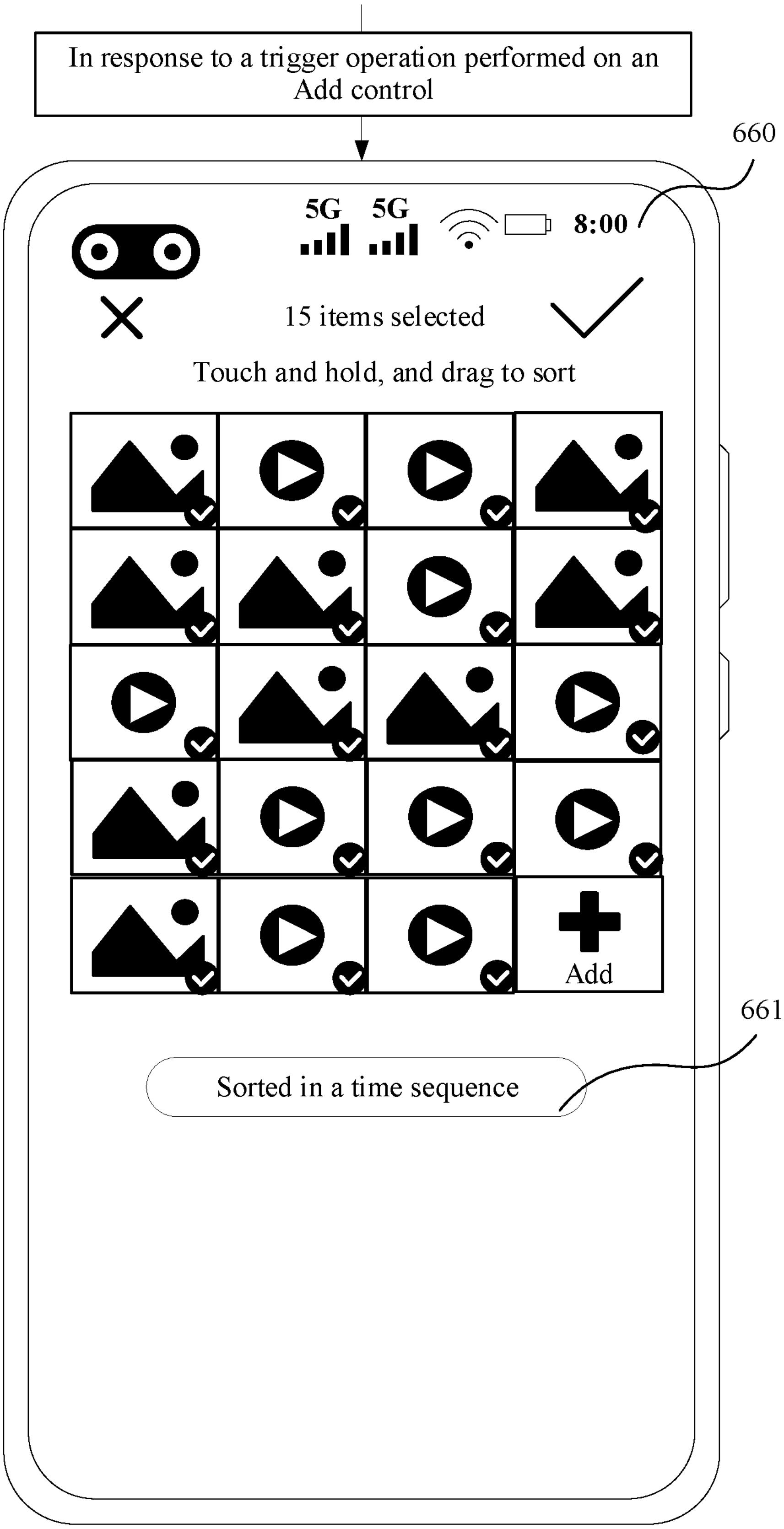
In response to a trigger operation performed on an Add control
660
5G 5G
8:00
15 items selected
Touch and hold, and drag to sort
Add
661
Sorted in a time sequence

FIG. 6E

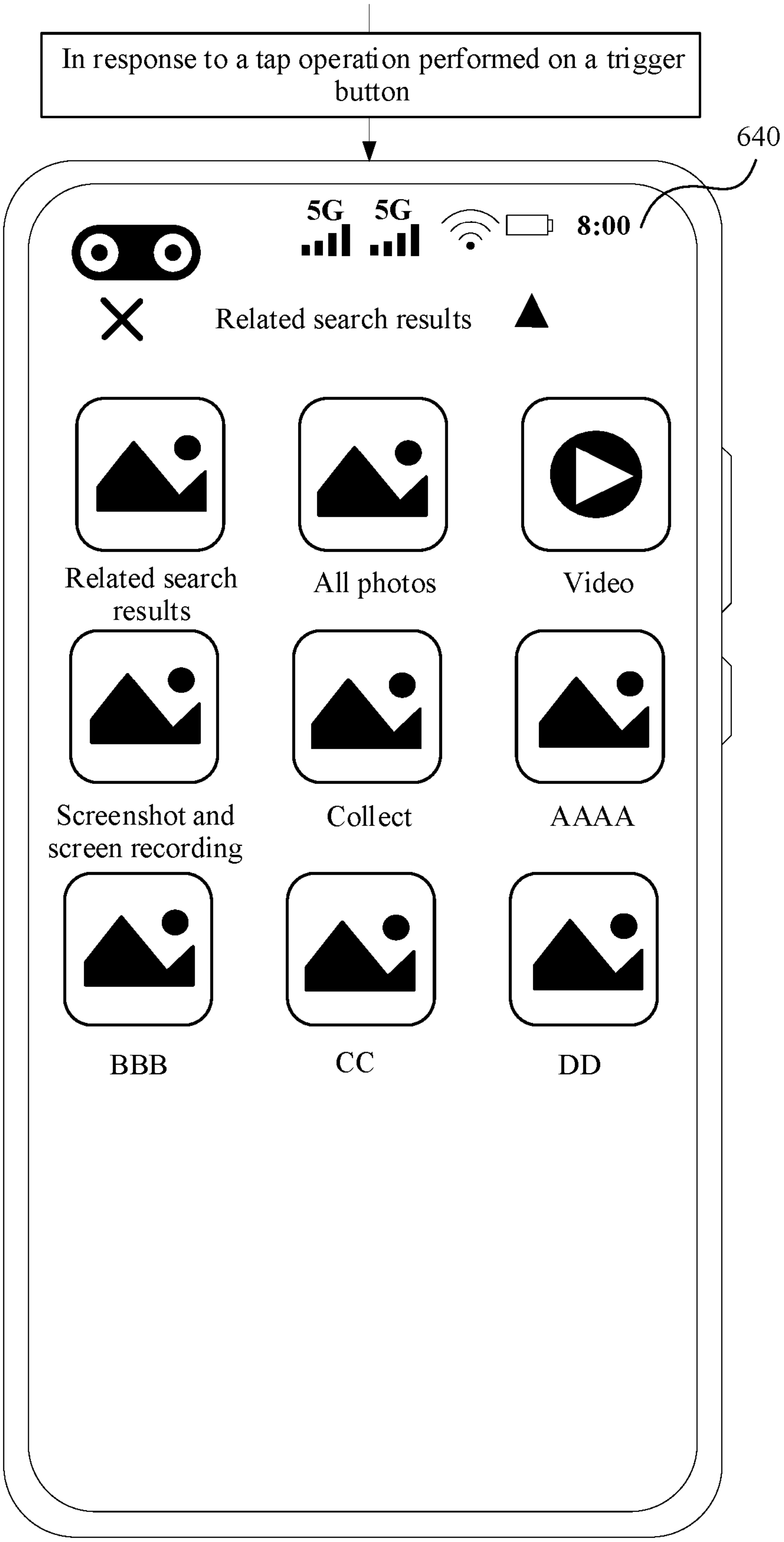
In response to a tap operation performed on a trigger button
640
5G
5G
8:00
Related search results
Related search results
All photos
Video
Screenshot and screen recording
Collect
AAAA
BBB
CC
DD

FIG. 6F

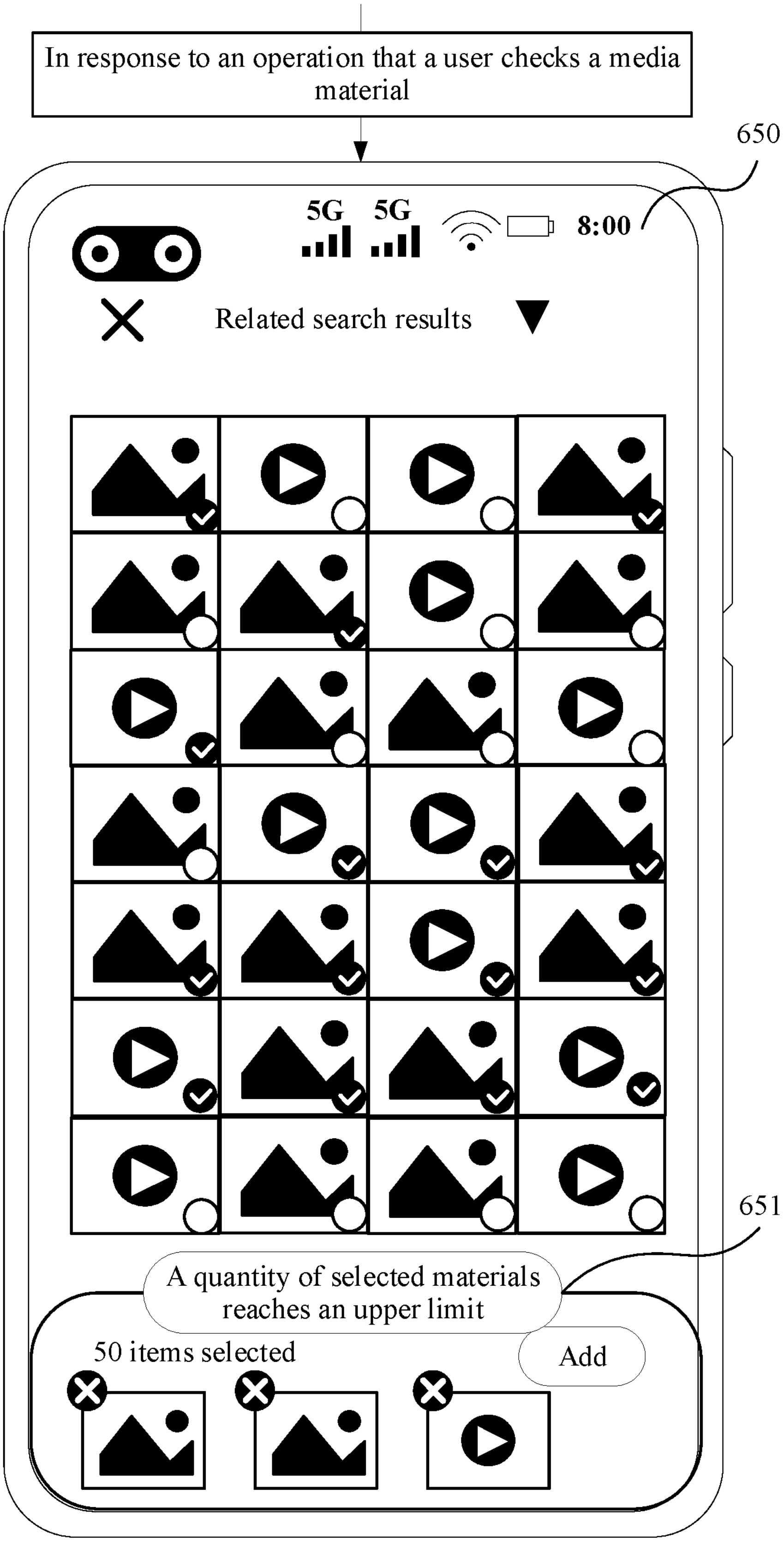
In response to an operation that a user checks a media material
650
5G 5G
8:00
Related search results
651
A quantity of selected materials reaches an upper limit
50 items selected
Add

FIG. 6G

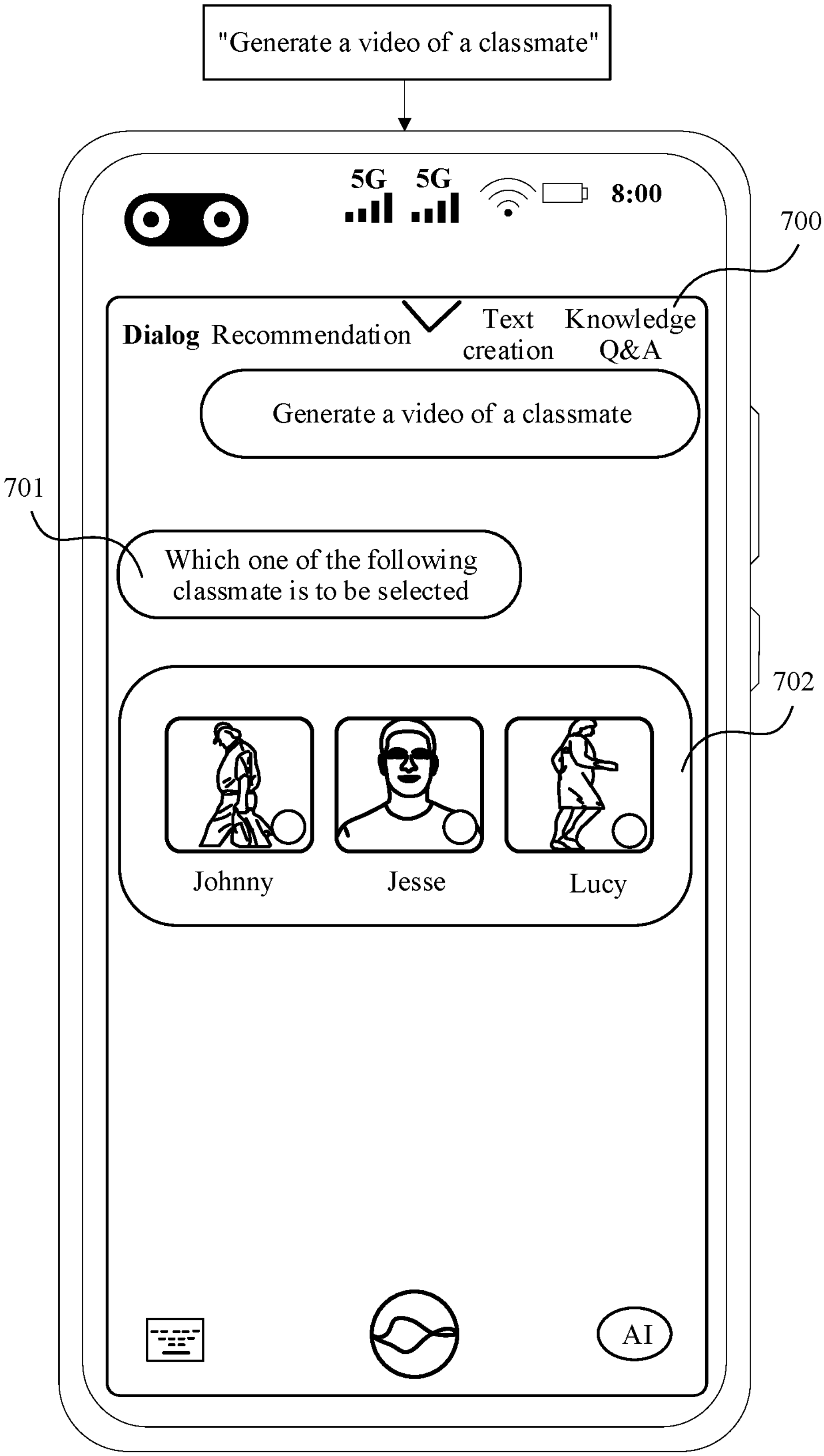
"Generate a video of a classmate"
5G 5G 8:00
700
Dialog Recommendation Text creation Knowledge Q&A
Generate a video of a classmate
701
Which one of the following classmate is to be selected
702
Johnny
Jesse
Lucy
AI

FIG. 7A

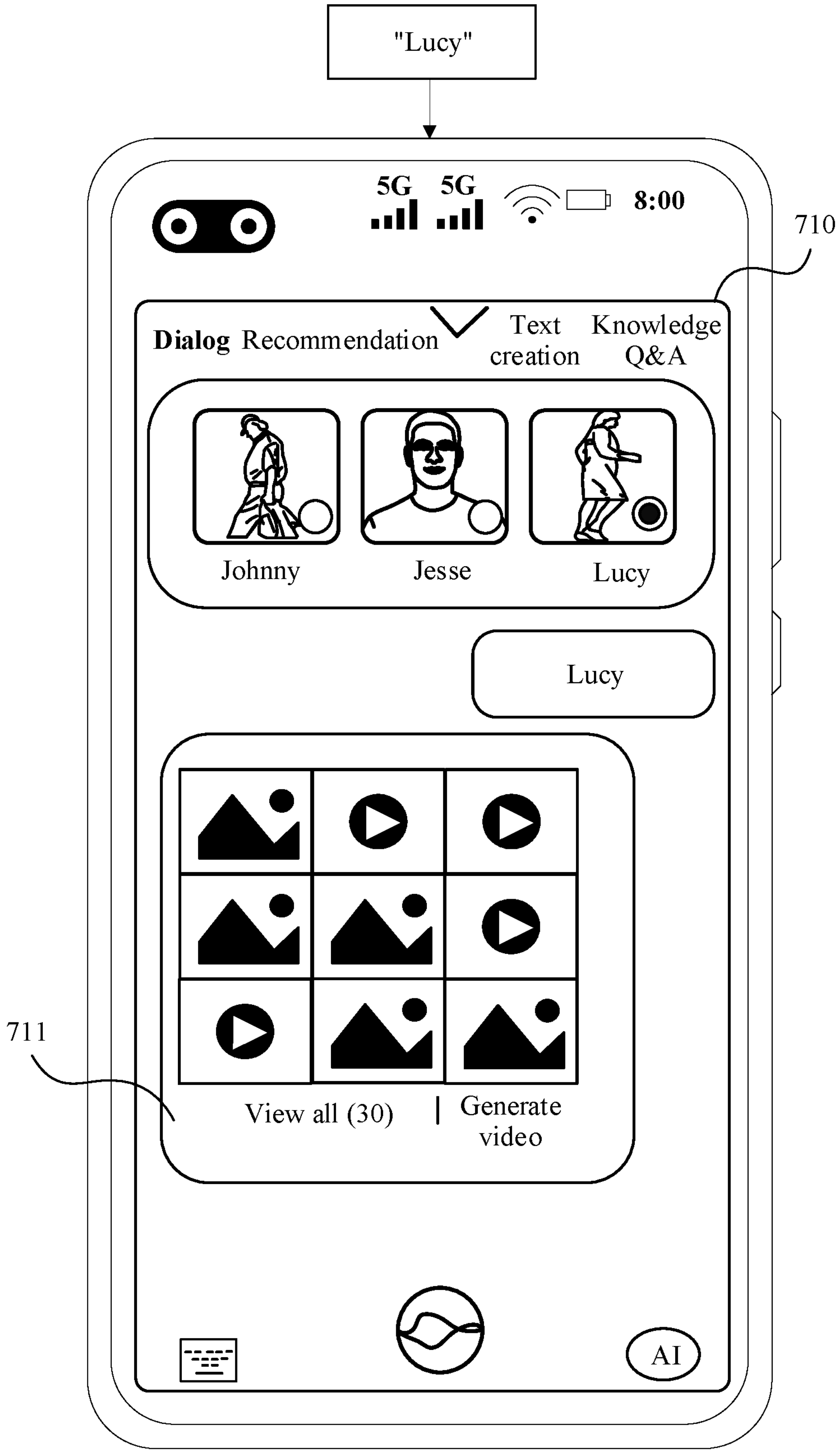
"Lucy"
5G 5G
8:00
710
Dialog Recommendation
Text creation
Knowledge Q&A
Johnny
Jesse
Lucy
Lucy
711
View all (30)
Generate video
AI

FIG. 7B

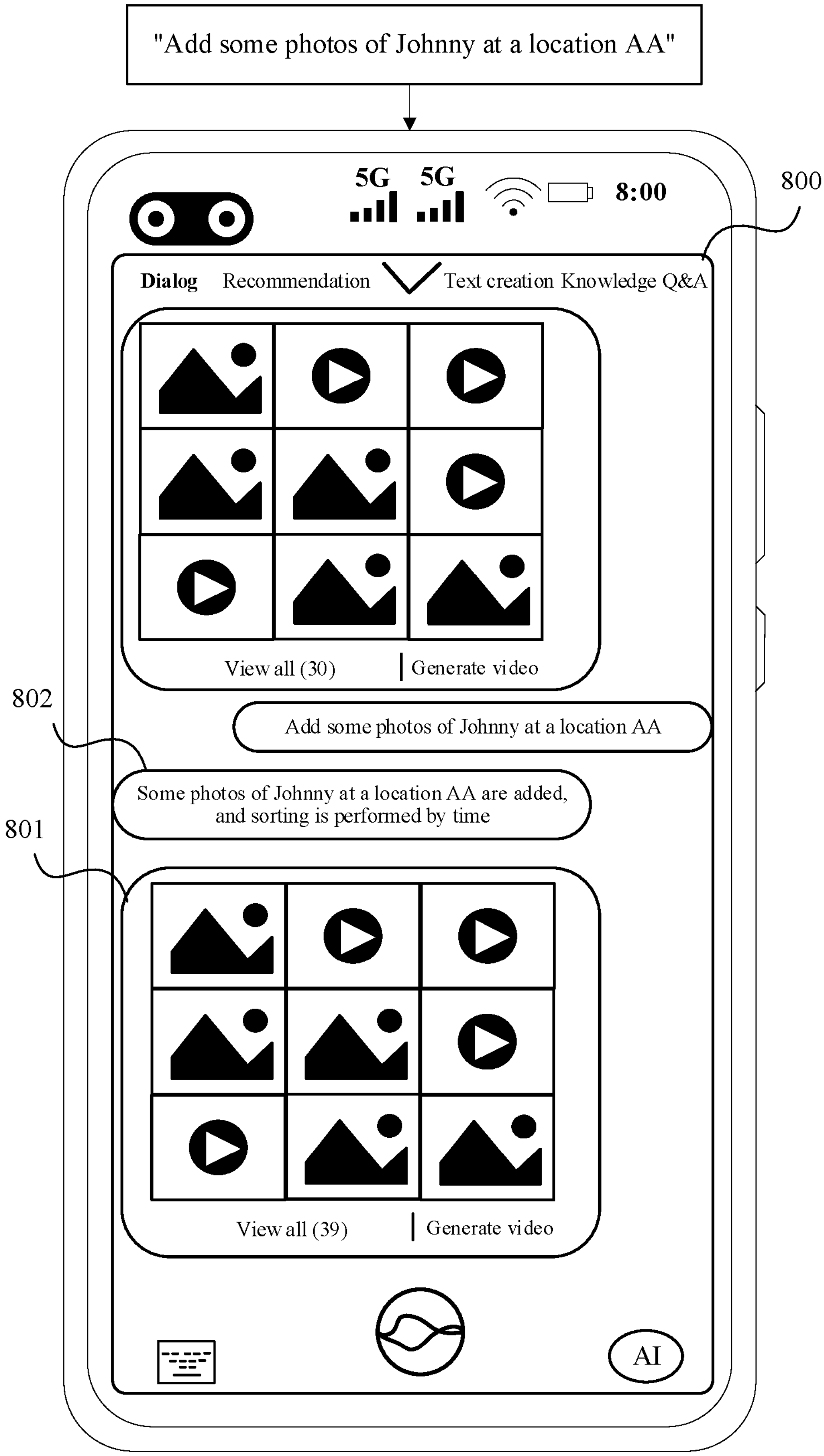
"Add some photos of Johnny at a location AA"
800
5G
5G
8:00
Dialog
Recommendation
Text creation
Knowledge Q&A
View all (30)
Generate video
802
Add some photos of Johnny at a location AA
Some photos of Johnny at a location AA are added, and sorting is performed by time
801
View all (39)
Generate video
AI

FIG. 8A

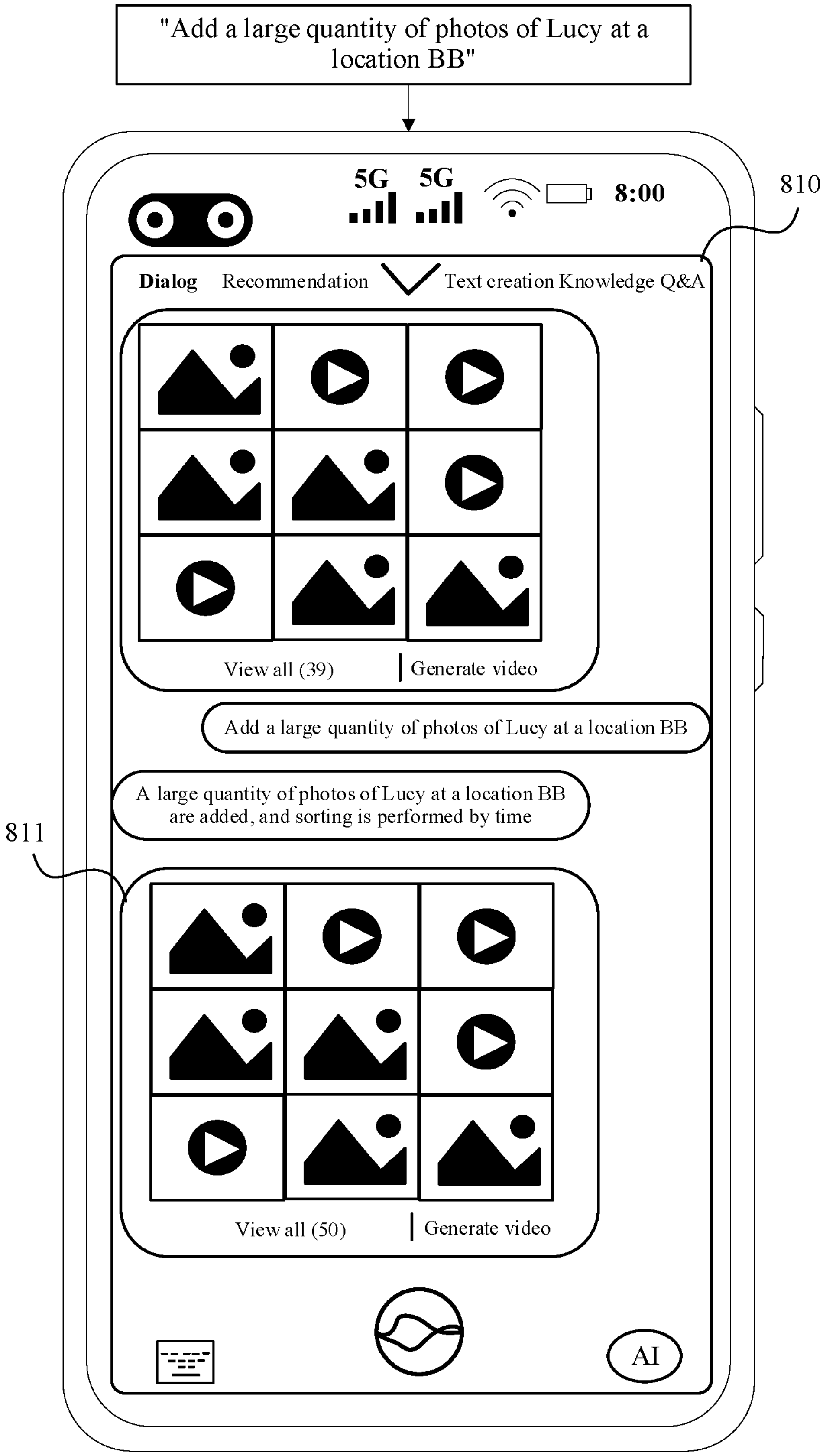
"Add a large quantity of photos of Lucy at a location BB"
810
5G
5G
8:00
Dialog
Recommendation
Text creation
Knowledge Q&A
View all (39)
Generate video
Add a large quantity of photos of Lucy at a location BB
A large quantity of photos of Lucy at a location BB are added, and sorting is performed by time
811
View all (50)
Generate video
AI

FIG. 8B

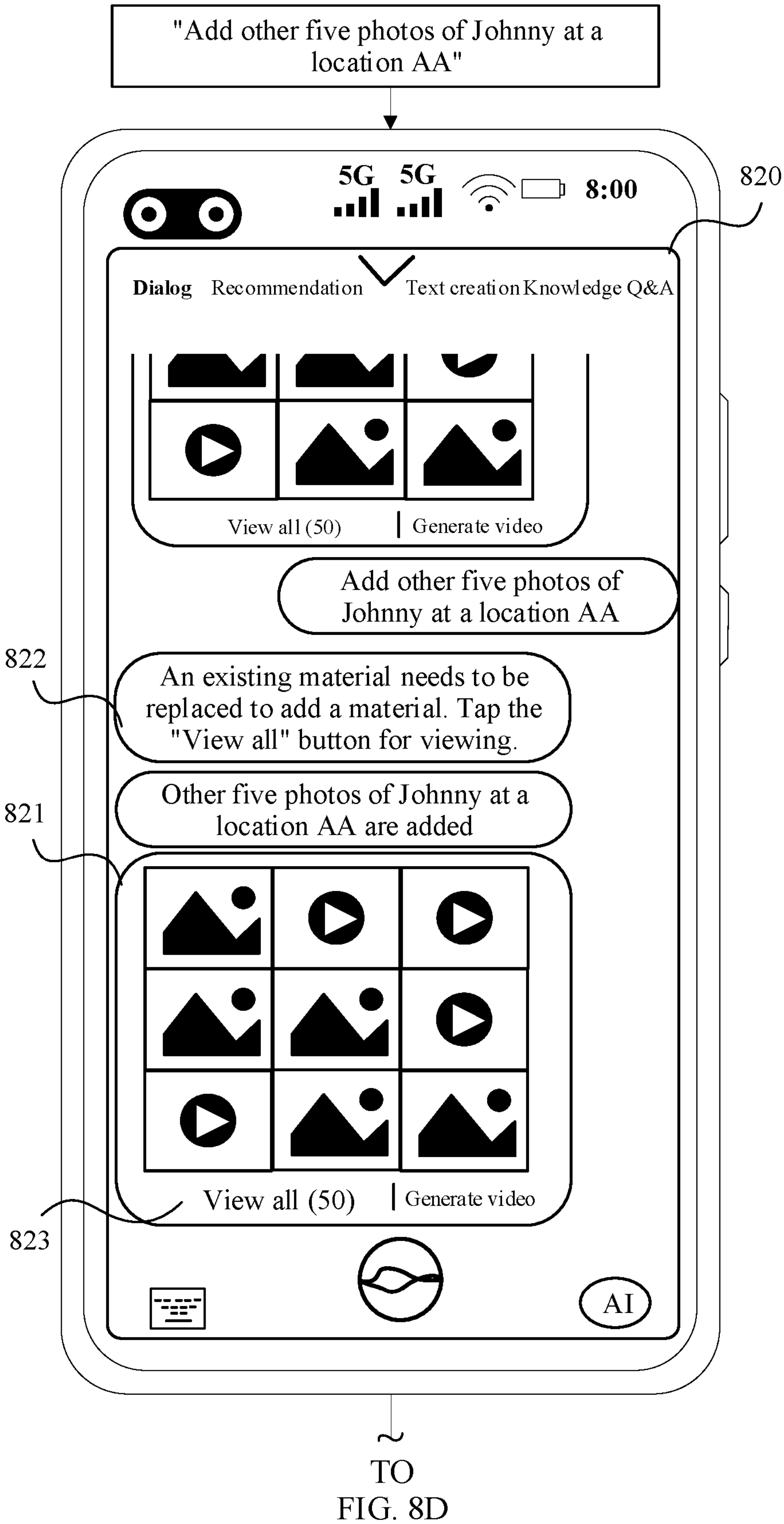
"Add other five photos of Johnny at a location AA"
820
5G 5G
8:00
Dialog
Recommendation
Text creation
Knowledge Q&A
View all (50)
Generate video
Add other five photos of Johnny at a location AA
822
An existing material needs to be replaced to add a material. Tap the "View all" button for viewing.
821
Other five photos of Johnny at a location AA are added
View all (50)
Generate video
823
AI
TO
FIG. 8D

FIG. 8C

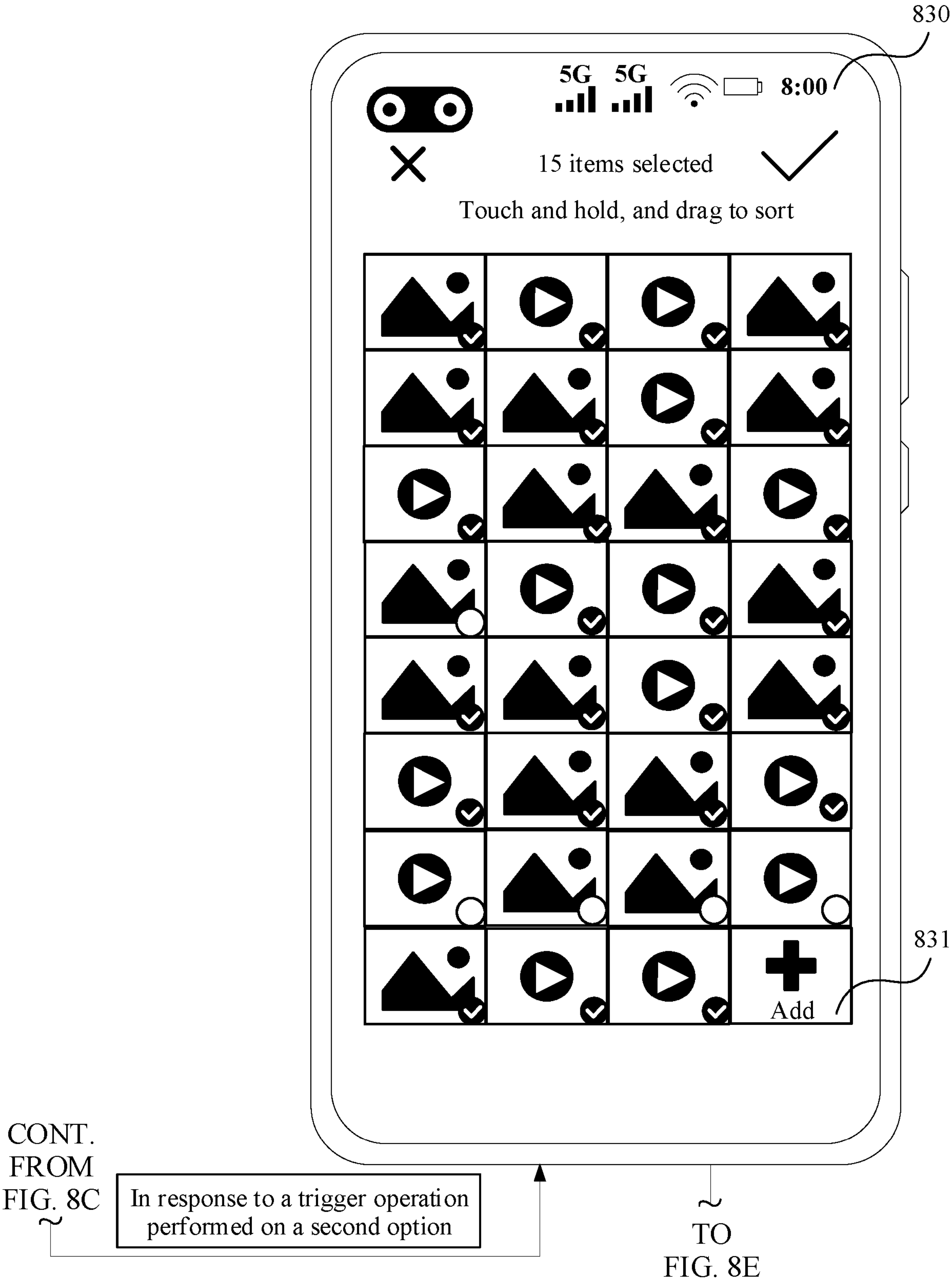
830
5G 5G
8:00
15 items selected
Touch and hold, and drag to sort
Add
831
CONT. FROM FIG. 8C
In response to a trigger operation performed on a second option
TO FIG. 8E

FIG. 8D

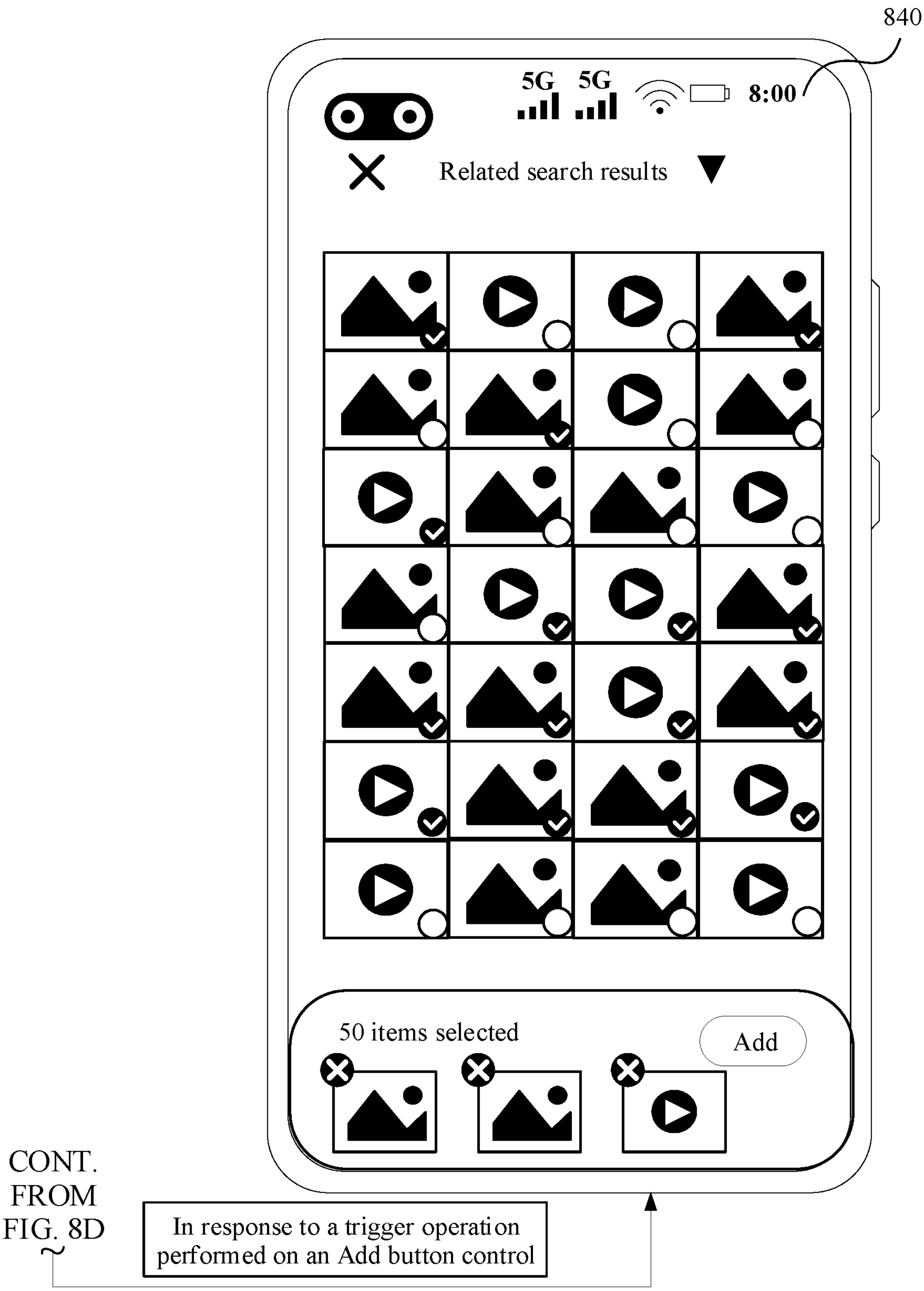
840
5G
5G
8:00
Related search results
50 items selected
Add
CONT.
FROM
FIG. 8D
In response to a trigger operation performed on an Add button control

FIG. 8E

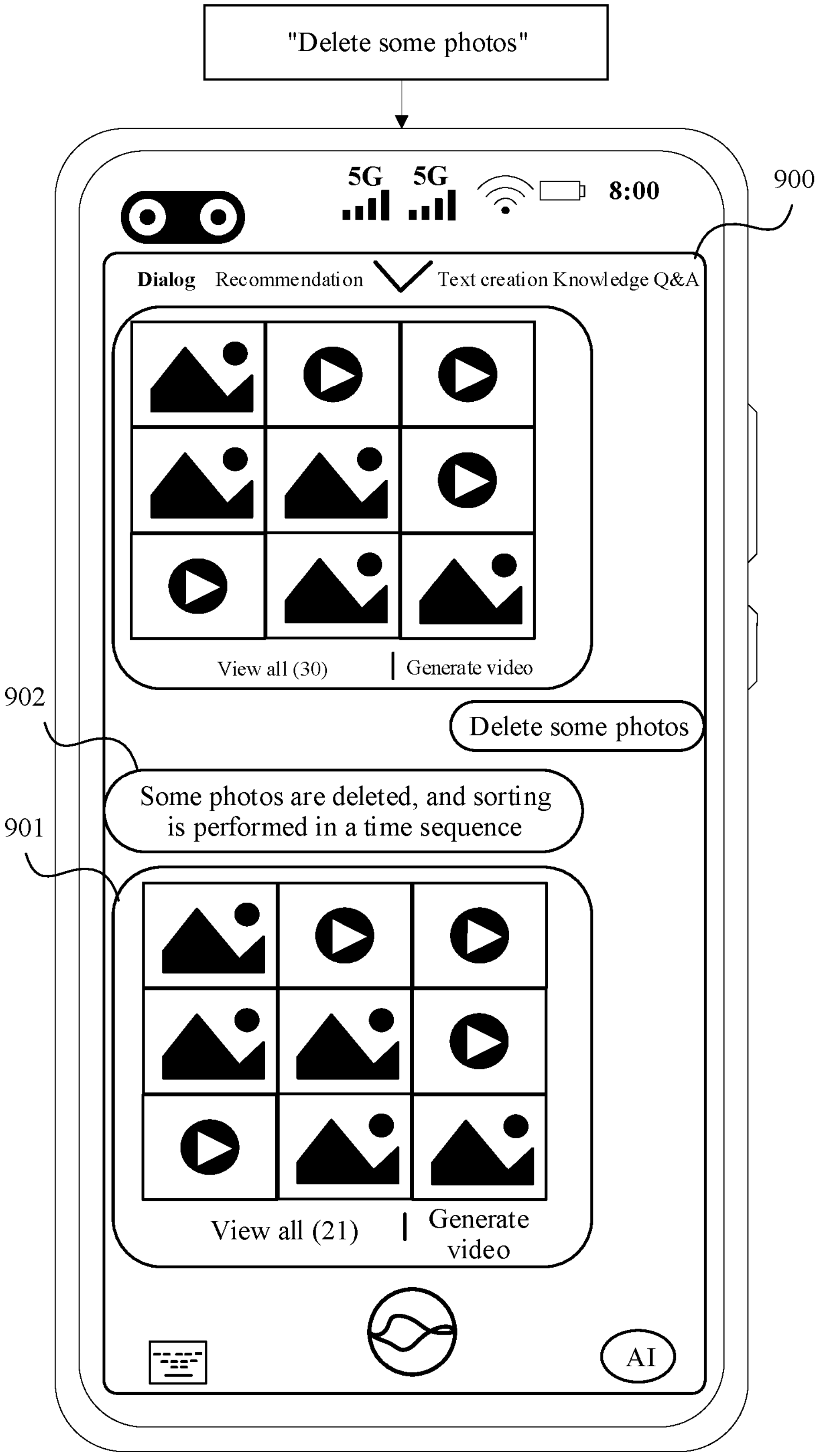
"Delete some photos"
5G
5G
8:00
900
Dialog
Recommendation
Text creation
Knowledge Q&A
View all (30)
Generate video
902
Delete some photos
Some photos are deleted, and sorting is performed in a time sequence
901
View all (21)
Generate video
AI

FIG. 9A

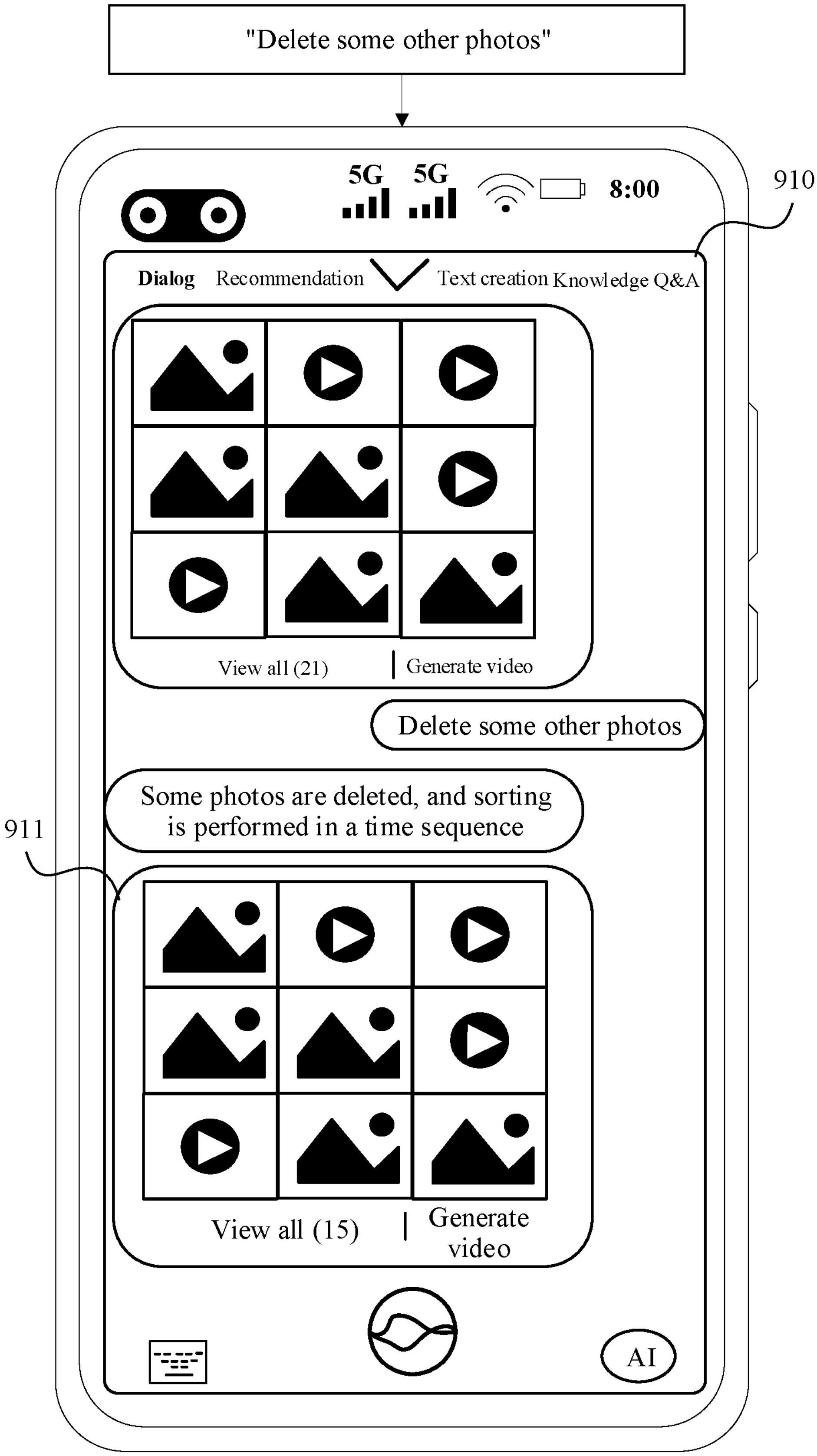
"Delete some other photos"
5G
5G
8:00
910
Dialog
Recommendation
Text creation
Knowledge Q&A
View all (21)
Generate video
Delete some other photos
Some photos are deleted, and sorting is performed in a time sequence
911
View all (15)
Generate video
AI

FIG. 9B

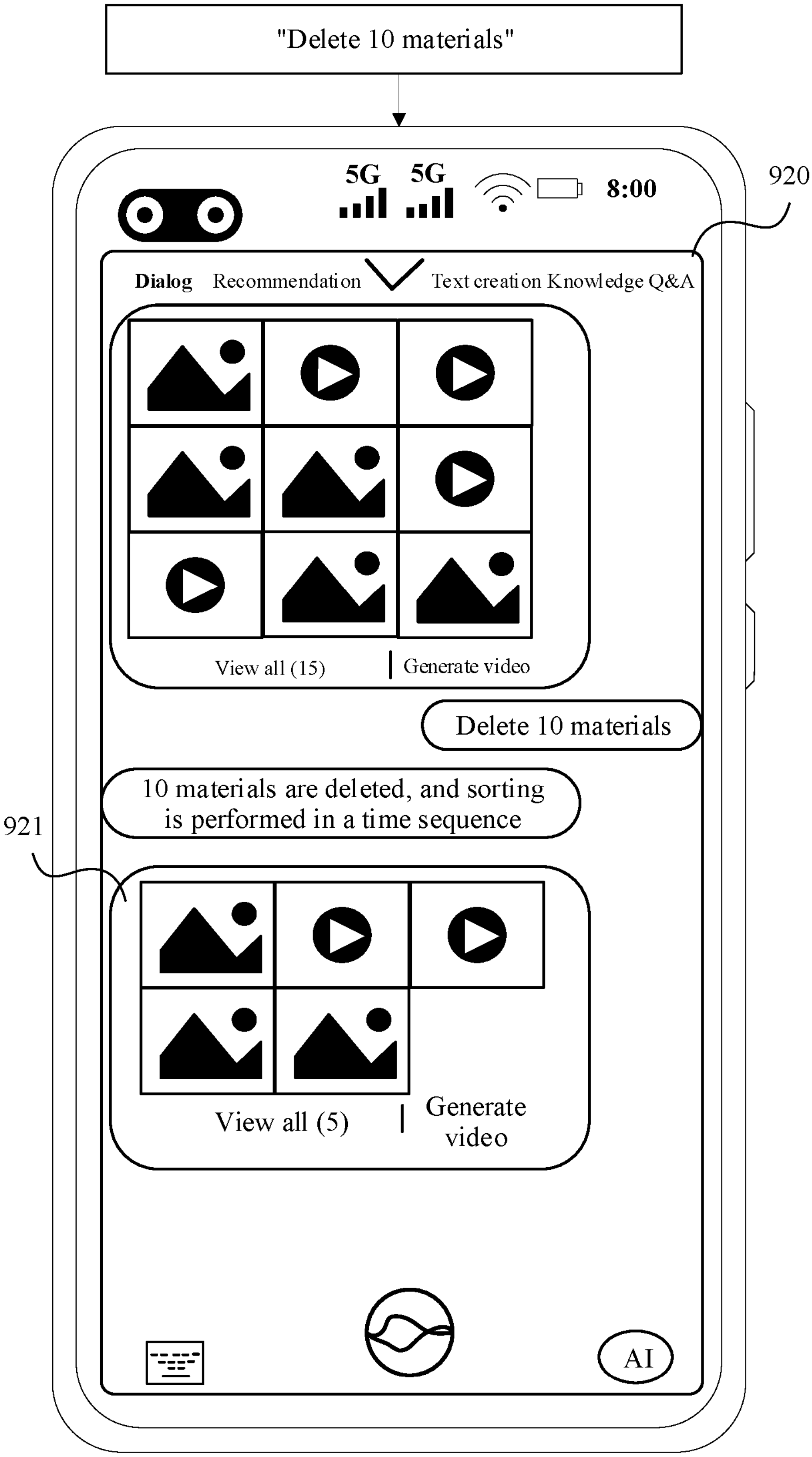
"Delete 10 materials"
920
5G
5G
8:00
Dialog
Recommendation
Text creation
Knowledge Q&A
View all (15)
Generate video
Delete 10 materials
10 materials are deleted, and sorting is performed in a time sequence
921
View all (5)
Generate video
AI

FIG. 9C

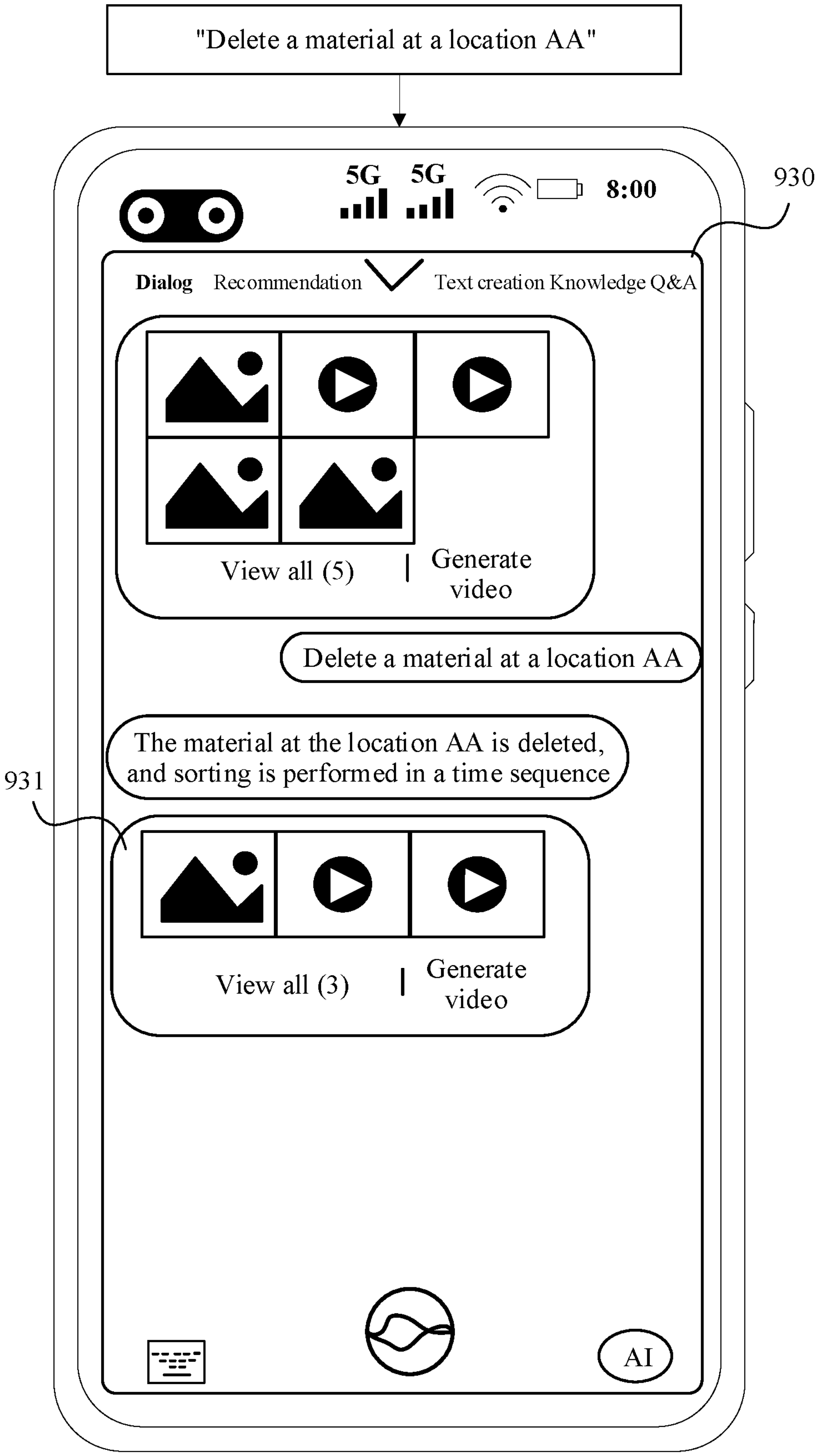
"Delete a material at a location AA"
930
5G 5G
8:00
Dialog
Recommendation
Text creation Knowledge Q&A
View all (5)
Generate video
Delete a material at a location AA
The material at the location AA is deleted, and sorting is performed in a time sequence
931
View all (3)
Generate video
AI

FIG. 9D

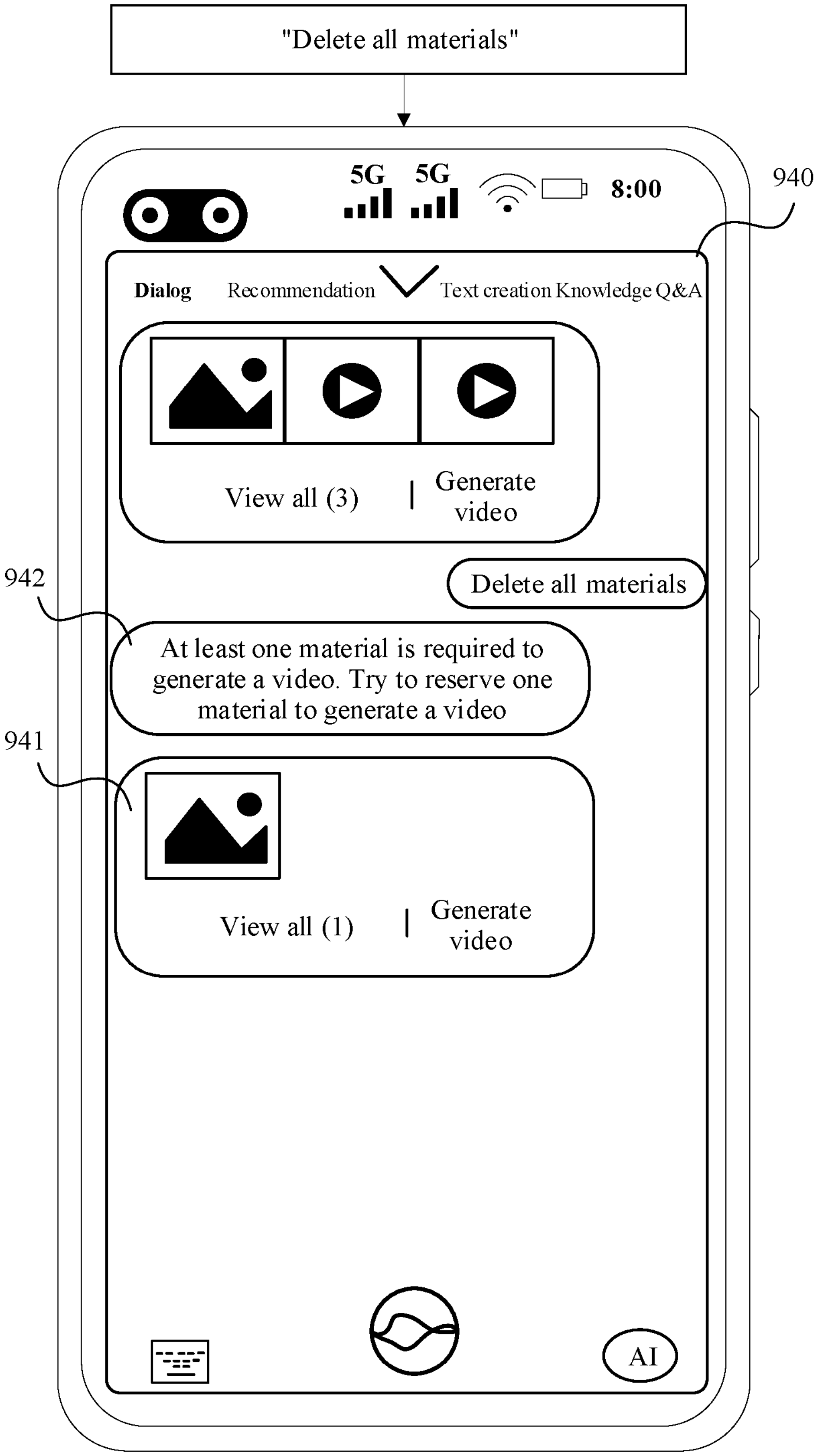
"Delete all materials"
940
5G
5G
8:00
Dialog
Recommendation
Text creation
Knowledge Q&A
View all (3)
Generate video
Delete all materials
942
At least one material is required to generate a video. Try to reserve one material to generate a video
941
View all (1)
Generate video
AI

FIG. 9E

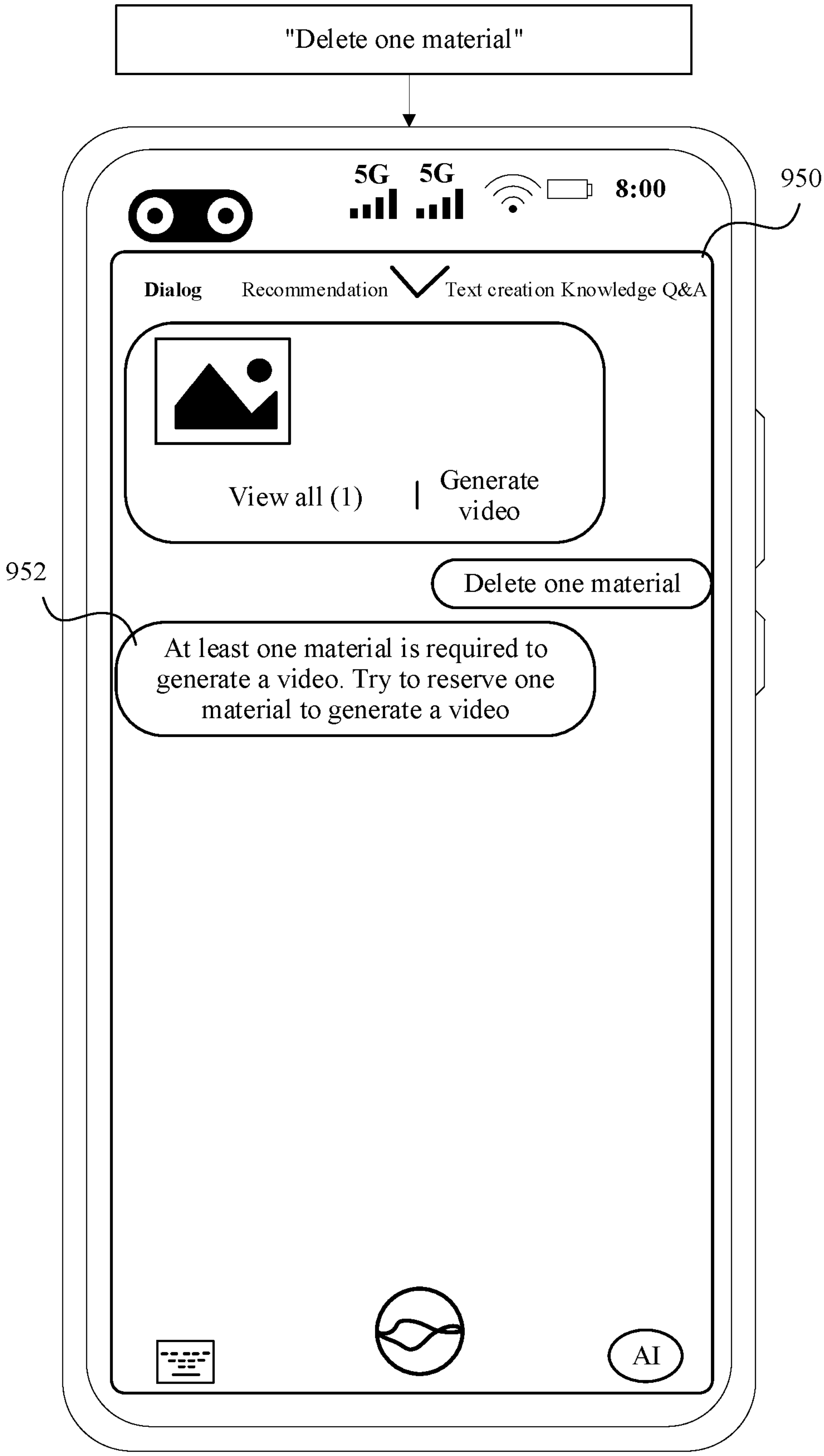
"Delete one material"
950
5G
5G
8:00
Dialog
Recommendation
Text creation Knowledge Q&A
View all (1)
Generate video
952
Delete one material
At least one material is required to generate a video. Try to reserve one material to generate a video
AI

FIG. 9F

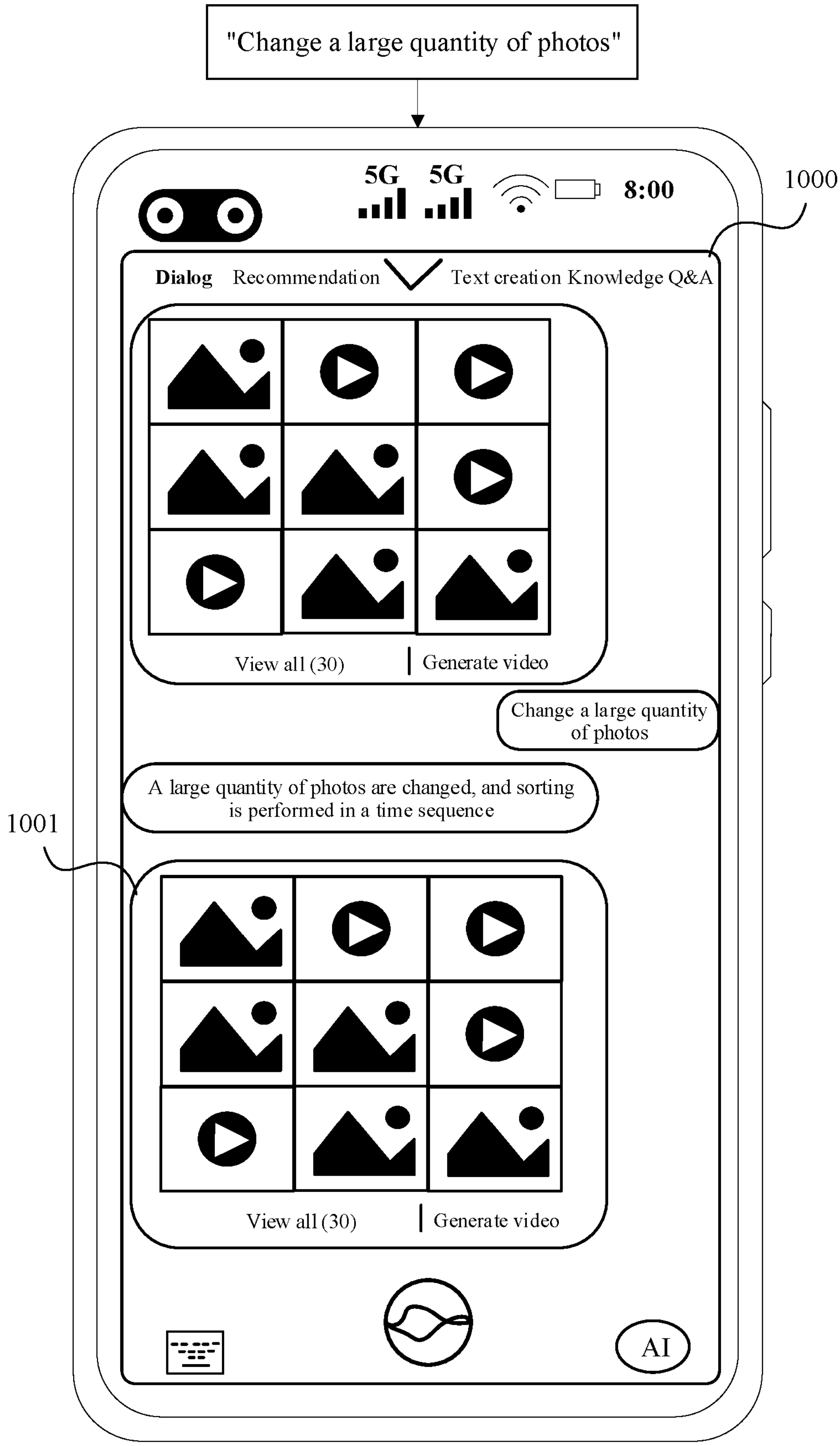
"Change a large quantity of photos"
1000
5G
5G
8:00
Dialog
Recommendation
Text creation
Knowledge Q&A
View all (30)
Generate video
Change a large quantity of photos
A large quantity of photos are changed, and sorting is performed in a time sequence
1001
View all (30)
Generate video
AI

FIG. 10A

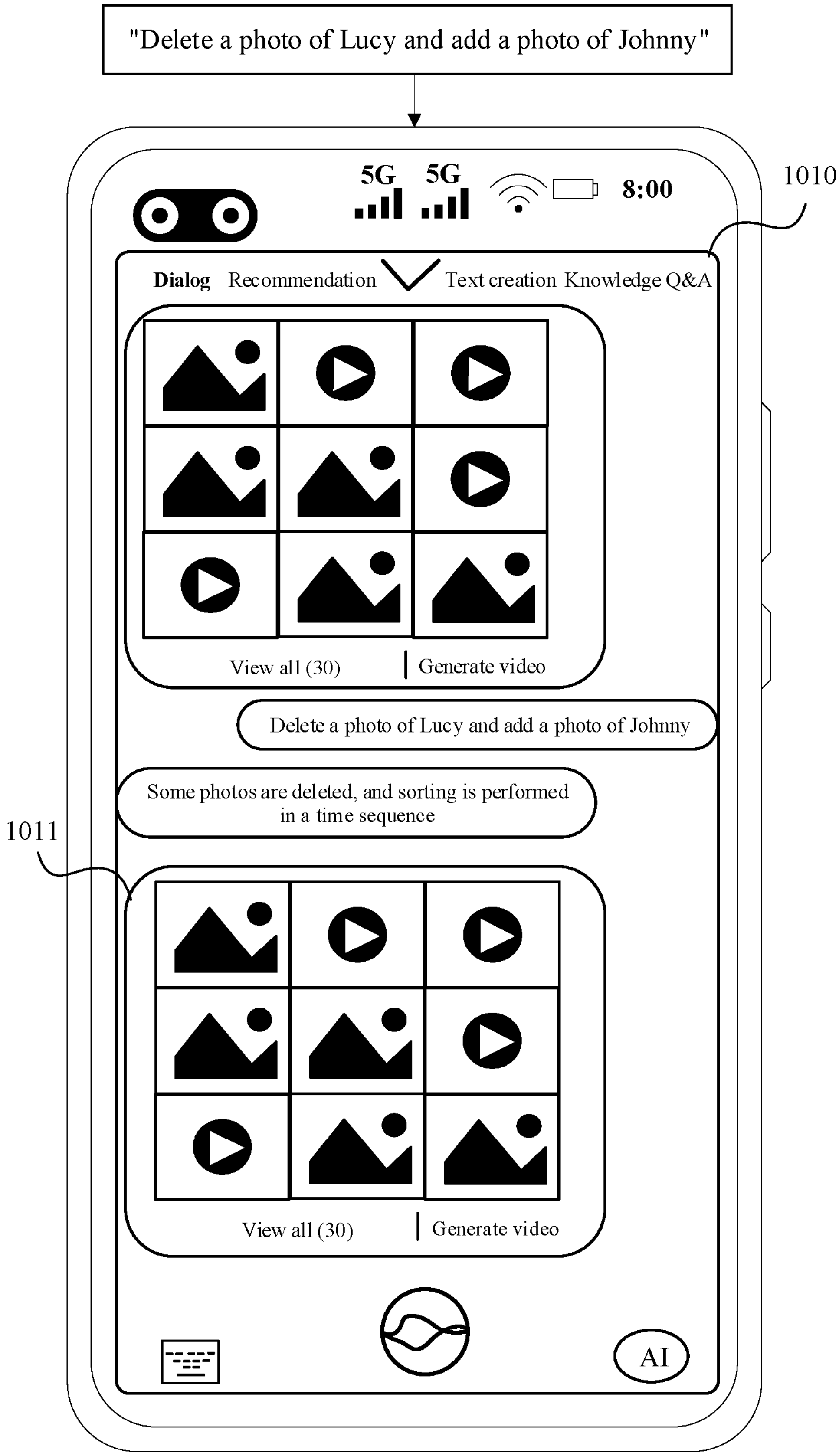
"Delete a photo of Lucy and add a photo of Johnny"
5G
5G
8:00
1010
Dialog
Recommendation
Text creation
Knowledge Q&A
View all (30)
Generate video
Delete a photo of Lucy and add a photo of Johnny
Some photos are deleted, and sorting is performed in a time sequence
1011
View all (30)
Generate video
AI

FIG. 10B

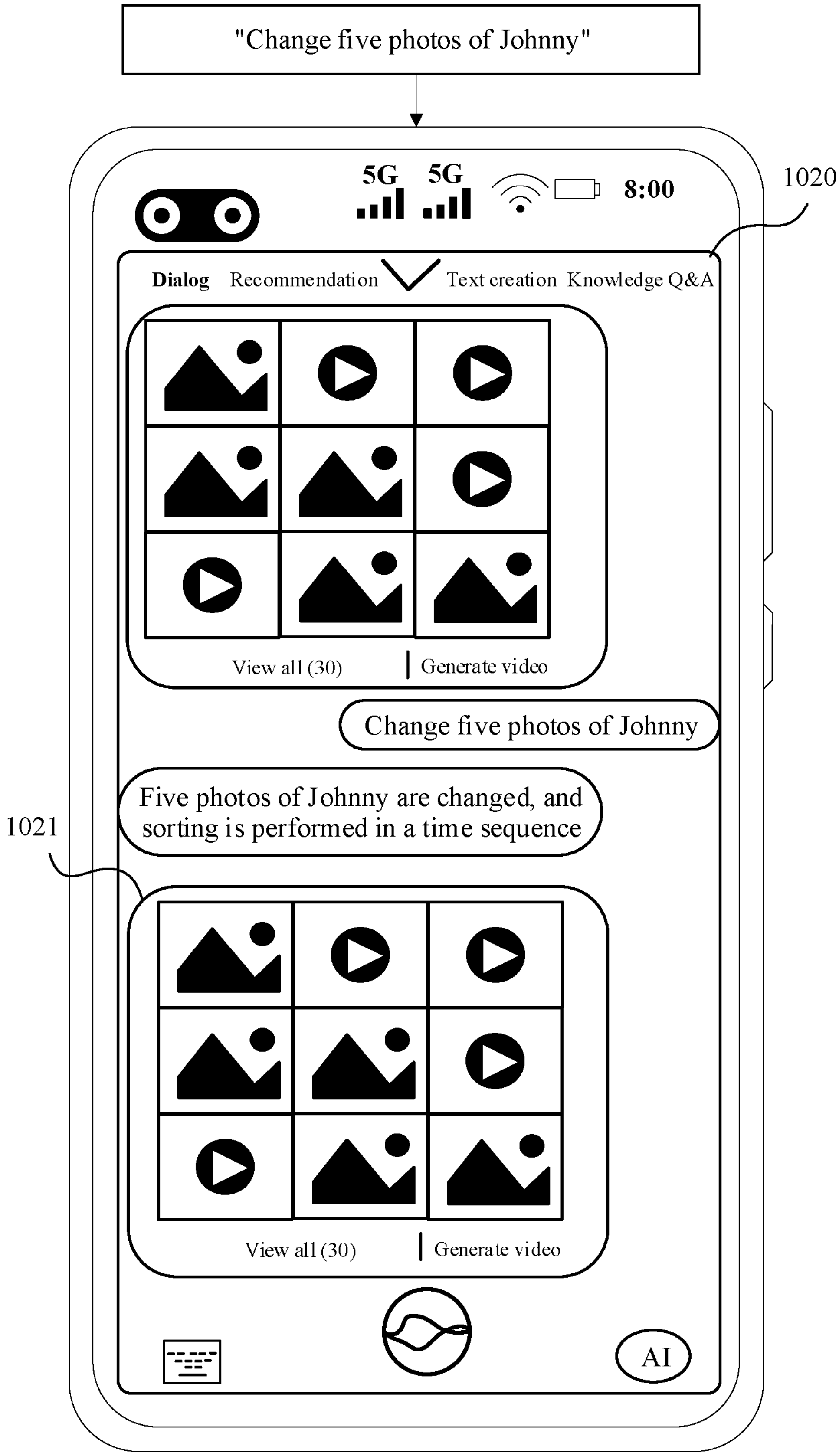
"Change five photos of Johnny"
5G
5G
8:00
1020
Dialog
Recommendation
Text creation
Knowledge Q&A
View all (30)
Generate video
Change five photos of Johnny
Five photos of Johnny are changed, and sorting is performed in a time sequence
1021
View all (30)
Generate video
AI

FIG. 10C

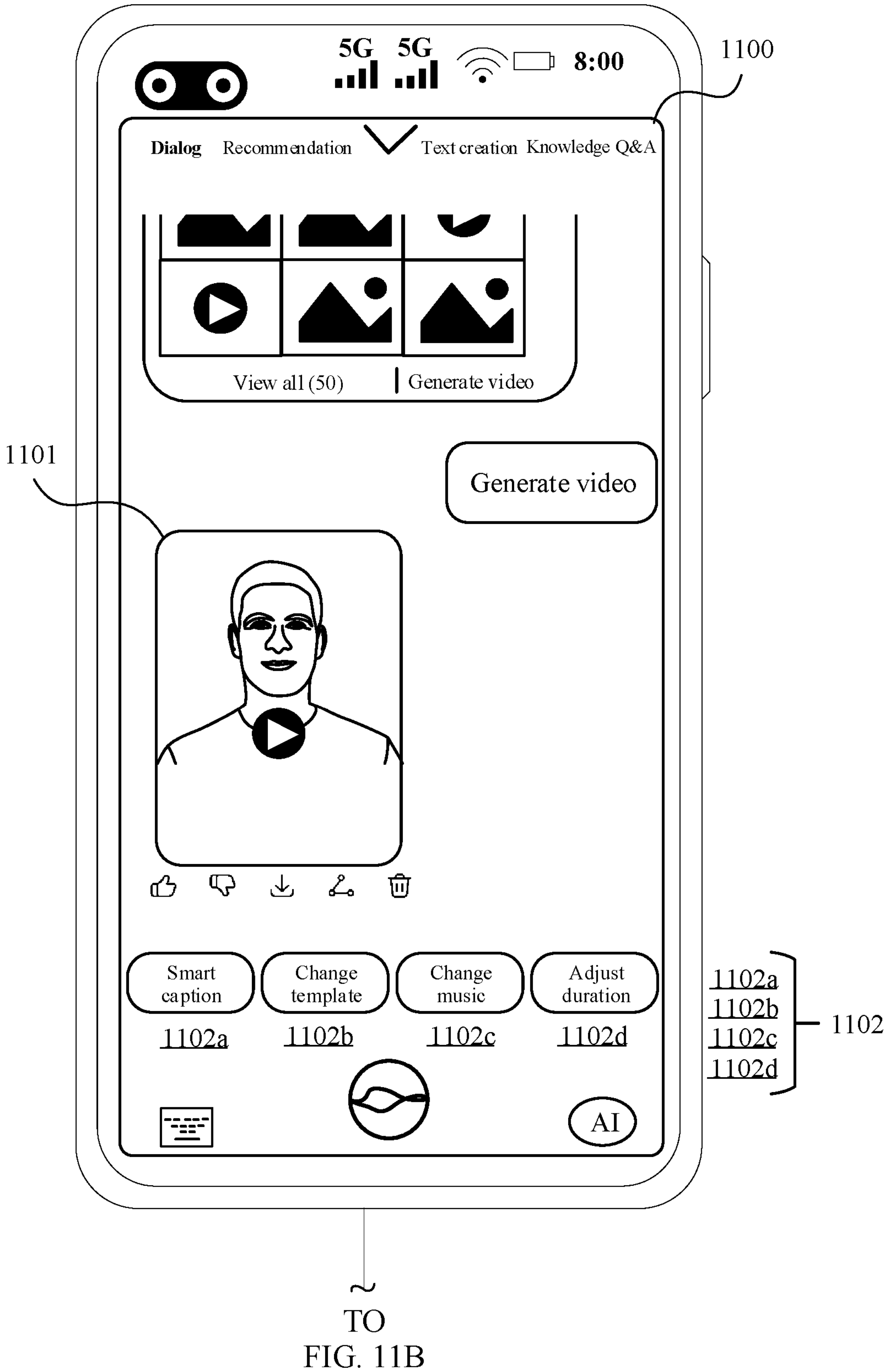
1100
5G 5G
8:00
Dialog
Recommendation
Text creation
Knowledge Q&A
View all (50)
Generate video
Generate video
1101
Smart caption
Change template
Change music
Adjust duration
1102a
1102b
1102c
1102d
1102a
1102b
1102c
1102d
1102
AI
TO
FIG. 11B

FIG. 11A

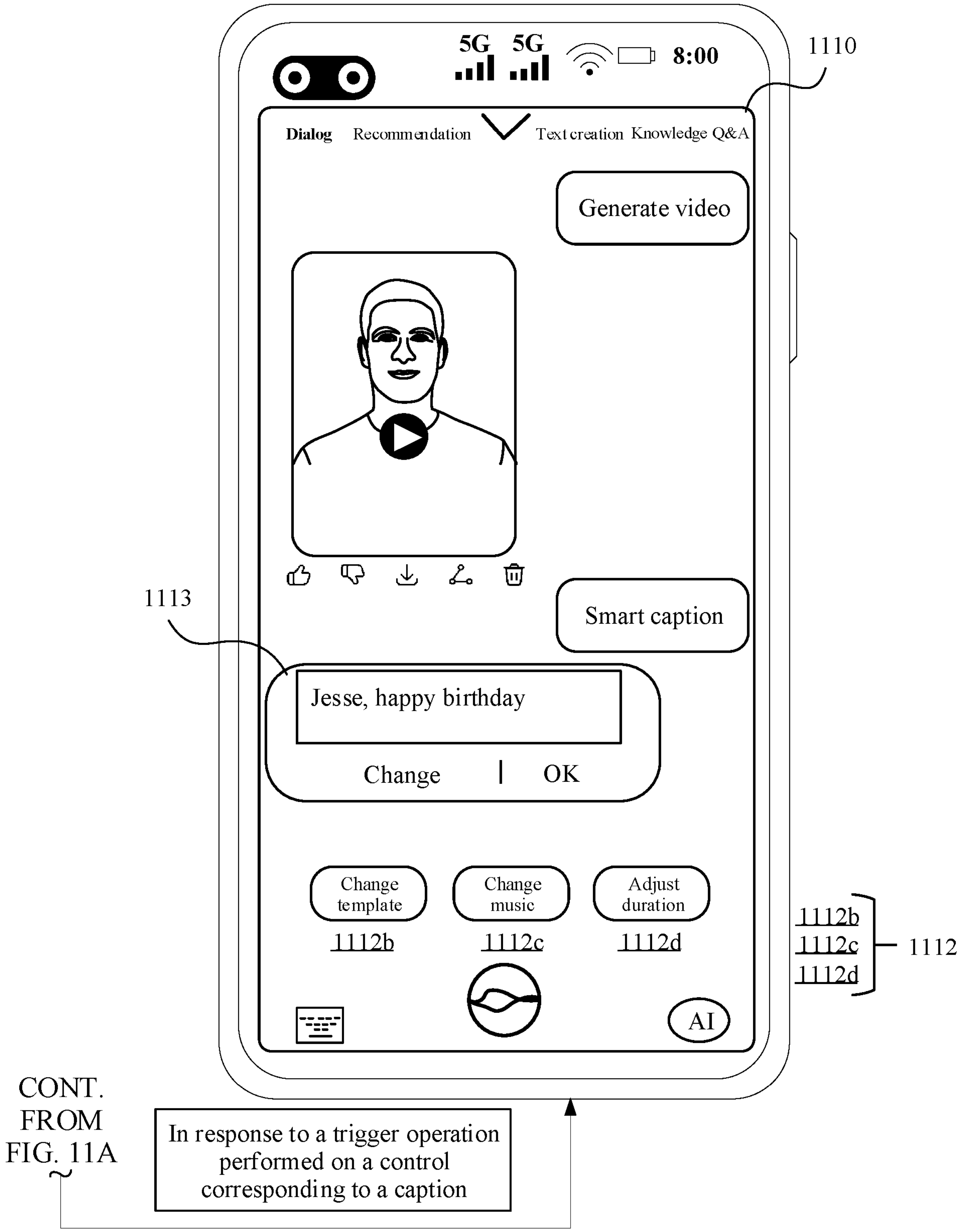

5G 5G
8:00
1110
Dialog
Recommendation
Text creation
Knowledge Q&A
Generate video
Smart caption
1113
Jesse, happy birthday
Change
OK
Change template
1112b
Change music
1112c
Adjust duration
1112d
1112b
1112c
1112d
1112
AI
CONT. FROM FIG. 11A
In response to a trigger operation performed on a control corresponding to a caption


FIG. 11B

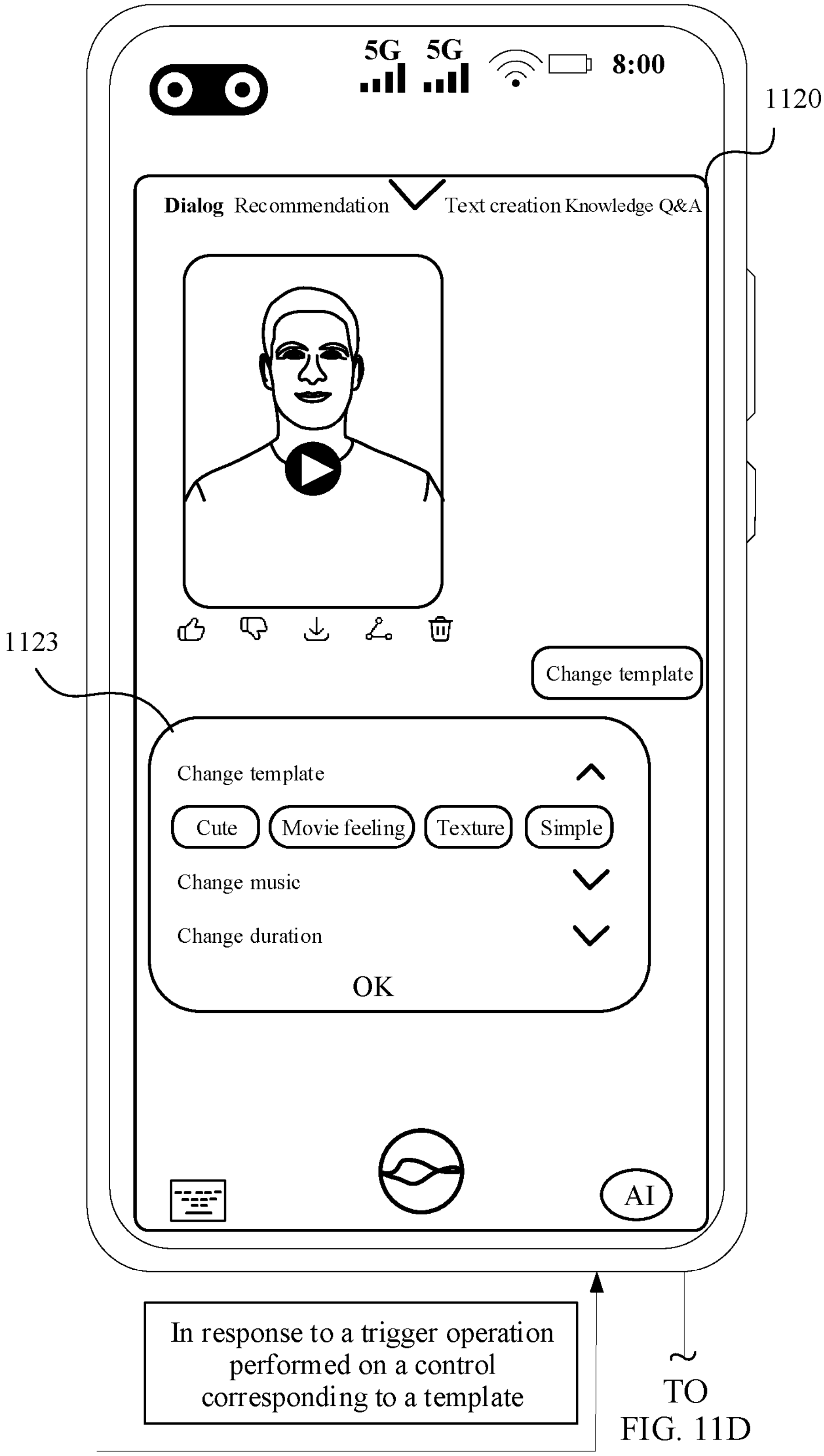
5G 5G
8:00
1120
Dialog Recommendation Text creation Knowledge Q&A
1123
Change template
Change template
Cute
Movie feeling
Texture
Simple
Change music
Change duration
OK
AI
In response to a trigger operation performed on a control corresponding to a template
TO FIG. 11D

FIG. 11C

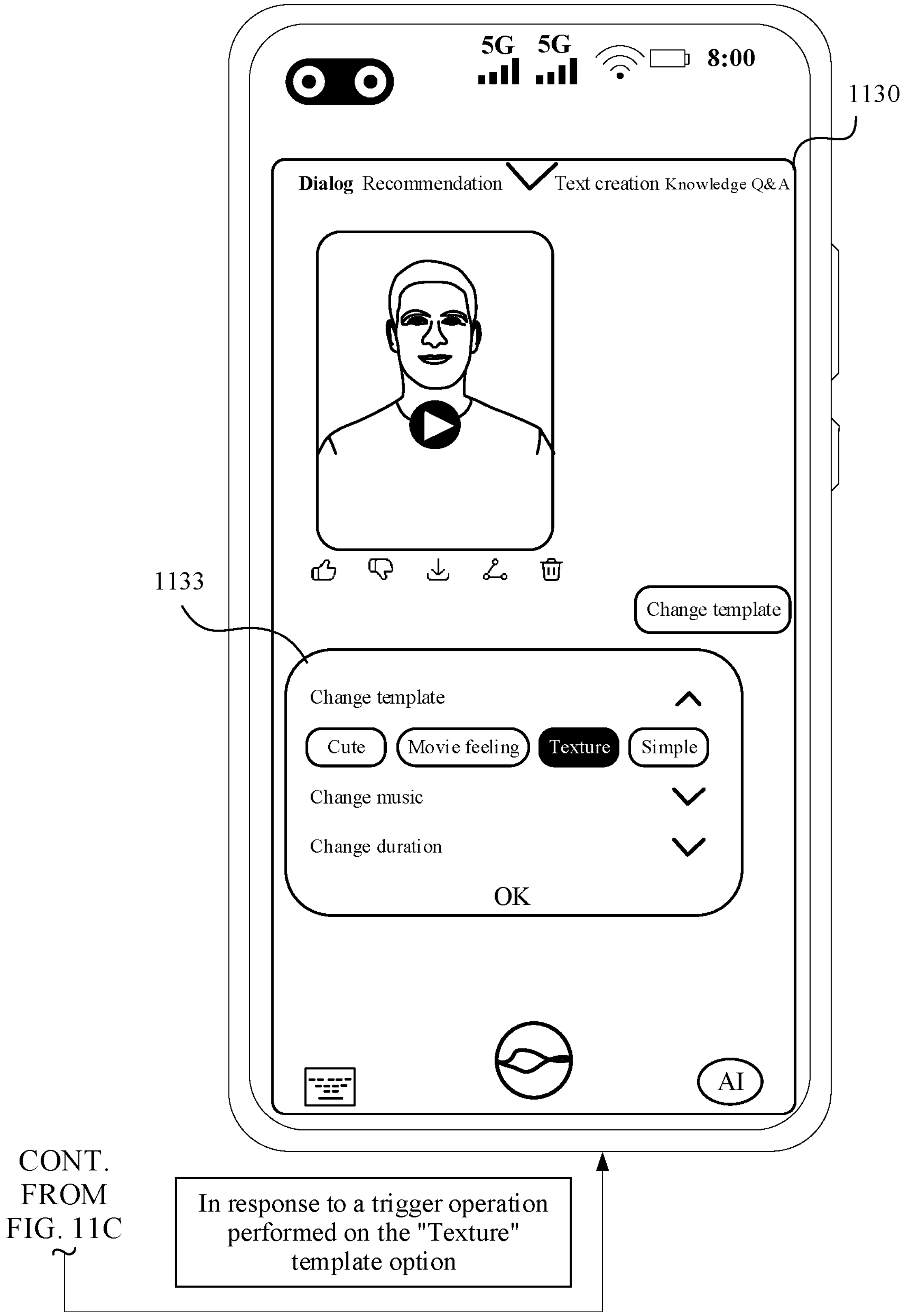
5G 5G
8:00
1130
Dialog Recommendation
Text creation Knowledge Q&A
1133
Change template
Change template
Cute
Movie feeling
Texture
Simple
Change music
Change duration
OK
AI
CONT. FROM FIG. 11C
In response to a trigger operation performed on the "Texture" template option

FIG. 11D

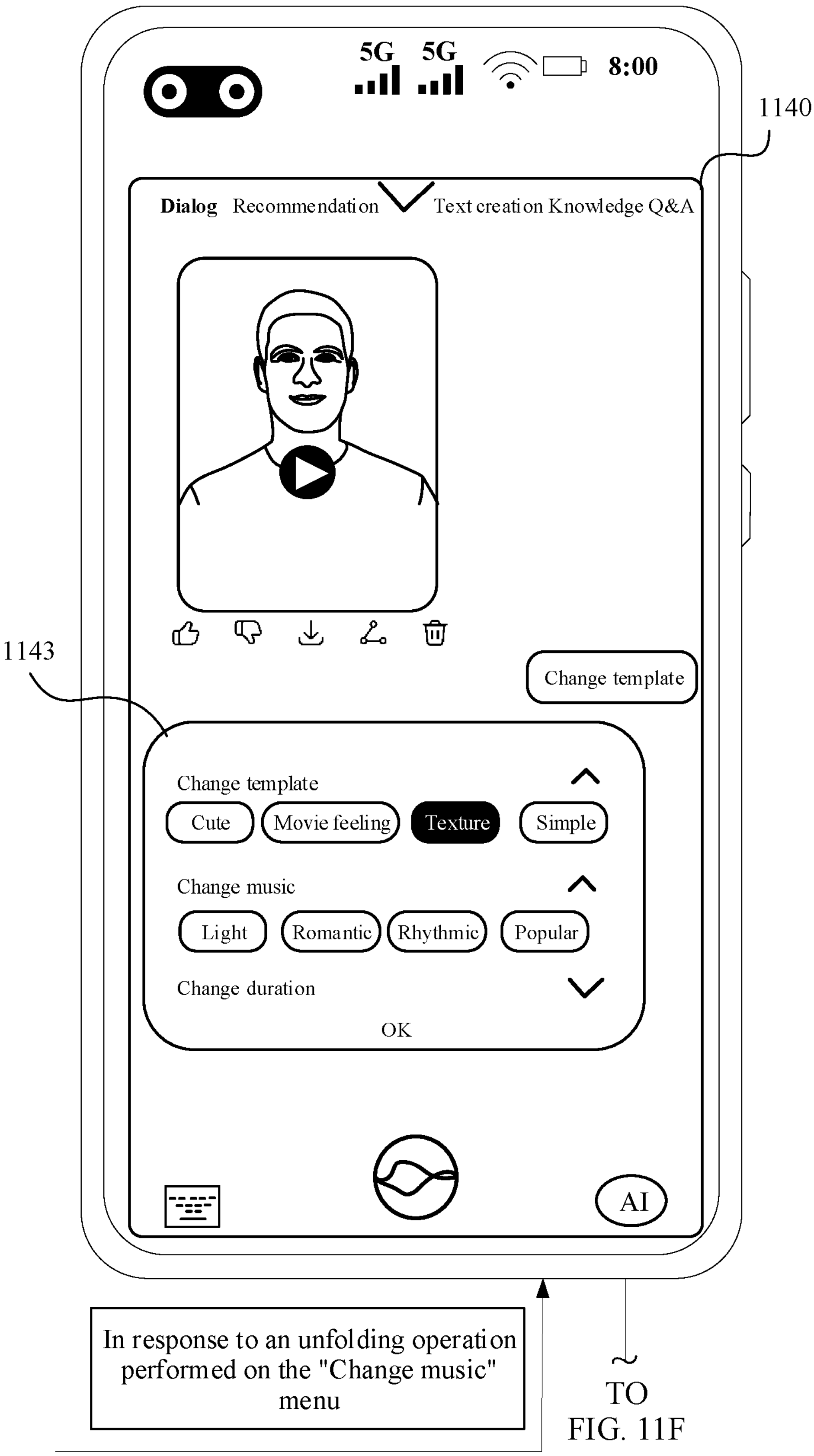
5G
5G
8:00
1140
Dialog
Recommendation
Text creation
Knowledge Q&A
1143
Change template
Change template
Cute
Movie feeling
Texture
Simple
Change music
Light
Romantic
Rhythmic
Popular
Change duration
OK
AI
In response to an unfolding operation performed on the "Change music" menu
TO FIG. 11F

FIG. 11E

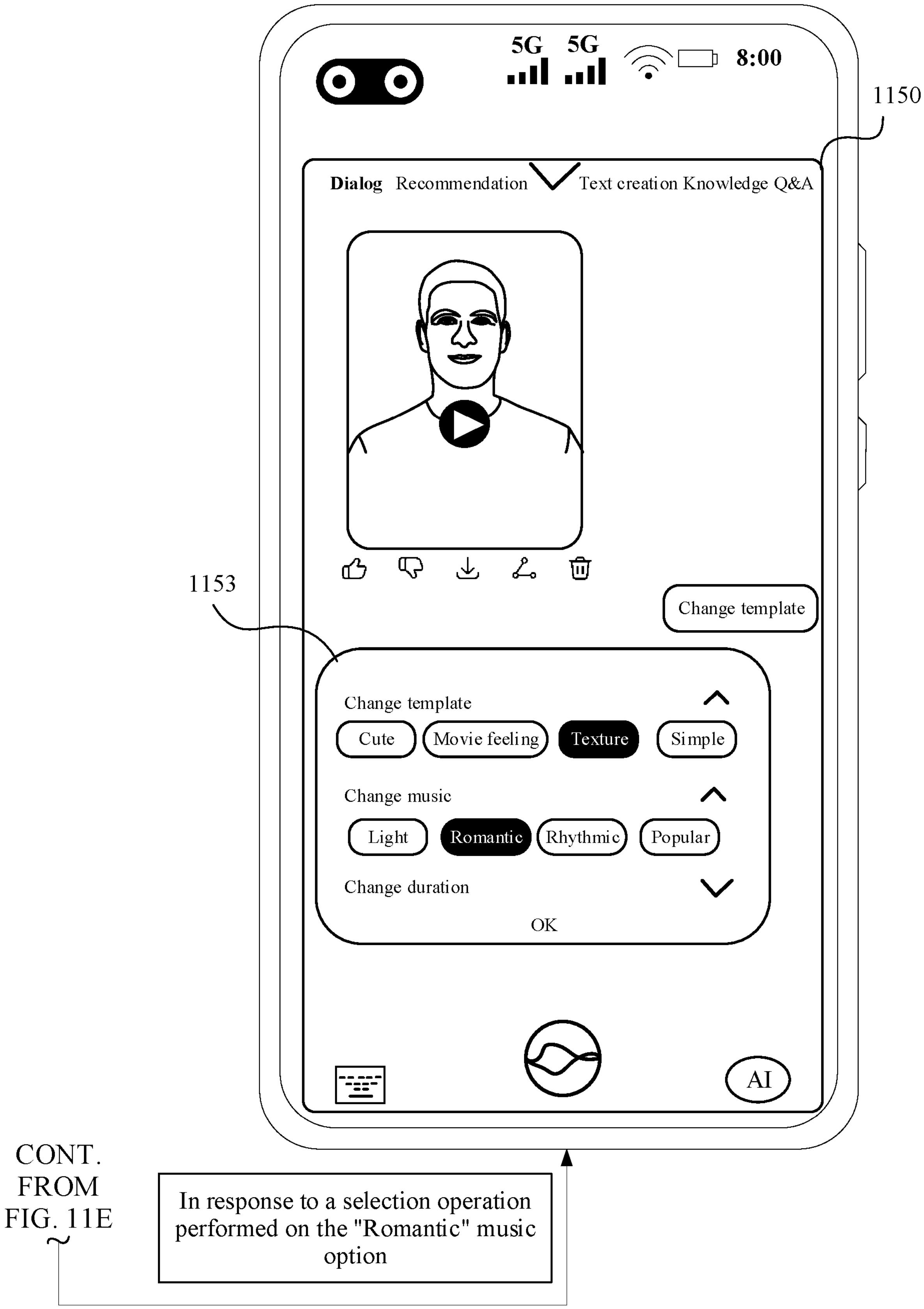
5G
5G
8:00
1150
Dialog
Recommendation
Text creation
Knowledge Q&A
1153
Change template
Change template
Cute
Movie feeling
Texture
Simple
Change music
Light
Romantic
Rhythmic
Popular
Change duration
OK
AI
CONT. FROM FIG. 11E
In response to a selection operation performed on the "Romantic" music option

FIG. 11F

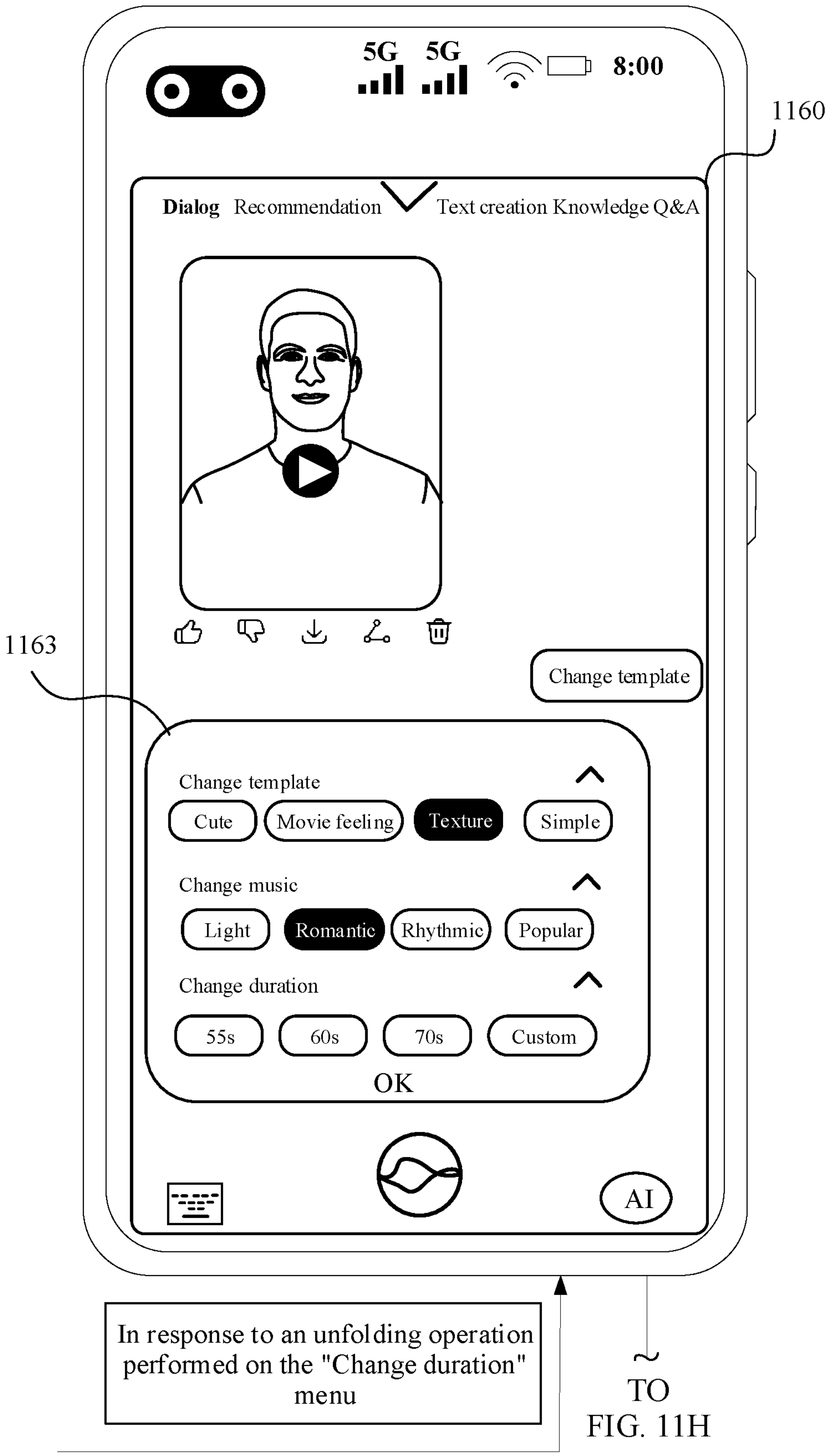

5G
5G
8:00
1160
Dialog
Recommendation
Text creation
Knowledge Q&A
1163
Change template
Change template
Cute
Movie feeling
Texture
Simple
Change music
Light
Romantic
Rhythmic
Popular
Change duration
55s
60s
70s
Custom
OK
AI
In response to an unfolding operation performed on the "Change duration" menu
TO FIG. 11H


FIG. 11G

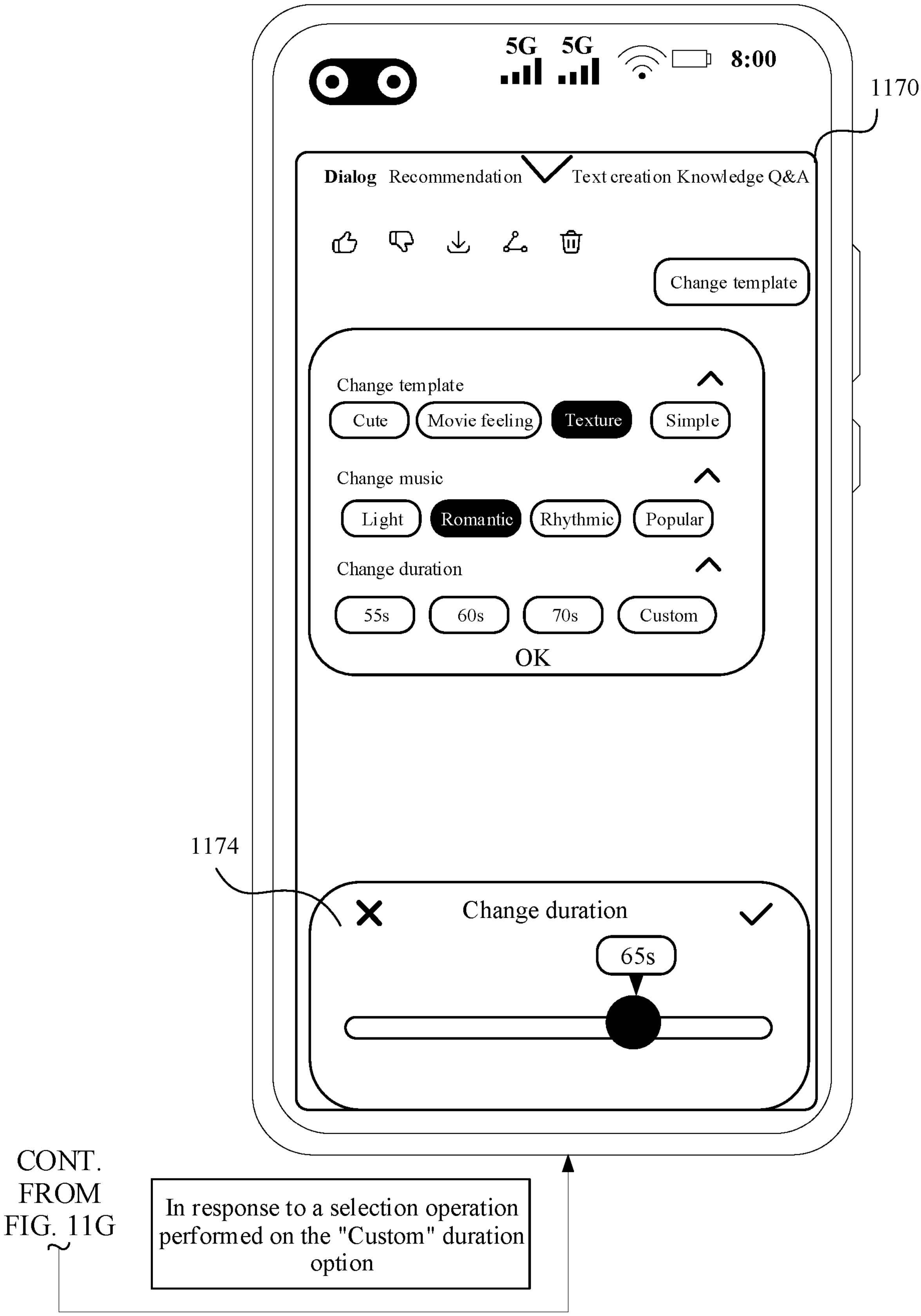
5G
5G
8:00
1170
Dialog
Recommendation
Text creation
Knowledge Q&A
Change template
Change template
Cute
Movie feeling
Texture
Simple
Change music
Light
Romantic
Rhythmic
Popular
Change duration
55s
60s
70s
Custom
OK
1174
Change duration
65s
CONT. FROM FIG. 11G
In response to a selection operation performed on the "Custom" duration option

FIG. 11H

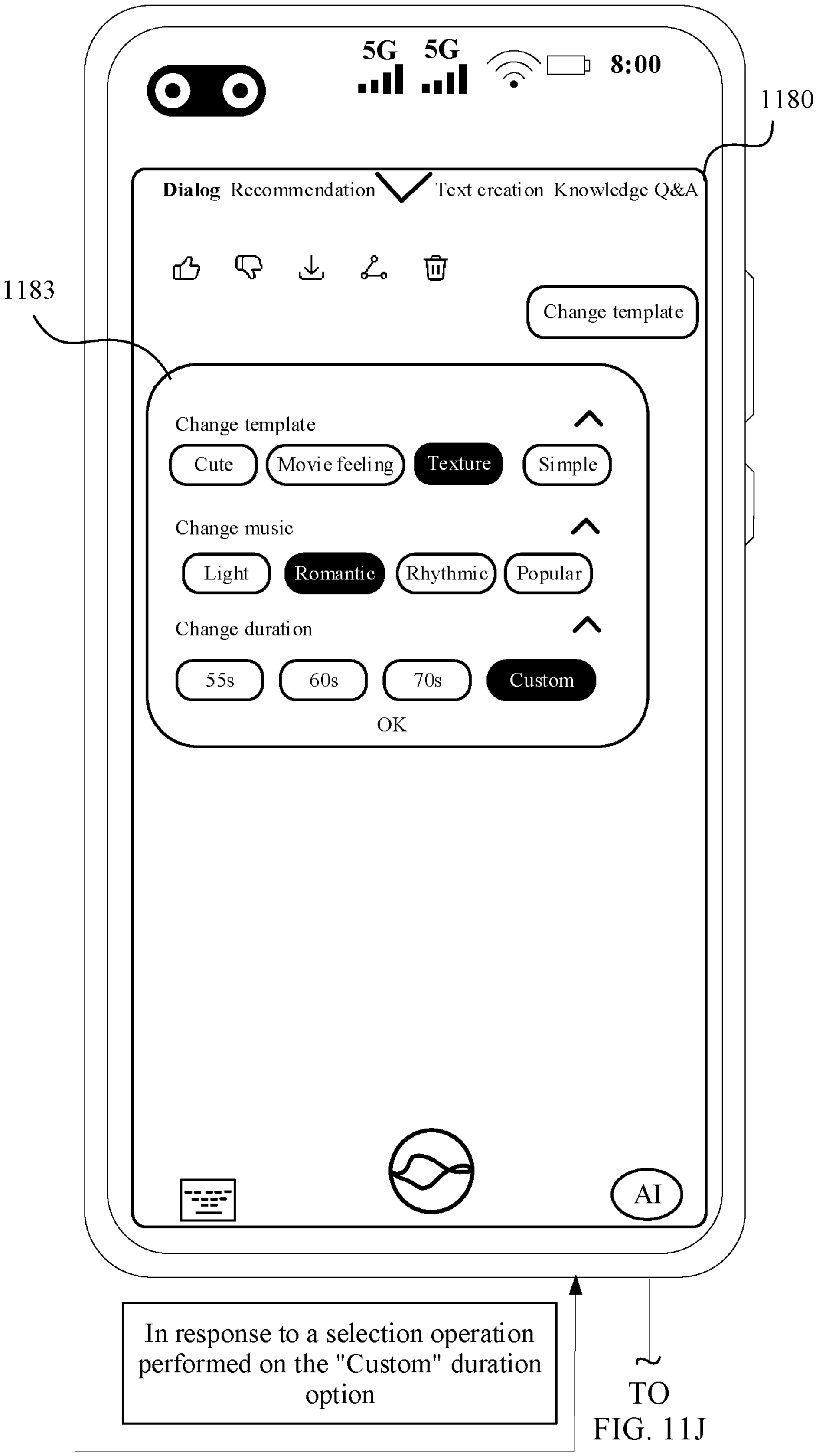
5G 5G
8:00
1180
Dialog Recommendation Text creation Knowledge Q&A
1183
Change template
Change template
Cute
Movie feeling
Texture
Simple
Change music
Light
Romantic
Rhythmic
Popular
Change duration
55s
60s
70s
Custom
OK
AI
In response to a selection operation performed on the "Custom" duration option
TO FIG. 11J

FIG. 11I

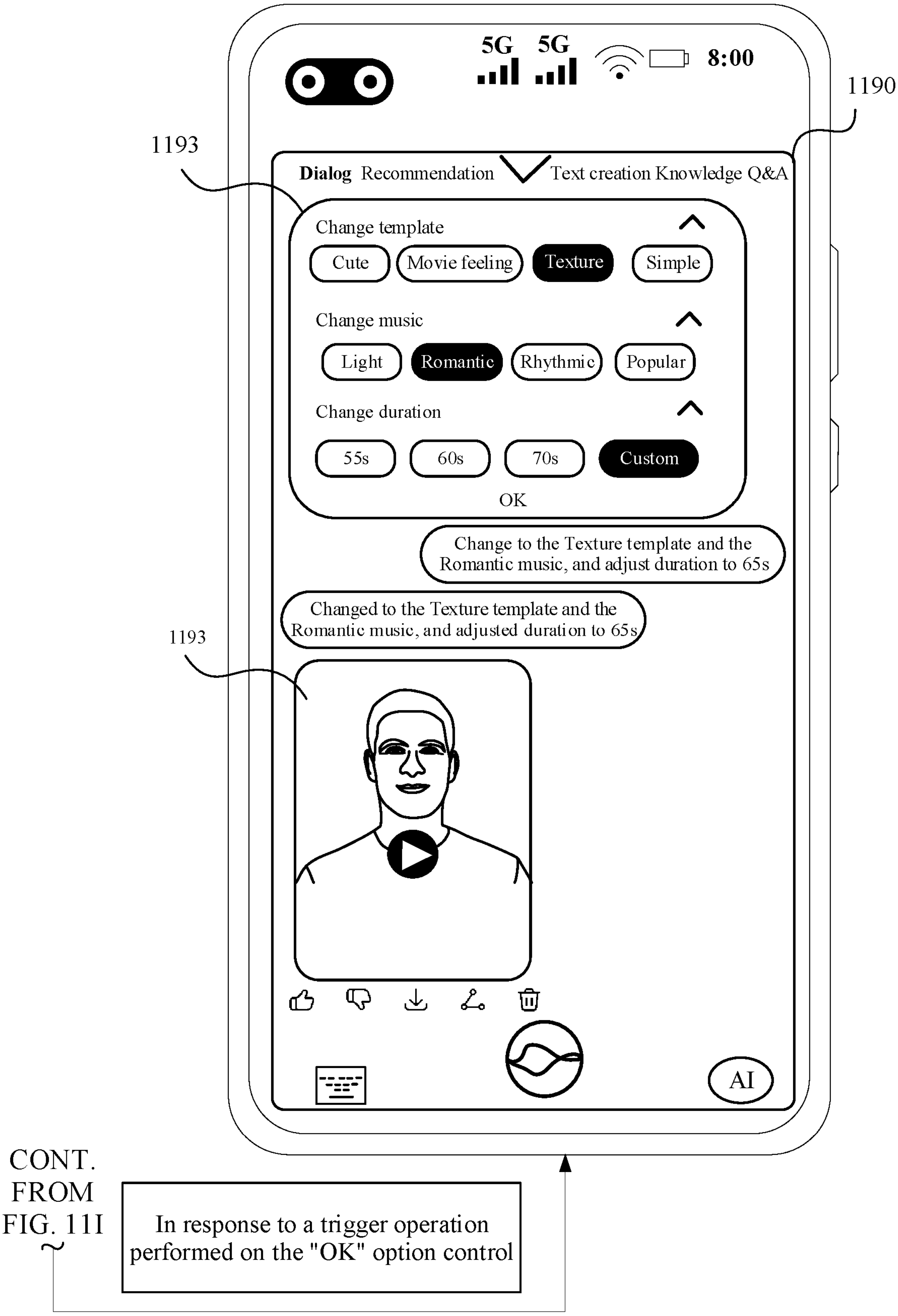
5G
5G
8:00
1190
1193
Dialog Recommendation Text creation Knowledge Q&A
Change template
Cute
Movie feeling
Texture
Simple
Change music
Light
Romantic
Rhythmic
Popular
Change duration
55s
60s
70s
Custom
OK
Change to the Texture template and the Romantic music, and adjust duration to 65s
Changed to the Texture template and the Romantic music, and adjusted duration to 65s
1193
AI
CONT. FROM FIG. 11I
In response to a trigger operation performed on the "OK" option control

FIG. 11J

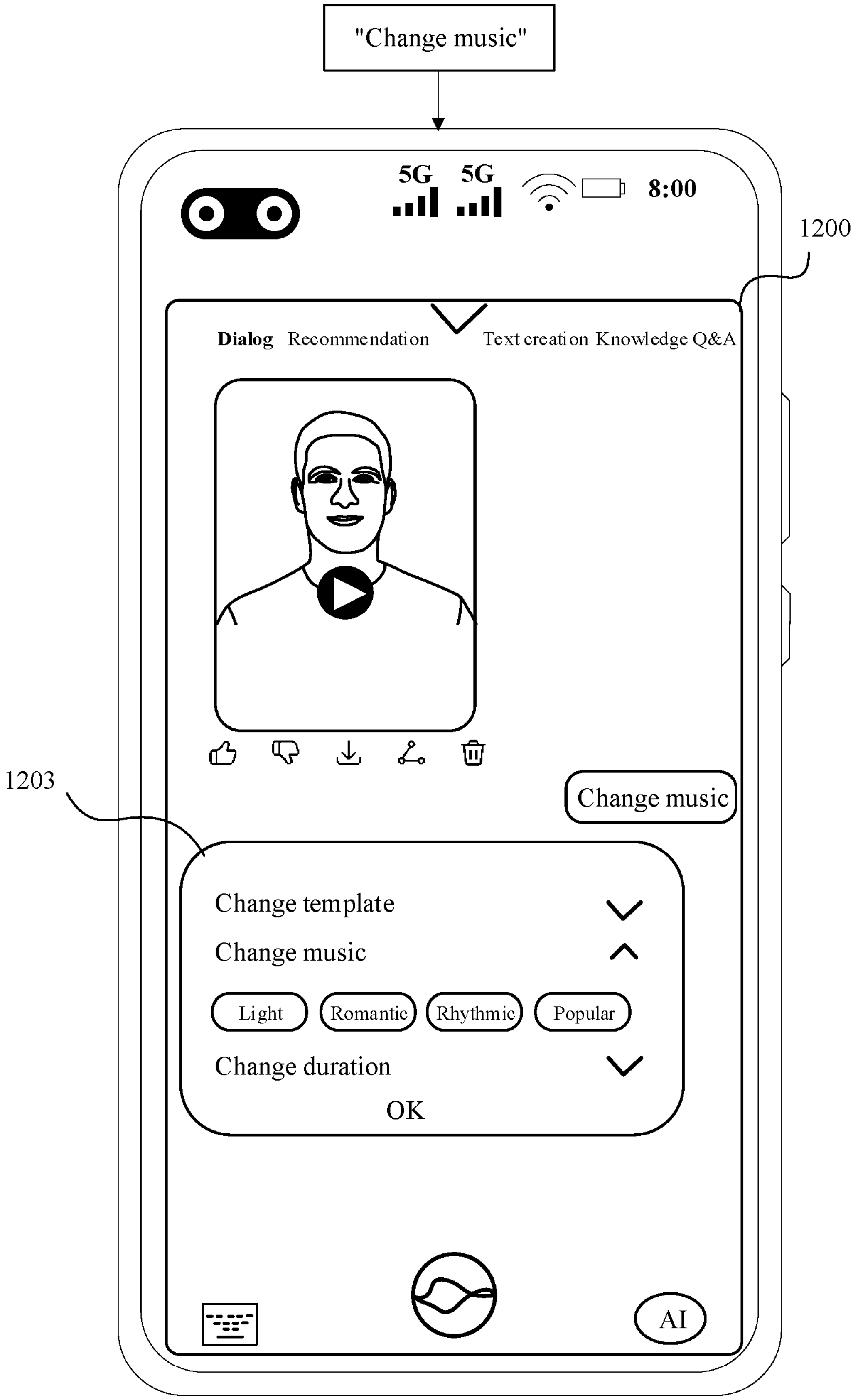

"Change music"
1200
5G 5G
8:00
Dialog Recommendation Text creation Knowledge Q&A
Change music
1203
Change template
Change music
Light
Romantic
Rhythmic
Popular
Change duration
OK
AI


FIG. 12A

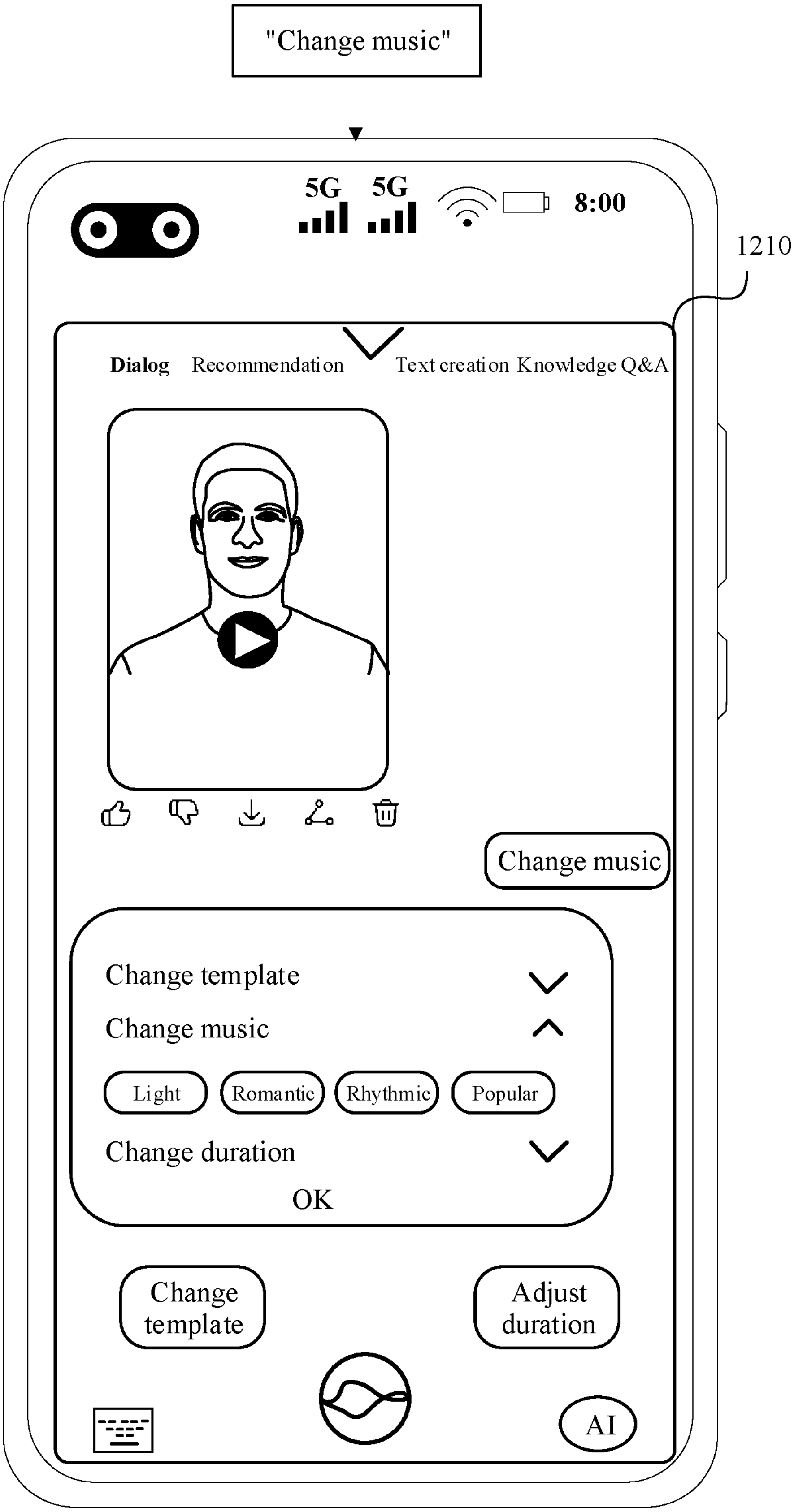
"Change music"
5G
5G
8:00
1210
Dialog
Recommendation
Text creation
Knowledge Q&A
Change music
Change template
Change music
Light
Romantic
Rhythmic
Popular
Change duration
OK
Change template
Adjust duration
AI

FIG. 12B

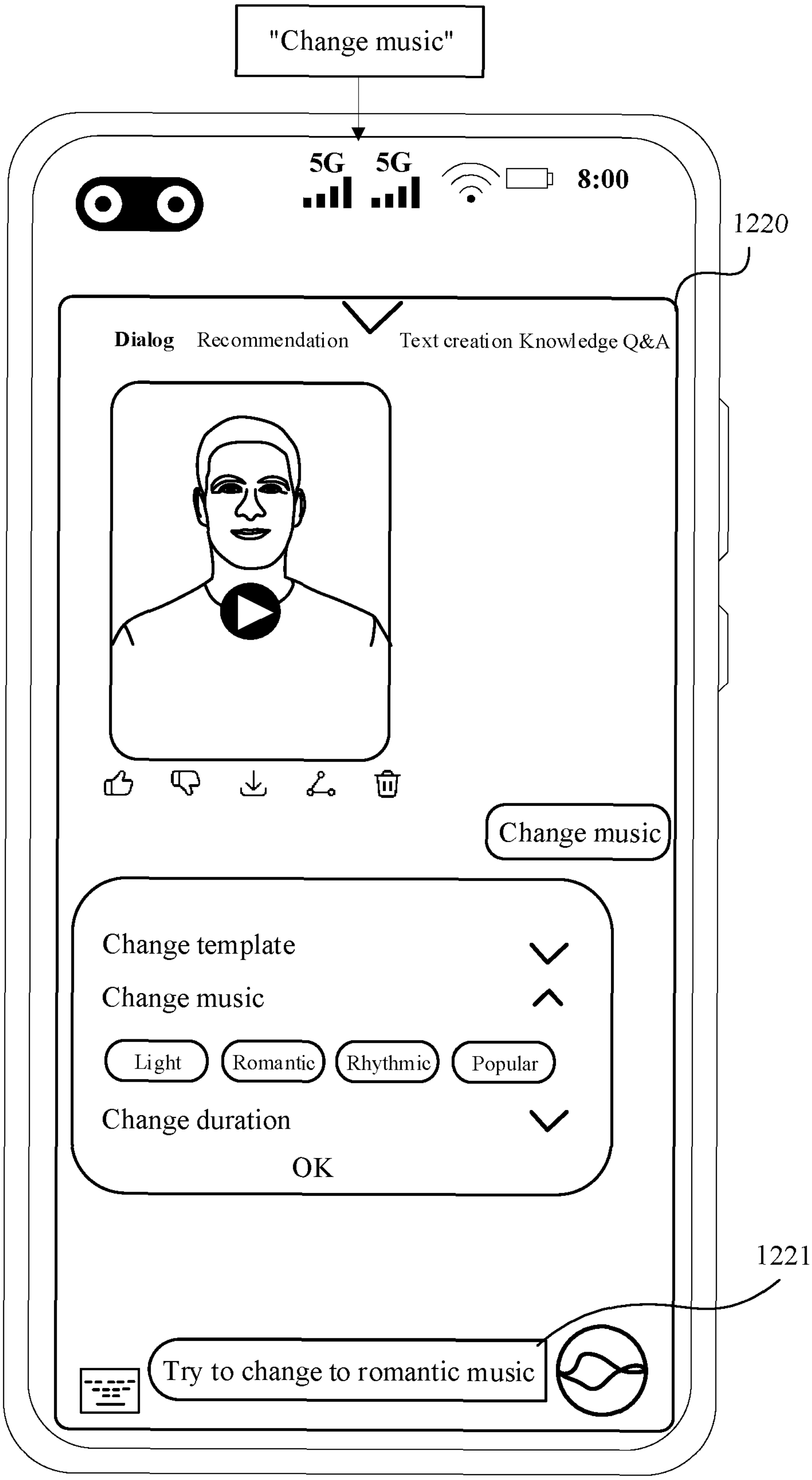
"Change music"
5G 5G 8:00
1220
Dialog Recommendation Text creation Knowledge Q&A
Change music
Change template
Change music
Light
Romantic
Rhythmic
Popular
Change duration
OK
1221
Try to change to romantic music

FIG. 12C

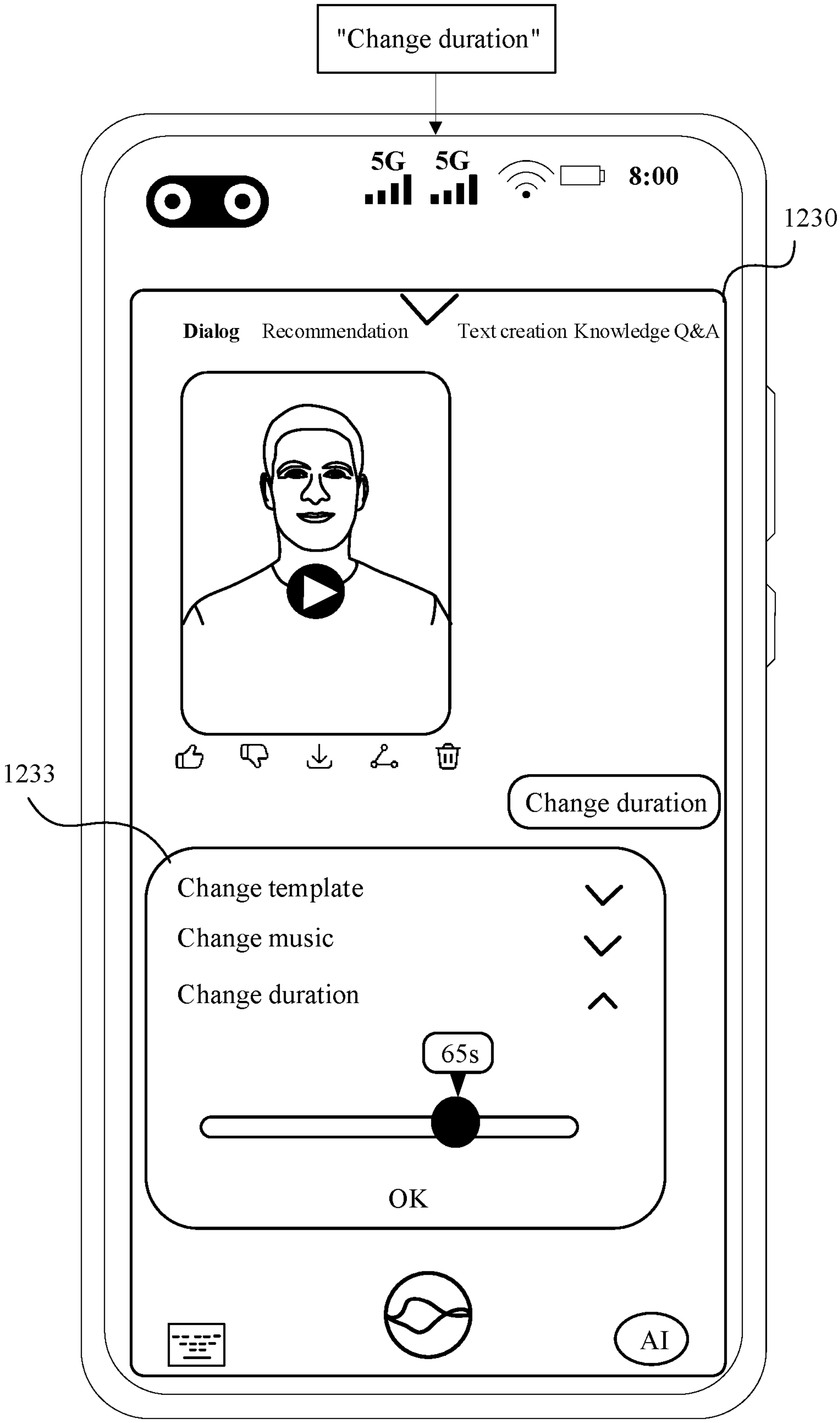
"Change duration"
5G
5G
8:00
1230
Dialog
Recommendation
Text creation
Knowledge Q&A
1233
Change duration
Change template
Change music
Change duration
65s
OK
AI

FIG. 12D

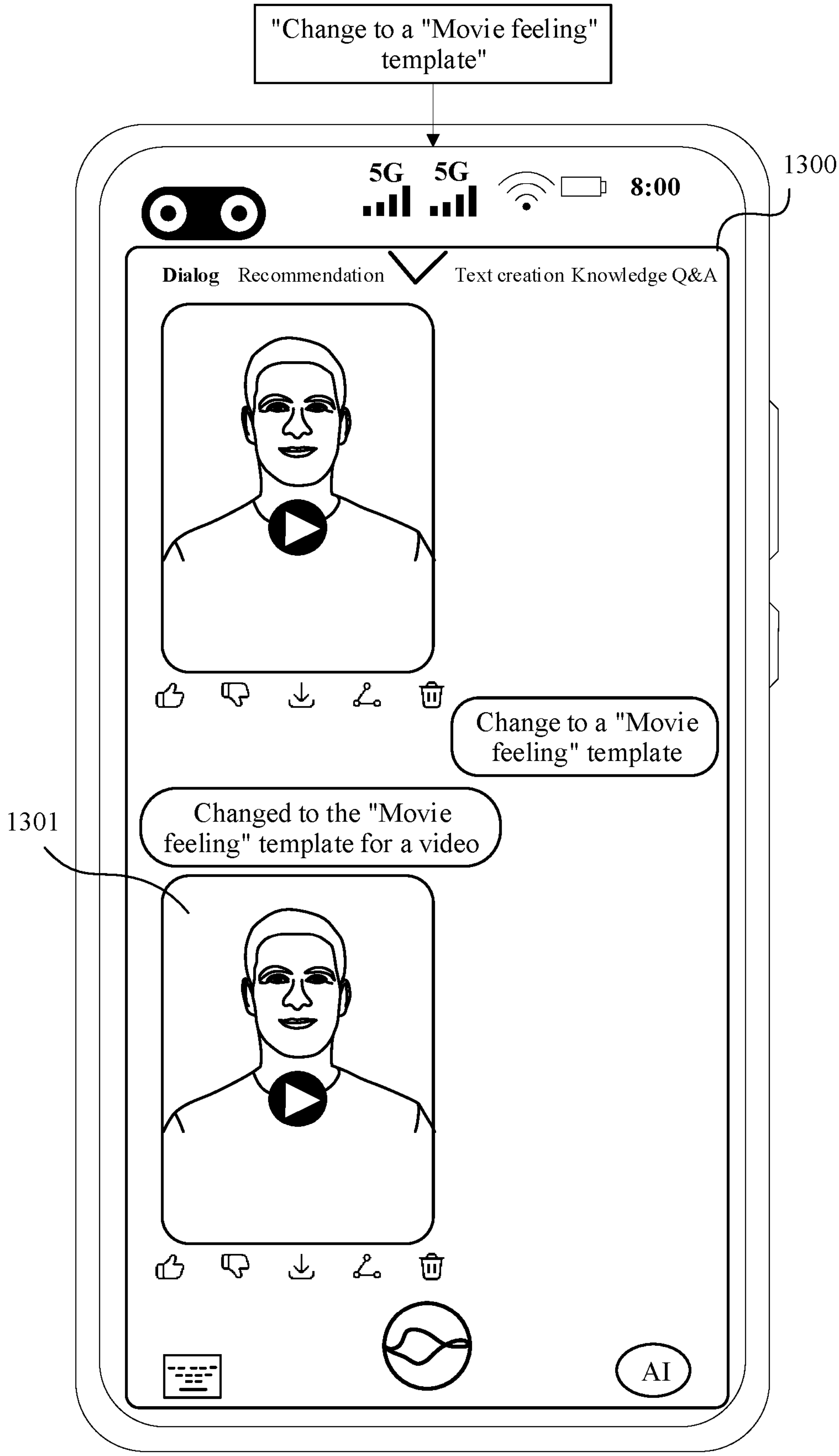
"Change to a "Movie feeling" template"
1300
5G 5G
8:00
Dialog Recommendation Text creation Knowledge Q&A
Change to a "Movie feeling" template
1301
Changed to the "Movie feeling" template for a video
AI

FIG. 13A

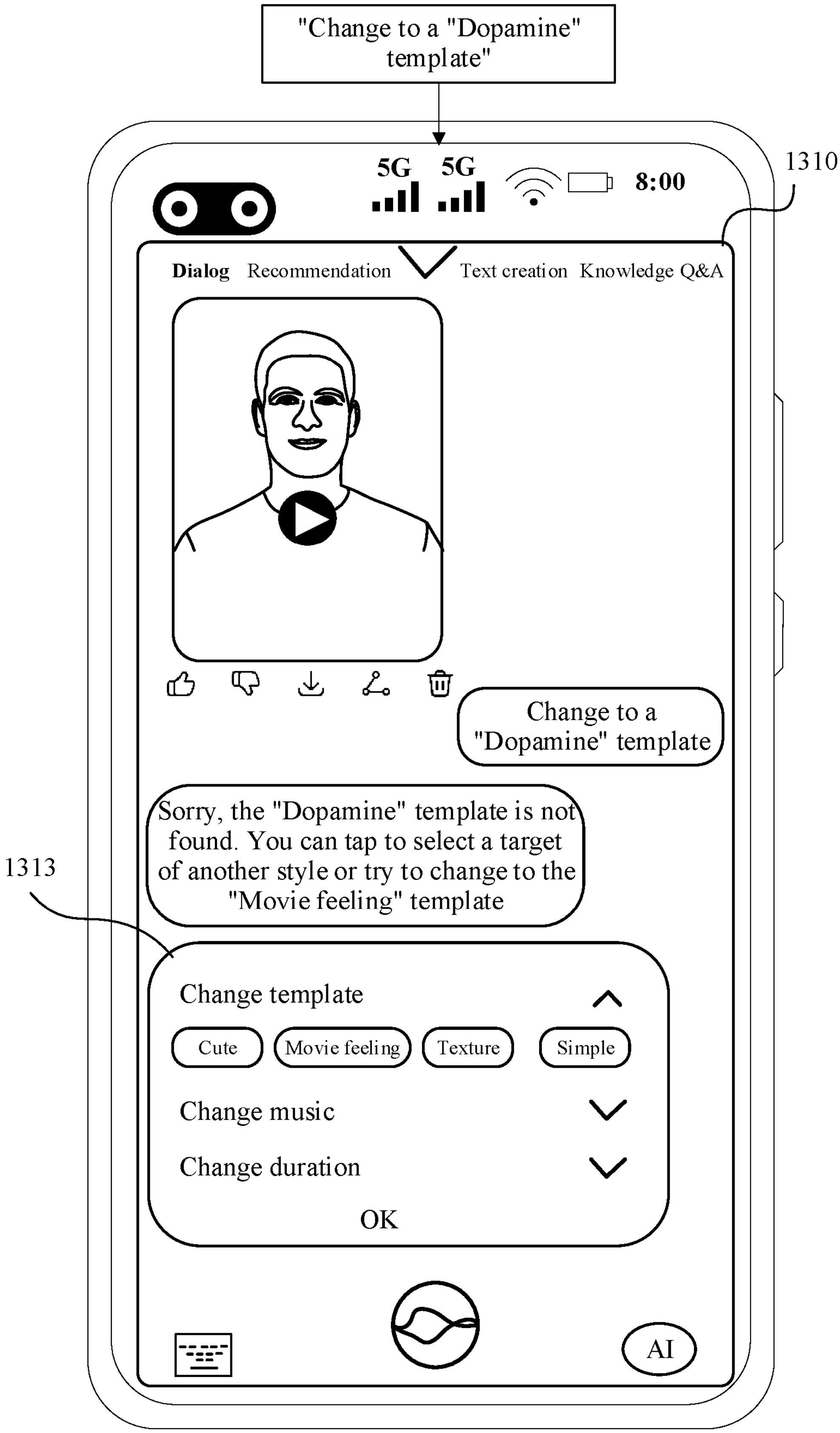

"Change to a "Dopamine" template"
1310
5G 5G
8:00
Dialog Recommendation Text creation Knowledge Q&A
Change to a "Dopamine" template
Sorry, the "Dopamine" template is not found. You can tap to select a target of another style or try to change to the "Movie feeling" template
1313
Change template
Cute
Movie feeling
Texture
Simple
Change music
Change duration
OK
AI


FIG. 13B

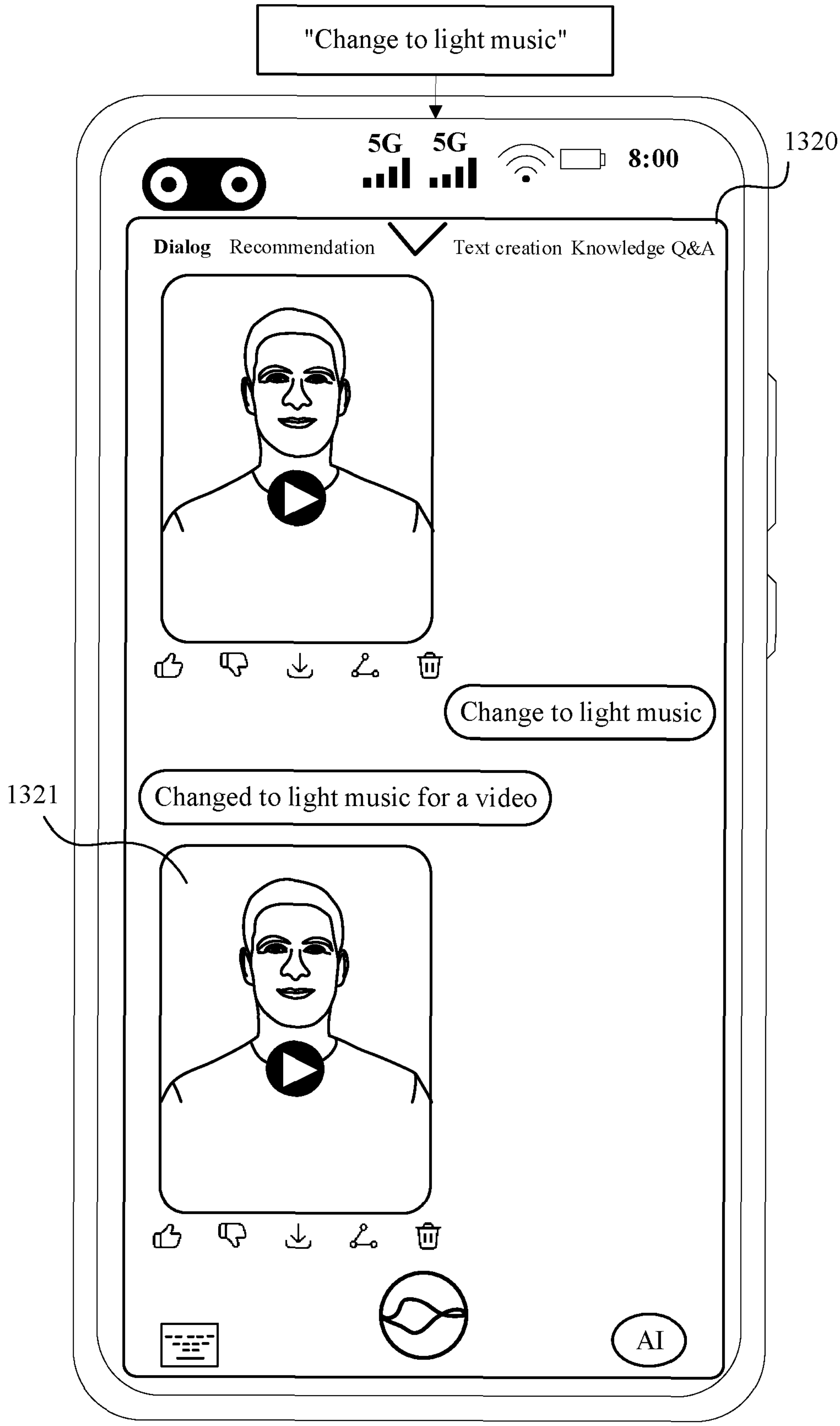
"Change to light music"
1320
5G 5G
8:00
Dialog Recommendation Text creation Knowledge Q&A
Change to light music
1321
Changed to light music for a video
AI

FIG. 13C

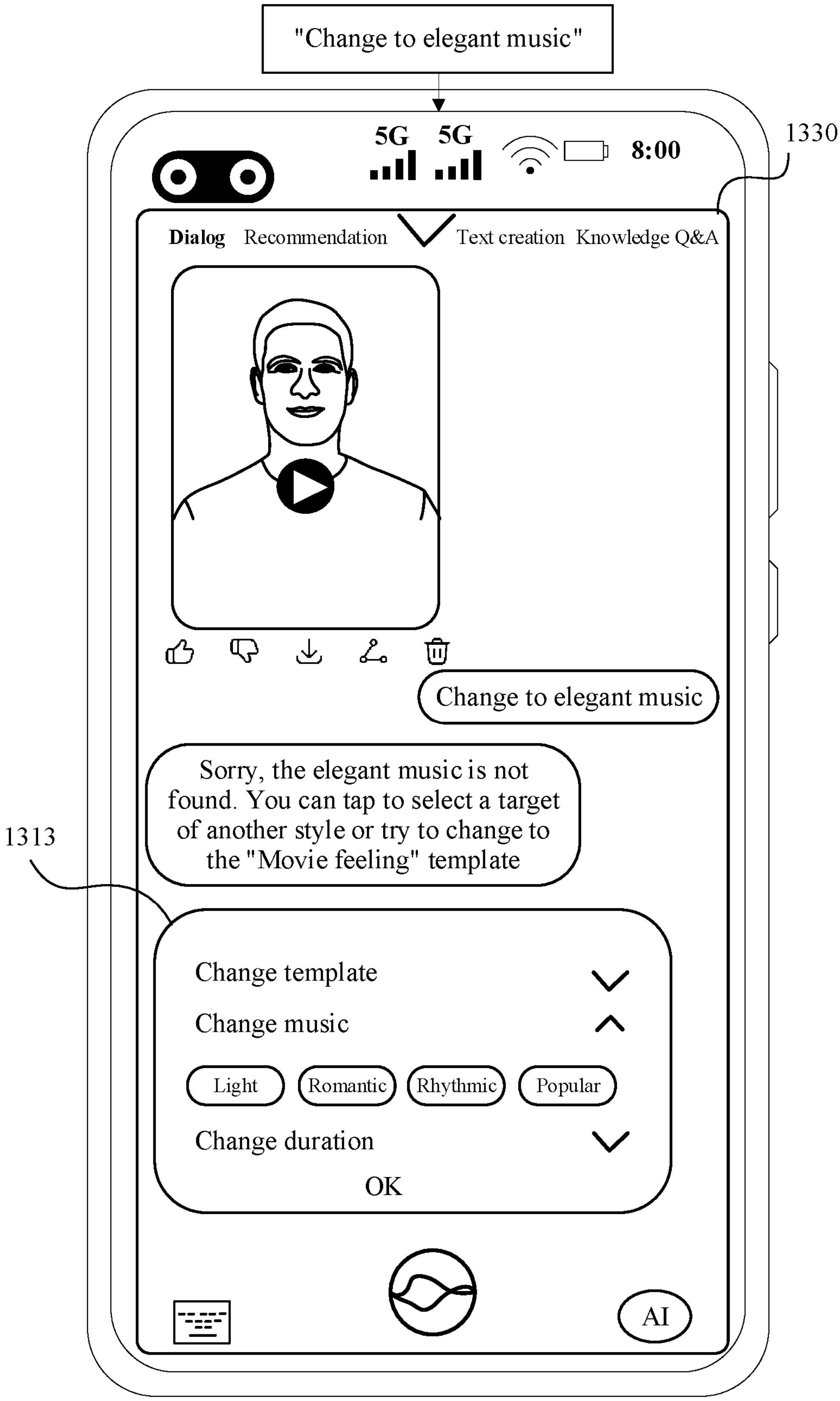
"Change to elegant music"
1330
5G 5G
8:00
Dialog Recommendation Text creation Knowledge Q&A
Change to elegant music
Sorry, the elegant music is not found. You can tap to select a target of another style or try to change to the "Movie feeling" template
1313
Change template
Change music
Light Romantic Rhythmic Popular
Change duration
OK
AI

FIG. 13D

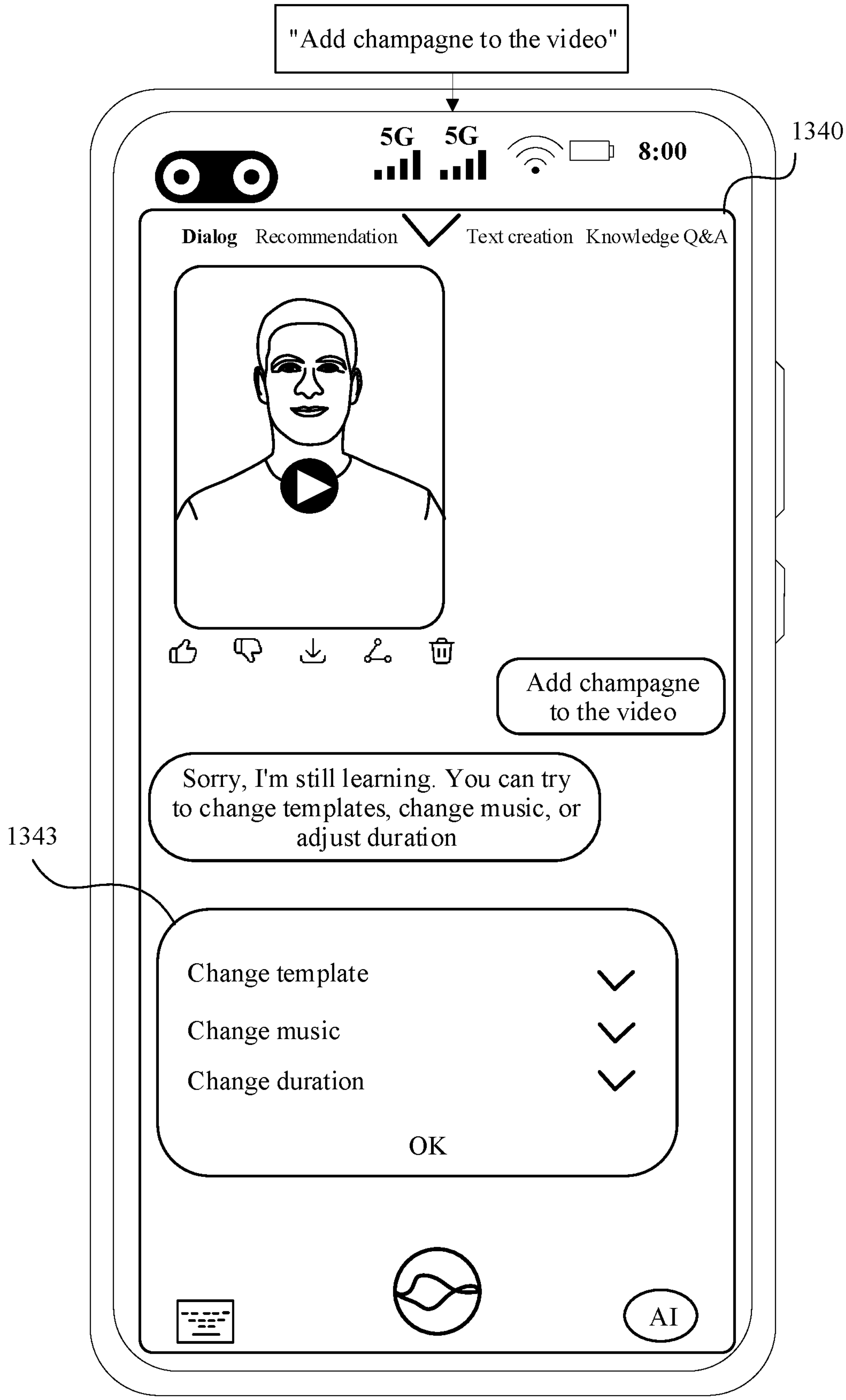
"Add champagne to the video"
1340
5G 5G
8:00
Dialog
Recommendation
Text creation
Knowledge Q&A
Add champagne to the video
Sorry, I'm still learning. You can try to change templates, change music, or adjust duration
1343
Change template
Change music
Change duration
OK
AI

FIG. 13E

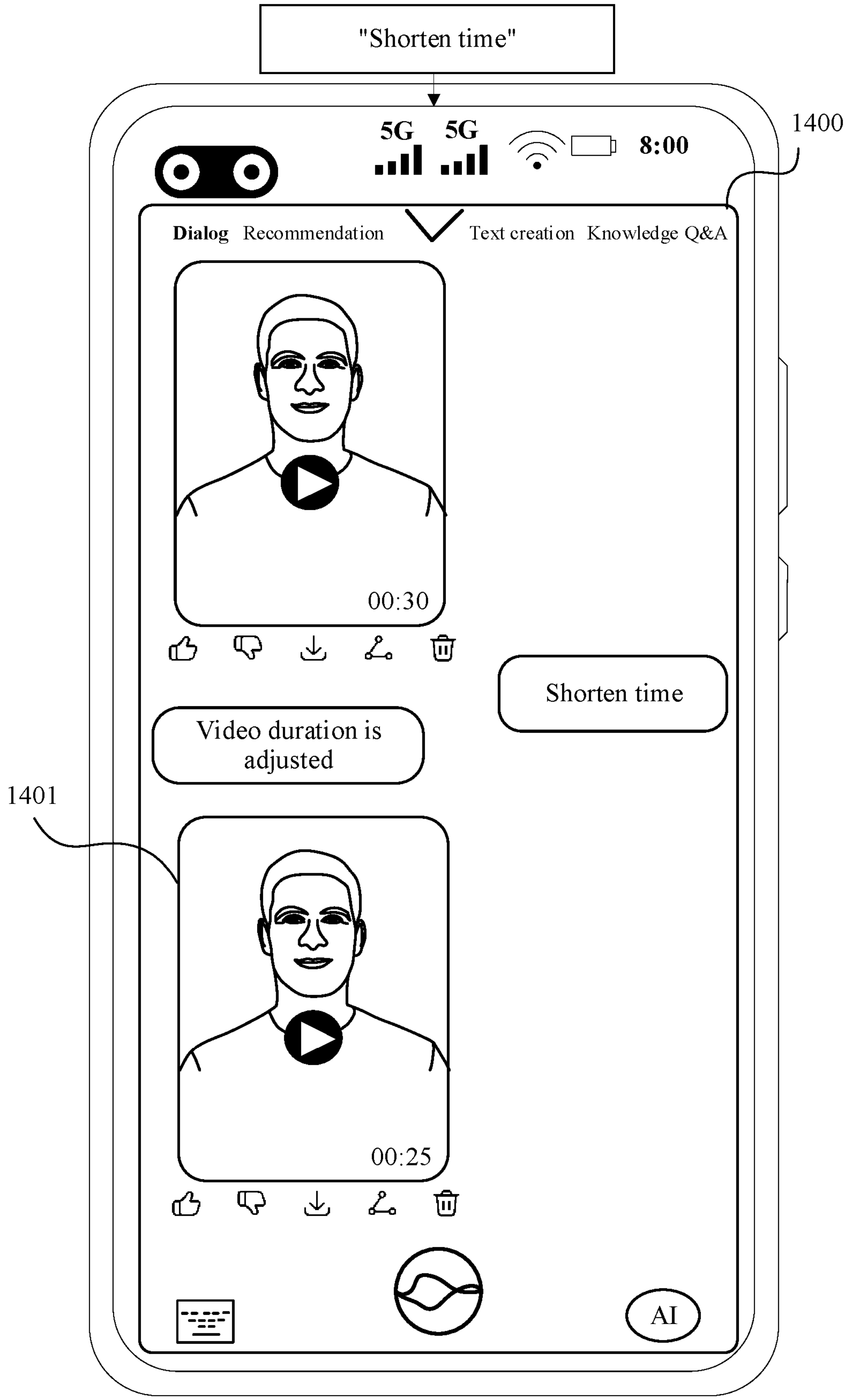
"Shorten time"
1400
5G
5G
8:00
Dialog
Recommendation
Text creation
Knowledge Q&A
00:30
Shorten time
Video duration is adjusted
1401
00:25
AI

FIG. 14A

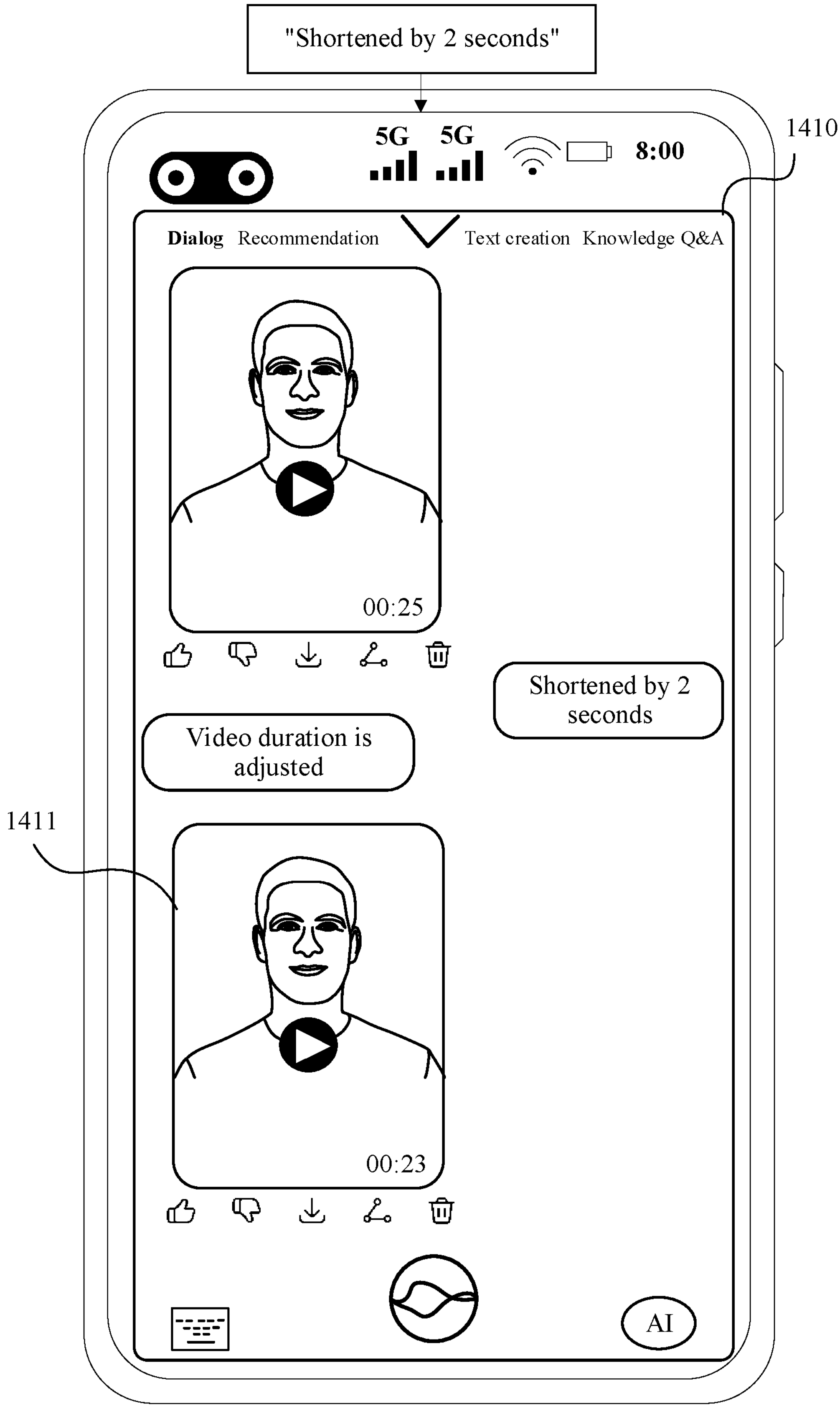
"Shortened by 2 seconds"
1410
5G
5G
8:00
Dialog
Recommendation
Text creation
Knowledge Q&A
00:25
Shortened by 2 seconds
Video duration is adjusted
1411
00:23
AI

FIG. 14B

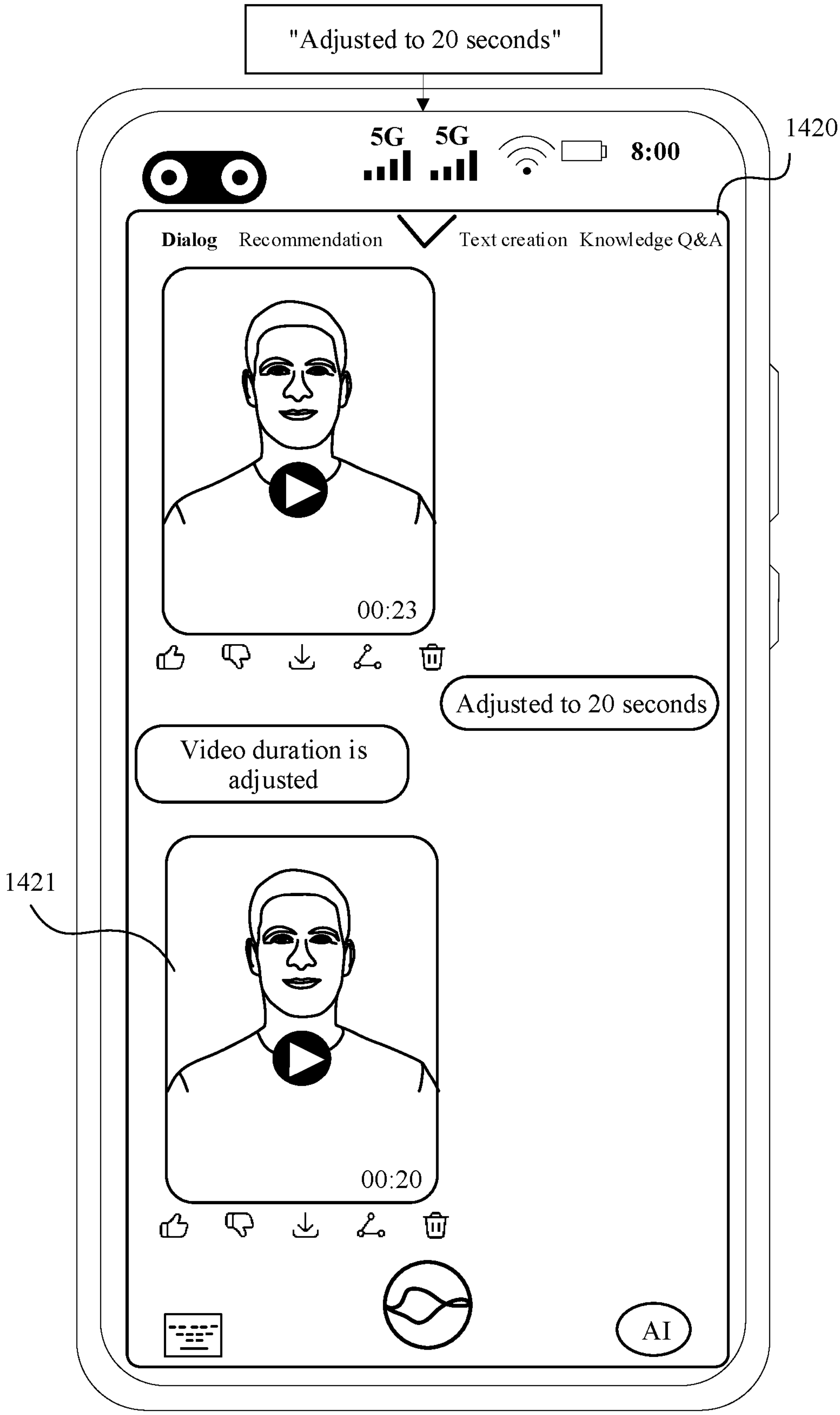
"Adjusted to 20 seconds"
1420
5G 5G
8:00
Dialog
Recommendation
Text creation
Knowledge Q&A
00:23
Adjusted to 20 seconds
Video duration is adjusted
1421
00:20
AI

FIG. 14C

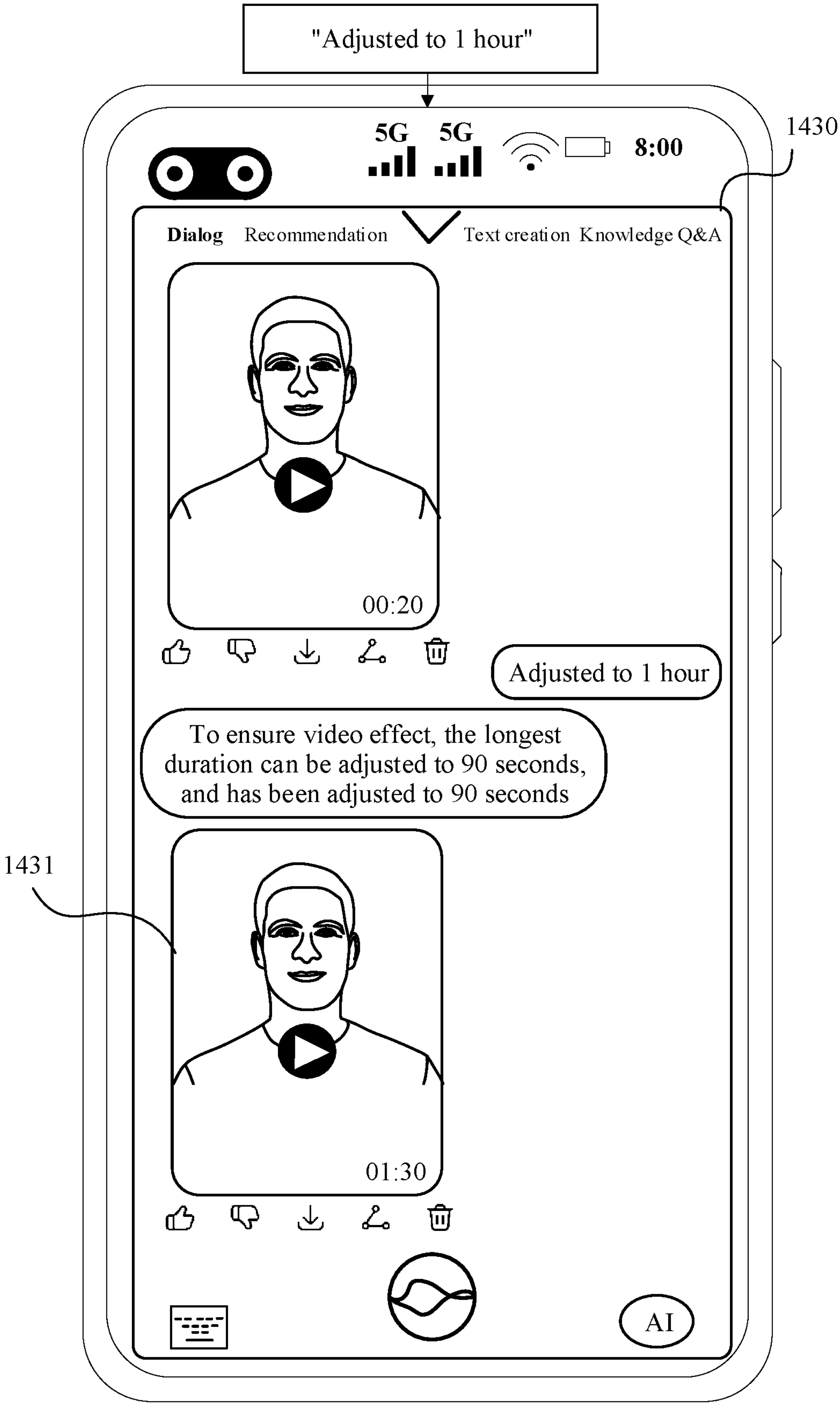
"Adjusted to 1 hour"
1430
5G 5G
8:00
Dialog Recommendation Text creation Knowledge Q&A
00:20
Adjusted to 1 hour
To ensure video effect, the longest duration can be adjusted to 90 seconds, and has been adjusted to 90 seconds
1431
01:30
AI

FIG. 14D

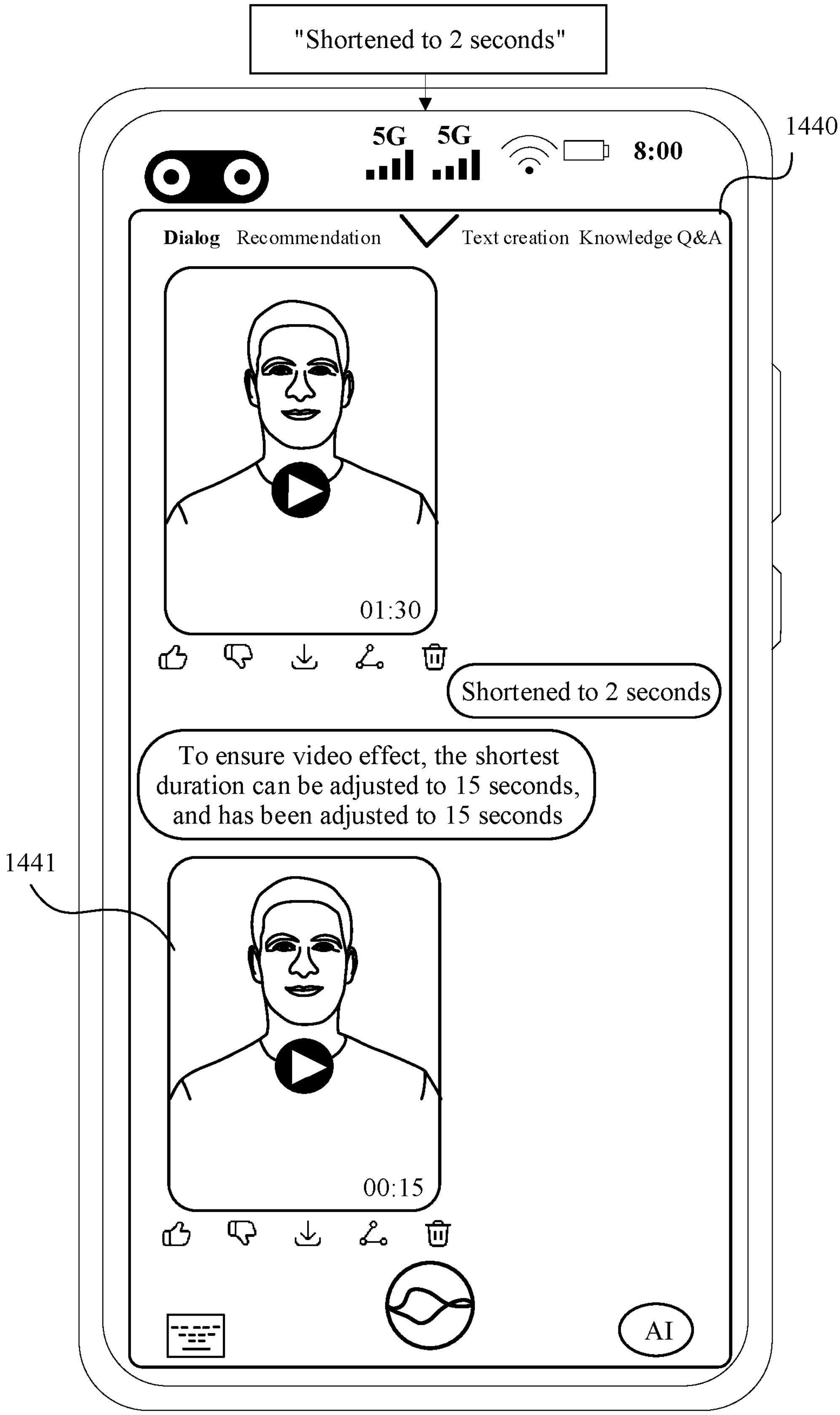
"Shortened to 2 seconds"
1440
5G 5G
8:00
Dialog Recommendation Text creation Knowledge Q&A
01:30
Shortened to 2 seconds
To ensure video effect, the shortest duration can be adjusted to 15 seconds, and has been adjusted to 15 seconds
1441
00:15
AI

FIG. 14E

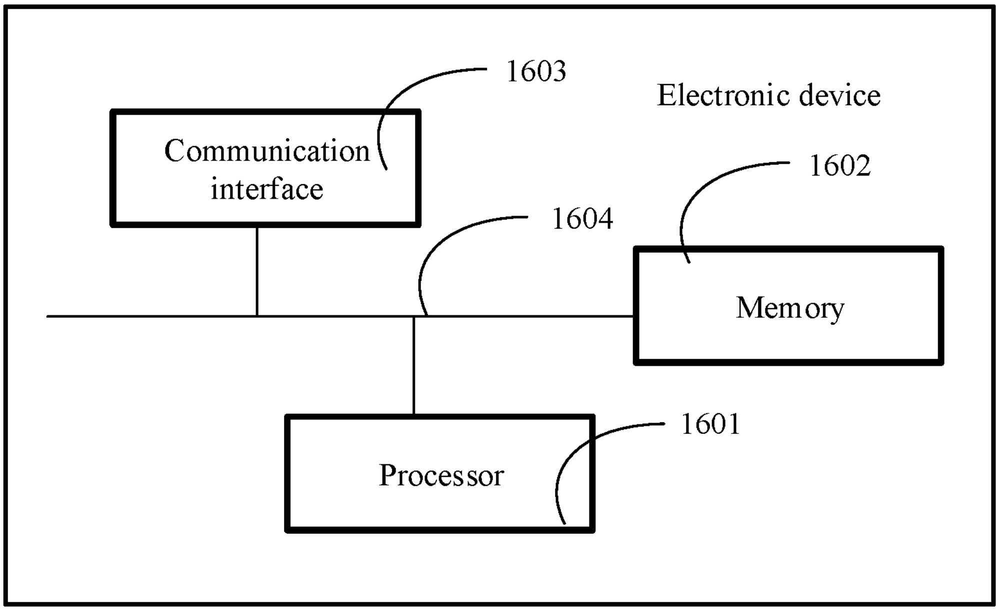
1603
Electronic device
Communication interface
1602
1604
Memory
Processor
1601

FIG. 15

**INTERNATIONAL SEARCH REPORT**

International application No. **PCT/CN2024/111568**

**A. CLASSIFICATION OF SUBJECT MATTER**

H04N21/472(2011.01)i; H04N21/81(2011.01)i; H04N21/44(2011.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, ENTXTC, ENTXT, DWPI: 视频, 媒体, 编辑, 剪辑, 创建, 创作, 生成, 素材, 材料, 内容, 声音, 语音, 声控, 聊天, 识别, 问答, 聊天, SIRI, 增加, 减少, 删除, 更换, 替换, video, media, edit+, creat+, generat+, content, clip, voice, audio, speech, assistant, recogn+, increas+, delet+, replac+

**C. DOCUMENTS CONSIDERED TO BE RELEVANT**

| Category* | Citation of document, with indication, where appropriate, of the relevant passages | Relevant to claim No. |
|---|---|---|
| Y | US 2017019362 A1 (MOTOROLA MOBILITY LLC) 19 January 2017 (2017-01-19)<br>description, paragraphs 0008-0051 | 1-13 |
| Y | CN 115580758 A (PING AN LIFE INSURANCE COMPANY OF CHINA, LTD.) 06 January 2023 (2023-01-06)<br>description, paragraphs 0099-0137 | 1-13 |
| Y | CN 113518160 A (TENCENT TECHNOLOGY (SHENZHEN) CO., LTD.) 19 October 2021 (2021-10-19)<br>description, paragraphs 0147-0149 | 9-10 |
| A | CN 116226500 A (BEIJING ZITIAO NETWORK TECHNOLOGY CO., LTD.) 06 June 2023 (2023-06-06)<br>entire document | 1-13 |
| A | CN 114817631 A (BEIJING ZITIAO NETWORK TECHNOLOGY CO., LTD.) 29 July 2022 (2022-07-29)<br>entire document | 1-13 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 October 2024** | **28 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**

International application No.
**PCT/CN2024/111568**

**C. DOCUMENTS CONSIDERED TO BE RELEVANT**

| Category* | Citation of document, with indication, where appropriate, of the relevant passages | Relevant to claim No. |
|---|---|---|
| A | US 2019197053 A1 (APPLE INC.) 27 June 2019 (2019-06-27)<br>entire document | 1-13 |

Form PCT/ISA/210 (second sheet) (July 2022)

**INTERNATIONAL SEARCH REPORT**
**Information on patent family members**

International application No.
**PCT/CN2024/111568**

| Patent document cited in search report | Publication date (day/month/year) | Patent family member(s) | Publication date (day/month/year) |
|---|---|---|---|
| US 2017019362 A1 | 19 January 2017 | None | |
| CN 115580758 A | 06 January 2023 | None | |
| CN 113518160 A | 19 October 2021 | HK 40054008 A0 | 18 February 2022 |
| CN 116226500 A | 06 June 2023 | None | |
| CN 114817631 A | 29 July 2022 | WO 2023207543 A1 | 02 November 2023 |
| | | IN 202427048752 A | 02 August 2024 |
| US 2019197053 A1 | 27 June 2019 | JP 2019528492 A | 10 October 2019 |
| | | EP 4280078 A2 | 22 November 2023 |
| | | US 2023259550 A1 | 17 August 2023 |
| | | WO 2018212885 A1 | 22 November 2018 |
| | | EP 3929771 A1 | 29 December 2021 |
| | | US 2021165826 A1 | 03 June 2021 |
| | | KR 20190025745 A | 11 March 2019 |
| | | EP 3427166 A1 | 16 January 2019 |
| | | AU 2018220034 A1 | 06 December 2018 |
| | | US 2018336275 A1 | 22 November 2018 |
| | | US 2018336894 A1 | 22 November 2018 |
| | | KR 20180135884 A | 21 December 2018 |
| | | US 2024303268 A1 | 12 September 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311418278
- CN 202311867611